(19) **Europäisches Patentamt / European Patent Office / Office européen des brevets**

(11) **EP 4 637 173 A1**

(12) **EUROPEAN PATENT APPLICATION**
published in accordance with Art. 153(4) EPC

(43) Date of publication:
**22.10.2025 Bulletin 2025/43**

(21) Application number: 23902748.5

(22) Date of filing: **13.12.2023**

(51) International Patent Classification (IPC):
**H04N 25/47** (2023.01)    **H04N 25/57** (2023.01)

(52) Cooperative Patent Classification (CPC):
**H04N 25/47; H04N 25/57**

(86) International application number:
**PCT/CN2023/138442**

(87) International publication number:
**WO 2024/125552 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 15.12.2022  CN 202211615475
28.12.2022  CN 202211705341
27.06.2023  CN 202310769950
17.07.2023  CN 202310879201
17.07.2023  CN 202310876921
09.08.2023  CN 202311000131

(71) Applicant: **Spike Vision (Beijing) Technology Co.,
LTD.
Beijing 100084 (CN)**

(72) Inventors:
• **HUANG, Tiejun
Beijing 100084 (CN)**
• **HAN, Runze
Beijing 100084 (CN)**
• **LIU, Liqiao
Beijing 100084 (CN)**

(74) Representative: **Ostertag & Partner Patentanwälte
mbB
Azenbergstraße 35
70174 Stuttgart (DE)**

(54) **OPTICAL SIGNAL ENCODING METHOD, DECODING METHOD, AND PIXEL CIRCUIT**

(57)    An encoding method for a light signal, a decoding method, and a pixel circuit are provided. The encoding method for a light signal includes: detecting whether there is a change in a light intensity signal representing a light intensity, the light intensity signal being converted by a photosensitive unit from a received photon stream; encoding, in response to detecting a change in the light intensity signal, the changed light intensity signal to obtain an encoding result; and arranging the encoding result into an encoded sequence according to a time sequence relationship corresponding to changes in the light intensity, the encoded sequence representing time sequence code of the photon stream, and the time sequence relationship representing an order of the changes in the light intensity within a time period.

<u>200</u>

210

220

230

FIG. 2

EP 4 637 173 A1

## Description

### CROSS-REFERENCE TO RELATED APPLICATION

This application claims priorities to Chinese Patent Application No. 202211615475.2 filed on December 15, 2022, to Chinese Patent Application No. 202211705341.X filed on December 28, 2022, to Chinese Patent Application No. 202310769950.X filed on June 27, 2023, to Chinese Patent Application No. 202310879201.2 filed on July 17, 2023, to Chinese Patent Application No. 202310876921.3 filed on July 17, 2023, and to Chinese Patent Application No. 202311000131.5 filed on August 9, 2023, the contents of which are incorporated herein by references in their entireties or in part.

### TECHNICAL FIELD

The present disclosure relates to the field of information processing technologies, and in particular, to an encoding method for a light signal, a decoding method, and a pixel circuit.

### BACKGROUND

A pulse sequence type image sensor, as a neuromorphic vision sensor, has a characteristic of high frame frequency, can meet requirements of high-speed imaging, can implement capture and recording of high-speed moving targets, and therefore, has great application value in machine vision, dynamic scene capture, etc. However, due to high-precision expression and continuous recording of a pulse sequence for a high-speed light process, a large amount of data is required, which puts a lot of pressure on a transmission bandwidth and transmission real-time performance.

For recording of a dynamic light process, a sampling method of quantitative accumulation or timing accumulation may be used. Regardless of the sampling method of quantitative accumulation or timing accumulation, as requirements for the accuracy of a collected signal are improved, an amount of data obtained by sampling will increase, putting a burden on a subsequent encoding, transmission, or decoding process.

### SUMMARY

It will be advantageous to provide a mechanism to alleviate, mitigate or even eliminate one or more of the above-mentioned problems.

According to an aspect of the present disclosure, there is provided an encoding method for a light signal, the encoding method including: detecting whether there is a change in a light intensity signal representing a light intensity, the light intensity signal being converted by a photosensitive unit from a received photon stream; encoding, in response to detecting a change in the light intensity signal, the changed light intensity signal to obtain an encoding result; and arranging the encoding result into an encoded sequence according to a time sequence relationship corresponding to changes in the light intensity, the encoded sequence representing time sequence code of the photon stream, and the time sequence relationship representing an order of the changes in the light intensity within a time period.

According to another aspect of the present disclosure, there is provided a decoding method, including: obtaining an encoded sequence array for photon streams in a spatial region, where the encoded sequence array is formed based on a position arrangement of a plurality of photosensitive units and encoded sequences corresponding to the plurality of photosensitive units, the encoded sequence includes an encoding result obtained by encoding, in response to detecting a change in a light intensity signal, the changed light intensity signal, and time sequence code formed by arranging the encoding result according to a time sequence relationship corresponding to changes in a light intensity; and decoding the encoded sequence array to obtain a decoding result for the spatial region, the decoding result including a light intensity signal representing a light intensity that is converted from a received photon stream.

According to another aspect of the present disclosure, there is provided a pixel circuit for a pulse sequence type image sensor, the pixel circuit including: a light pulse generation circuit configured to convert a light signal into a light intensity signal, the light intensity signal including a pulse signal; a pulse width time integration circuit connected to the light pulse generation circuit and configured to convert a pulse time interval between two consecutive pulse signals into a corresponding first voltage signal; a voltage caching circuit connected to the pulse width time integration circuit and configured to cache, based on the first voltage signal outputted by the pulse width time integration circuit, a second voltage signal that satisfies a caching condition; and a cache voltage output circuit connected to the voltage caching circuit and configured to output the second voltage signal.

According to another aspect of the present disclosure, there is provided an encoding apparatus for a light signal, the encoding apparatus including: a detection module configured to detect whether there is a change in a light intensity signal representing a light intensity, the light intensity signal being converted by a photosensitive unit from a received photon stream; an encoding module configured to encode, in response to detecting a change in the light intensity signal, the changed light intensity signal to obtain an encoding result; and a sorting module configured to arrange the encoding result into an encoded sequence according to a time sequence relationship corresponding to changes in the light intensity, the encoded sequence representing time sequence code of the photon stream, and the time sequence relationship representing an order of the changes in the light intensity within a time period.

According to another aspect of the present disclosure, there is provided a decoding apparatus, including: an obtaining module configured to obtain an encoded sequence array for photon streams in a spatial region, where the encoded sequence array is formed based on a position arrangement of a plurality of photosensitive units and encoded sequences corresponding to the plurality of photosensitive units, the encoded sequence includes an encoding result obtained by encoding, in response to detecting a change in a light intensity signal, the changed light intensity signal, and time sequence code formed by arranging the encoding result according to a time sequence relationship corresponding to changes in a light intensity; and a decoding module configured to decode the encoded sequence array to obtain a decoding result for the spatial region, the decoding result including a light intensity signal representing a light intensity that is converted from a received photon stream.

According to another aspect of the present disclosure, there is provided an electronic device, including: one or more processors; and one or more memories configured to store instructions, the instructions, when executed individually or collectively by one or more processors, causing the electronic device to perform the encoding method in the above embodiment or the decoding method in the above embodiment.

According to another aspect of the present disclosure, there is provided a computer-readable storage medium storing instructions, the instructions, when executed individually or collectively by one or more processors of an electronic device, causing the electronic device to perform the encoding method in the above embodiment or the decoding method in the above embodiment.

According to still another aspect of the present disclosure, there is provided a computer program product including instructions, the instructions, when executed individually or collectively by one or more processors of an electronic device, causing the electronic device to perform the encoding method in the above embodiment or the decoding method in the above embodiment.

These and other aspects of the present disclosure will be clear from the embodiments described below, and will be clarified with reference to the embodiments described below.

**BRIEF DESCRIPTION OF THE DRAWINGS**

More details, features, and advantages of the present disclosure are disclosed in the following description of example embodiments in conjunction with the drawings, in which:

FIG. 1 is a schematic diagram showing a system architecture of an encoding system according to an example embodiment of the present disclosure;
FIG. 2 is a schematic flowchart showing an encoding method for a light signal according to an example embodiment of the present disclosure;
FIG. 3A is a schematic diagram showing a photocurrent according to an example embodiment of the present disclosure;
FIG. 3B is a schematic diagram showing a pulse sequence expression according to an example embodiment of the present disclosure;
FIG. 3C is a schematic diagram showing a photocurrent estimated using a pulse sequence according to an example embodiment of the present disclosure;
FIG. 3D is a schematic diagram showing an encoding result according to an example embodiment of the present disclosure;
FIG. 4 is a schematic flowchart showing an encoding method for a light signal according to an example embodiment of the present disclosure;
FIG. 5 is a schematic flowchart showing an encoding method for a light signal according to an example embodiment of the present disclosure;
FIG. 6 is a schematic flowchart showing an encoding method for a light signal according to an example embodiment of the present disclosure;
FIG. 7 is a schematic diagram showing related information of a pulse signal according to an example embodiment of the present disclosure;
FIG. 8 is a schematic diagram showing related information of a pulse signal according to an example embodiment of the present disclosure;
FIG. 9 is a schematic diagram showing related information of a pulse signal according to an example embodiment of the present disclosure;
FIG. 10 is a schematic diagram showing related information of a pulse signal according to an example embodiment of the present disclosure;
FIG. 11 is a schematic flowchart showing an encoding method for a light signal according to an example embodiment of the present disclosure;
FIG. 12 is a schematic flowchart showing a compression encoding method for a pulse signal according to an example embodiment of the present disclosure;
FIG. 13 is a schematic diagram showing a structure of a compression encoding circuit for a pulse signal according to an example embodiment of the present disclosure;
FIG. 14A is a schematic diagram showing a structure of a counter in a compression encoding circuit for a pulse signal according to an example embodiment of the present disclosure;
FIG. 14B is a schematic diagram showing a circuit structure of a frequency divider in a counter according to an example embodiment of the present disclosure;
FIG. 15 is a schematic diagram showing a structure of a counter control circuit in a compression encoding circuit for a pulse signal according to an example embodiment of the present disclosure;

FIG. 16 is a schematic flowchart showing a decoding method according to an example embodiment of the present disclosure;

FIG. 17 is a schematic diagram showing a structure of a pixel circuit for a pulse sequence type image sensor according to an example embodiment of the present disclosure;

FIG. 18 is a schematic diagram showing a structure of a pixel circuit for a pulse sequence type image sensor according to an example embodiment of the present disclosure;

FIG. 19 is a schematic diagram showing a structure of a pulse width time integration circuit according to an example embodiment of the present disclosure;

FIG. 20 is a schematic diagram showing a structure of a voltage caching circuit according to an example embodiment of the present disclosure;

FIG. 21 is a schematic diagram showing a structure of a pixel circuit for a pulse sequence type image sensor according to an example embodiment of the present disclosure;

FIG. 22 is a schematic diagram showing a structure of a pixel circuit for a pulse sequence type image sensor according to an example embodiment of the present disclosure;

FIG. 23 is a schematic diagram showing a time sequence relationship of voltages at key nodes according to an example embodiment of the present disclosure;

FIG. 24 is a schematic diagram showing a structure of a pixel circuit for a pulse sequence type image sensor according to an example embodiment of the present disclosure;

FIG. 25 is a schematic diagram showing a structure of a pixel circuit for a pulse sequence type image sensor according to an example embodiment of the present disclosure;

FIG. 26 is a schematic diagram showing a time sequence relationship of voltages at key nodes according to an example embodiment of the present disclosure;

FIG. 27 is a schematic diagram showing a simulation result of a pixel circuit according to an example embodiment of the present disclosure;

FIG. 28A is a schematic diagram showing a circuit structure of an AND logic to which a voltage caching circuit is applied, according to an example embodiment of the present disclosure;

FIG. 28B is a schematic diagram showing a circuit structure of an OR logic to which a voltage caching circuit is applied, according to an example embodiment of the present disclosure;

FIG. 29A is a schematic diagram showing a circuit structure of a NAND logic to which a voltage caching circuit is applied, according to an example embodiment of the present disclosure;

FIG. 29B is a schematic diagram showing a circuit structure of a NOR logic to which a voltage caching circuit is applied, according to an example embodiment of the present disclosure;

FIG. 30A is a schematic diagram showing a circuit structure of an XNOR logic to which a voltage caching circuit is applied, according to an example embodiment of the present disclosure;

FIG. 30B is a schematic diagram showing a circuit structure of an XOR logic to which a voltage caching circuit is applied, according to an example embodiment of the present disclosure;

FIG. 31 is a schematic diagram showing a structure of a pulse sequence type image sensor according to an example embodiment of the present disclosure;

FIG. 32 is a schematic diagram showing a structure of an electronic device according to an example embodiment of the present disclosure;

FIG. 33 is a schematic diagram showing a structure of a pulse camera according to an example embodiment of the present disclosure;

FIG. 34 is a schematic diagram showing a structure of an encoding apparatus for a light signal according to an example embodiment of the present disclosure;

FIG. 35 is a schematic diagram showing a structure of a decoding apparatus according to an example embodiment of the present disclosure;

FIG. 36 is a schematic diagram showing a structure of an encoded data generation circuit according to an example embodiment of the present disclosure;

FIG. 37 is a schematic diagram showing a structure of an encoded data generation circuit according to an example embodiment of the present disclosure; and

FIG. 38 is a block diagram showing an electronic device configured to perform an encoding method for a light signal or a decoding method according to an example embodiment of the present disclosure.

## DETAILED DESCRIPTION OF EMBODIMENTS

Various example embodiments of the present disclosure will now be described in detail with reference to the accompanying drawings. It should be noted that unless otherwise specifically stated, relative arrangements of the components and steps, numerical expressions, and values described in these embodiments constitute no limitation on the scope of the present disclosure.

Those skilled in the art may understand that the terms "first" and "second" in the embodiments of the present disclosure are only used to distinguish between different steps, devices, or modules, etc., and represent neither any specific technical meaning nor a definite logic sequence therebetween.

It is also understood that in the embodiments of the present disclosure, "a plurality" may mean two or more, and "at least one" may mean one, and two or more.

It should be further understood that any component, data, or structure mentioned in the embodiments of the present disclosure may be generally understood as one or more if it is not explicitly defined or given the opposite enlightenment in the context.

In addition, the term "and/or", as used in the present disclosure, is merely an association for describing associated objects, indicating that three relationships may exist, for example, A and/or B, which may indicate that: only A exists, both A and B exist, and only B exists. In addition, the character "/" in the present disclosure generally indicates an "or" relationship between the associated objects.

It should be further understood that the description of the embodiments in the present disclosure emphasizes the differences between the embodiments, and for the same or similar parts, reference can be made to each other. For brevity, details are not repeatedly described herein.

In addition, it should be understood that, for ease of description, the dimensions of the various parts shown in the accompanying drawings are not drawn according to the actual proportional relationship.

The following description of at least one example embodiment is merely illustrative in nature and is in no way intended to limit the present disclosure and application or use thereof.

Technologies, methods and devices known to those of ordinary skill in the related art may not be discussed in detail, but should be considered as part of the specification where appropriate.

It should be noted that similar reference signs and letters refer to similar items in the following drawings. Therefore, once a specific item is defined in one of the drawings, it need not be further discussed in subsequent drawings.

The embodiments of the present disclosure may be applied to electronic devices such as chips, integrated circuits, image sensors, cameras (for example, pulse cameras), terminal devices, computer systems, and servers, which may operate with numerous other general-purpose or special-purpose computing system environments or configurations. Examples of well-known terminal devices, computing systems, environments, and/or configurations suitable for use with electronic devices such as chips, integrated circuits, image sensors, cameras, terminal devices, computer systems, and servers include, but are not limited to: a personal computer system, a server computer system, a thin client, a thick client, a handheld or laptop device, a microprocessor-based system, a set top box, a programmable consumer electronics, a networked personal computer, a small computer system, a large computer system, and a distributed cloud computing technology environment including any of the above systems, etc.

The electronic devices such as chips, integrated circuits, image sensors, cameras, terminal devices, computer systems, and servers may be described in the general context of computer system executable instructions (such as a program module) executed by the computer system. Generally, a program module may include a routine, a program, a target program, a component, logic, a data structure, etc., which perform specific tasks or implement specific abstract data types. A computer system/server may be implemented in a distributed cloud computing environment where tasks are performed by remote processing devices that are linked through a communication network. In the distributed cloud computing environment, the program module may be located on a local or remote computing system storage medium including a storage device.

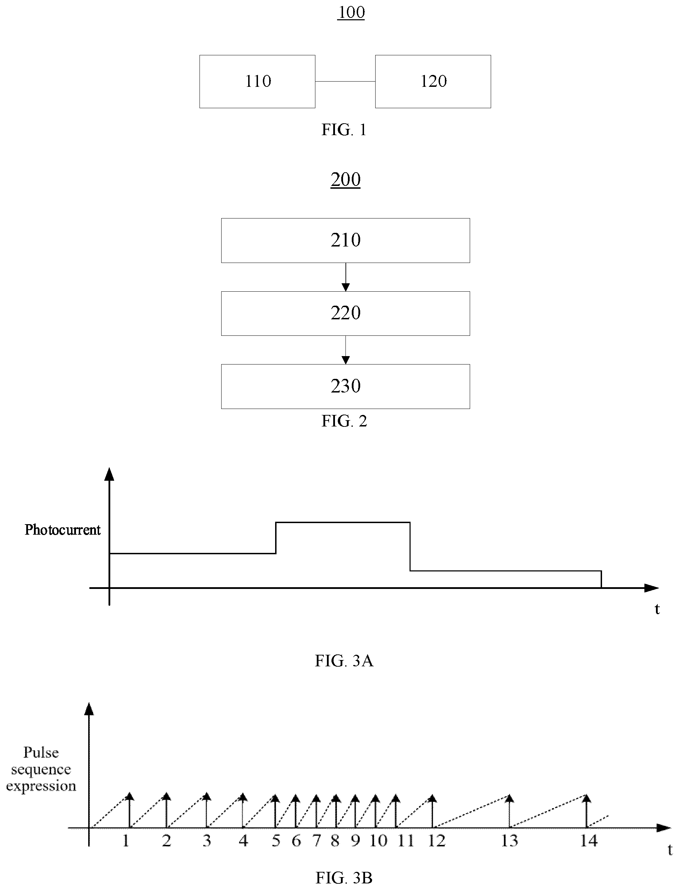

FIG. 1 is a schematic diagram of a system architecture of an encoding system 100 according to an example embodiment of the present application, and it shows an application scenario where a light intensity signal is encoded. As shown in FIG. 1, the encoding system 100 includes a collection apparatus 110 and an encoding apparatus 120 for a light signal. The collection apparatus 110 may be a photoelectric sensor having a photosensitive unit array, which is configured to collect a photon stream in a spatial region to obtain a light intensity signal, and the light intensity signal may be a time sequence signal. The encoding apparatus 120 for a light signal is configured to encode the light intensity signal to obtain an encoding result.

In some embodiments, the encoding apparatus 120 for a light signal may be connected to one collection apparatus or a plurality of collection apparatuses. When the encoding apparatus 120 for a light signal is connected to a plurality of collection apparatuses, the plurality of collection apparatuses may respectively collect photon streams in different spatial regions to obtain light intensity signals corresponding to the different spatial regions. The encoding apparatus 120 for a light signal may encode the light intensity signals corresponding to the different spatial regions, so as to obtain encoding results.

Here, the collection apparatus 110 and the encoding apparatus 120 for a light signal may be one device (for example, a camera) integrating a collection function and an encoding function, or may be two independent devices. If they are two devices, they are connected to each other through a data line or a wireless network. For example, the collection apparatus 110 may be disposed on a video camera, and the encoding apparatus 120 for a light signal may be disposed on a computing device (such as a mobile phone, a computer, a server, or the like) connected to the video camera.

It should be noted that the above application scenario is only shown for ease of understanding the spirit and principles of the present application, and the embodiments of the present application are not limited thereto. Conversely, the embodiments of the present application may be applied to any potentially applicable scenarios.

FIG. 2 is a schematic flowchart of an encoding method 200 for a light signal according to an example embodiment of the present application. The method in FIG. 2 may be performed by a computing device. The computing device may be a video camera, a mobile phone, a computer, a server, or another electronic device. As shown in FIG. 2, the encoding method for a light signal includes the following content.

210: Detect whether there is a change in a light intensity signal representing a light intensity, the light intensity signal being converted by a photosensitive unit from a received photon stream.

**In** an example, the photon stream may be received by the photosensitive unit. Each photosensitive unit may correspond to a local spatial region and is configured to collect photons in the local spatial region. A plurality of photosensitive units are arranged into a photosensitive unit array. The photosensitive unit array covers an entire spatial region of an observation scene to implement photon collection for the entire spatial region. Each photosensitive unit in the photosensitive unit array implements photon collection for a local spatial region in the entire spatial region, and the local spatial regions corresponding to the different photosensitive units in the photosensitive unit array do not overlap.

In an example, the light intensity signal may be a digital signal or an analog signal that can represent a physical quantity of a photocurrent, for example, the light intensity signal may be represented by, for example, a pulse signal, a level signal, a finite-bit numerical value, or the like. The light intensity signal carries light intensity information, and the light intensity information may represent a light intensity (an illumination intensity) at a corresponding moment.

The light intensity signal may reflect a change process of the light intensity to some extent, and whether there is a change in the light intensity can be determined based on a change in the light intensity signal.

Within a specific period of time, the light intensity may remain unchanged, slowly change, suddenly change, or continuously change. Therefore, the light intensity signal may also remain unchanged, slowly change, suddenly change, or continuously change, accordingly. For example, within a first time period, the light intensity remains stable, there is a change in the light intensity at a moment t, and then the light intensity remains stable within a second time period after the change at the moment t, where the moment t may be a connection point between the first and second time periods, that is, the moment t may be considered as a time point when the change occurs in the light intensity.

In an implementation of the present application, a current light intensity signal may be compared with a specified light intensity signal to determine whether there is a change between respective pieces of feature information of the two, or whether a difference between the two pieces of feature information exceeds a deviation range. If there is a change between the two pieces of feature information of the two, or the difference between the two pieces of feature information exceeds the deviation range, it can be determined that there is a change in the light intensity signal. If there is no change between the two pieces of feature information of the two, or the difference between the two pieces of feature information does not exceed the deviation range, it can be determined that there is no change in the light intensity signal. The specified light intensity signal may be a previous light intensity signal that has changed. The feature information may represent a light intensity corresponding to the light intensity signal, that is, the feature information may have a specific correspondence with the light intensity information, for example, the feature information is directly proportional to the light intensity information.

220: Encode, in response to detecting a change in the light intensity signal, the changed light intensity signal to obtain an encoding result.

When it is determined, based on a time sequence, that there is a change in the light intensity signal, encoding may be performed based on feature information of the light intensity signal that has changed. When it is determined that there is no change in the light intensity signal, there is no need to encode and output the light intensity signal that has not changed.

230: Arrange the encoding result into an encoded sequence according to a time sequence relationship corresponding to changes in the light intensity, the encoded sequence representing time sequence code of the photon stream, and the time sequence relationship representing an order of the changes in the light intensity within a time period.

For a local spatial region, a changed light intensity signal is encoded according to the time sequence, so that an encoded sequence corresponding to the local spatial region can be obtained.

This embodiment of the present application provides the encoding method for a light signal. In this method, determination is performed on the light intensity signal, and when there is a change in the light intensity signal, the changed light intensity signal is encoded, and the encoding result may reflect the light intensity and the change situations of the light intensity in the corresponding spatial region within the time period. **In** this way, data to be encoded can be reduced, there is no need to encode each light intensity signal within this time period, and only the light intensity signal that has changed is encoded and outputted. No encoding and outputting means that there is no change in the light intensity signal, so that an encoding process can be simplified, and a code rate can be reduced while retaining complete light intensity information corresponding to the light intensity signal, thereby achieving efficient lossless compression encoding of the light intensity signal.

According to some embodiments of the present application, the encoding method for a light signal further includes: forming, based on time sequence code of light intensity signals corresponding to a plurality of photosensitive units and a position arrangement of the plurality of photosensitive units, an encoded sequence array for photon streams in a spatial region that are received by the plurality of photosensitive units.

In an example, the photosensitive unit may be a photoelectric sensor, or another component that may be configured to collect a photon stream.

Since the plurality of photosensitive units can be arranged into the photosensitive unit array according to a specific position relationship, the encoded sequence array for the photon streams in the entire spatial region can be formed based on the position arrangement of the plurality of photosensitive units and the encoded sequences for the local spatial regions corresponding to the plurality of photosensitive units. For example, the plurality of encoded sequences corresponding to the plurality of photosensitive units are arranged according to the position arrangement of the plurality of photosensitive units, so as to obtain the encoded sequence array. It should be understood that, when there is only one photosensitive unit, the encoded sequence for the local spatial region corresponding to the photosensitive unit constitutes the encoded sequence array for the photon streams in the entire spatial region.

In some embodiments, collecting the photon streams in the plurality of local spatial regions by the plurality of photosensitive units may implement simultaneous collection of the photon streams in the plurality of local spatial regions in a larger spatial region within a specific time range. In addition, since collection processes of the all the photosensitive units may not affect each other, the accuracy of the light intensity signal corresponding to each local spatial region can be improved.

According to some embodiments of the present application, the encoding, in response to detecting a change in the light intensity signal, the changed light intensity signal to obtain an encoding result includes: performing encoding based on the changed light intensity signal and position information of the photosensitive unit, so as to obtain the encoding result, the position information representing an arrangement position of the photosensitive unit in the photosensitive unit array.

According to some embodiments of the present application, the arranging the encoding result into an encoded sequence according to a time sequence relationship corresponding to changes in the light intensity includes: forming the time sequence code of the photon stream based on encoded information, the time sequence relationship, and the position information, the encoded information including the encoding result corresponding to the light intensity signal within the time period.

The encoded sequence may include the encoded information and the time sequence relationship. The time sequence relationship may represent an order of a plurality of changes in the light intensity signal within a time period. The encoded information may include encoding results respectively corresponding to the plurality of changes in the light intensity signal. The plurality of encoded sequences corresponding to the plurality of photosensitive units are arranged according to the position arrangement of the plurality of photosensitive units, so as to obtain the encoded sequence array.

In an example, the encoded sequence may include the encoded information, the time sequence relationship, and the position information. The position information may represent an arrangement position of a current photosensitive unit in the plurality of photosensitive units. The plurality of encoded sequences corresponding to the plurality of photosensitive units are directly summarized or saved to obtain the encoded sequence array.

In some embodiments, the time sequence code for the photon stream is formed based on the encoded information, the time sequence relationship, and the position information, such that the time sequence code can include the position information. In this way, time sequence code corresponding to different photosensitive units can be easily distinguished.

According to some embodiments of the present application, one of consecutive light intensity signals is used as a current light intensity signal in turn, each light intensity signal may include interval duration information between the current light intensity signal and a previous light intensity signal, and the interval duration information may be used as feature information of the current light intensity signal. The feature information of the specified light intensity signal is a reference for determining whether there is a change in the current light intensity signal, for example, the specified light intensity signal may be a previous light intensity signal that has changed, and the feature information of the specified light intensity signal may be interval duration information of the previous light intensity signal that has changed. To determine whether there is a change in the light intensity signal, the interval duration information of the current light intensity signal may be compared with the interval duration information of the specified light intensity signal, so as to determine whether a difference between the two pieces of interval duration information exceeds a deviation range. If the difference between the interval duration information of the current light intensity signal and the interval duration information of the specified light intensity signal exceeds the deviation range, it can be determined that there is a change in the light intensity signal. If the difference between the interval duration information of the current light intensity signal and the interval duration information of the specified light intensity signal is within the deviation range, it can be determined that there is no change in the light intensity signal. In response to the change in the light intensity signal, encoding is performed based on a signal start moment and interval duration information of the changed light intensity signal. The encoded sequence for the photon stream in the local spatial region corresponding to the photosensitive unit is formed based on the encoded information obtained by the encoding and the time sequence relationship, and the encoded sequence array for the photon streams in the entire spatial region is formed based on the position arrangement of all the photosensitive units in the photosensitive unit array and the encoded sequences for the local spatial regions corresponding to all the photosensitive units.

According to some embodiments of the present application, the light intensity signal includes a pulse signal encoded by performing pulse modulation on the received photon stream.

Pulse modulation methods may include pulse width modulation, pulse amplitude modulation, or other modulation methods. The received photon stream can be converted into the pulse signal by using the pulse modulation method. This conversion process may also be considered as an encoding process.

Further, pulse modulation start moments of the plurality of photosensitive units may be different. Since each photosensitive unit may collect the photon stream in the corresponding local spatial region independently without interfering with each other, pulse modulation start moments corresponding to the photosensitive units may be different depending on different change processes of the photon streams in the local spatial regions.

In an example, the pulse modulation is pulse width modulation, the pulse width modulation includes quantitative modulation, and the quantitative modulation includes: converting the received photon stream into a photocurrent and accumulating the photocurrent; and generating a pulse signal in response to an accumulated value of the photocurrent reaching an accumulation threshold. After a pulse signal is obtained, the photocurrent is re-accumulated from zero to obtain a next pulse signal. This is repeated to obtain a pulse sequence. Whether there is a change in the light intensity can be determined based on a change process of pulse signals in the pulse sequence. Here, the encoding method for a light signal is described using an example where the light intensity signal is a pulse signal, and encoding methods for a light signal corresponding to other types of light intensity signals are similar thereto, and may all be performed with reference to the method as follows.

In this embodiment of the present application, the photosensitive unit may be used to continuously collect photons in the corresponding local spatial region, and accumulate an instantaneous light intensity value of the collected photons or an electrical signal (a photocurrent) converted from the instantaneous light intensity value, to obtain a signal accumulation amount (an accumulated value of the photocurrent). In response to the signal accumulation amount reaching the accumulation threshold, a pulse signal is obtained.

In some embodiments, the encoding method for a light signal further includes: after a signal accumulation amount is obtained when an accumulated value of the photocurrent reaches the accumulation threshold, setting the accumulated value of the photocurrent to zero to perform re-accumulation. For example, in response to the accumulated value of the photocurrent reaching the accumulation threshold, a pulse signal is generated, and the accumulated value of the photocurrent is set to zero to restart an accumulation process.

In an example, for a specific monitored local spatial region, a photosensitive unit may be used to sample photons in the local spatial region. A specific sampling method may be quantitative accumulation or timing accumulation. Quantitative accumulation is used as an example. The photosensitive unit may accumulate charges from a cleared state, and when a voltage difference reaches the accumulation threshold Q, it automatically resets, performs re-accumulation, and generates a pulse signal as a full accumulation mark. The pulse sequences generated by the photosensitive units (pixels) may form a pulse sequence array according to spatial arrangement of the pixels, and the pulse sequence array may be used as a digital expression of an incident light stream on an image plane. The pulse signal corresponding to each local spatial region is encoded to obtain an encoding result, and the encoding result records a change process of photons. The encoding result is decoded, so that the change process of the pulse signal in the local spatial region corresponding to each photosensitive unit within a specific period of time can be obtained, and an image sequence can be obtained based on the change process of the pulse signal of each pixel within a specific period of time.

The smaller the accumulation threshold Q of quantitative accumulation, the larger a number of pulses contained in a pulse sequence within a specific period of time, that is, the larger an amount of data collected, which will cause a burden on encoding, transmission, or decoding of the data. Therefore, in this embodiment of the present application, after the pulse signal is obtained, whether there is a change in the pulse signal can be determined, and only the changed pulse signal is encoded and outputted, so as to simplify the encoding process.

During an accumulation process of pulse signals, for a given photoelectric device, increasing the accumulation threshold Q may expand a dynamic range of imaging, but increasing the accumulation threshold Q means that the accuracy of approximating the photon stream is reduced, a maximum pulse width of pulses of the signal is increased, and the time sensitivity of imaging is reduced. In this case, if necessary, the accumulated value of the photocurrent may be quantified by low-bit sampling as a supplement to pulse estimation of the light intensity, improving the estimation accuracy of relative changes of the light intensity. Typically, if a minimum duration is set to (achievable by the circuit) to 10 ns and a maximum duration (a dark current is not enough to be accumulated to the threshold Q) is set to 1s, the dynamic range is 8 orders of magnitude, 160 dB, which can be achieved using the currently mature CMOS process.

Since illumination in a natural scene ranges from $10^{-4}$ lux (night) to $10^5$ lux (sunlight at Summer Solstice), spanning 9 orders of magnitude, and if the 9 orders of magnitude need to be covered at the same time, for example, observing the sun and faint starlight at the same time in outer space, an intensity of a dark current needs to be controlled, and the accumulation threshold Q needs to be set to more than 10 times the intensity of the dark current. In this way, when duration for pulse accumulation reaches an allowed imaging duration (preset output period), a voltage difference (the accumulated value of the photocurrent) for the signal accumulation amount that has not reached the accumulation threshold (not full trap) is measured and quantified, thereby increasing the dynamic range by more than 20 dB. Therefore, voltage difference information under weak light conditions may be outputted, such that a decoding result is subsequently obtained based on the received encoded sequence array and received voltage difference information within a corresponding period of time of the photosensitive unit, which avoids affecting an image reconstruction effect due to that the accumulation of pulse signals for a long period of time in a weak light intensity environment is not sufficient for output, and can improve the dynamic range.

The photosensitive unit is used to collect photons in the corresponding local spatial region, and accumulate an instantaneous light intensity value of the collected photons or the photocurrent converted from the instantaneous light intensity value, to obtain the accumulated value of the photocurrent, and when the accumulated value of the photocurrent reaches the accumulation threshold, the pulse signal is obtained, and the accumulated value of the photocurrent is set to zero for re-accumulation. However, in some cases, the light intensity may be relatively low, and it may take a long time for the accumulated value of the photocurrent to reach the accumulation threshold, such that there will be no light intensity signal output within a long period of time. When the photosensitive device fails, there will also be no light intensity signal output within a long period of time.

To this end, in an example, the pulse width modulation in the present application further includes timing modulation, and the timing modulation includes: in response to an output period being reached and the accumulated value of the photocurrent not reaching the accumulation threshold, outputting the accumulated value of the photocurrent, or quantifying the accumulated value of the photocurrent to obtain voltage difference information, and outputting the voltage difference information, such that a decoding result is obtained by decoding based on the encoded sequence array and the accumulated value of the photocurrent (the voltage difference information). After a current accumulated value of the photocurrent or the voltage difference information is outputted, the accumulated value of the photocurrent may be set to zero for re-accumulation. The quantification process may be amplifying or reducing the accumulated value of the photocurrent according to a specific ratio, and the quantification process may be performed by a photosensitive unit or a quantification apparatus. The accumulated value of the photocurrent or the voltage difference information may be encoded to obtain an encoding result corresponding to the accumulated value of the photocurrent or the voltage difference information. Within a time period corresponding to the voltage difference information, since the accumulation threshold has not been reached, no pulse signal is outputted, or in other words, an outputted pulse signal is 0 within the time period corresponding to the voltage difference information. Therefore, subsequent decoding may be performed based on the encoding result of the changed pulse signal in conjunction with the received accumulated value of the photocurrent (or the voltage difference information), and a change process of the light intensity during an entire collection process of the photosensitive unit may be obtained even when the light intensity is low.

In this embodiment of the present application, encoding the changed light intensity signal may include encoding the light intensity information of the changed light intensity signal. The light intensity information may include a pulse width of the pulse signal, the pulse width is interval duration between a current pulse signal and a previous pulse signal, and is also accumulation duration for accumulation of an instantaneous light intensity value of collected photons or an electrical signal converted from the instantaneous light intensity value, that is, a signal accumulation amount, to reach the accumulation threshold Q (that is, duration $\tau$ for accumulating photons to obtaining a pulse signal). Time is the easiest variable to measure accurately. The light intensity at any moment can be estimated as $Q/\tau$ based on the accumulation threshold Q and the accumulation duration. Theoretically, using a sequence of pulse signals to approximate the photocurrent can express light of any intensity: a value range of $\tau$ is $(0, \infty)$. The smaller $\tau$ is, the higher the intensity of the light is. Approximating 0 means that the light intensity is approaching infinity; and the larger $\tau$ is, the weaker the light is, and when $\tau$ approaches infinity, it means that the light intensity is close to 0. Therefore, theoretically, any high dynamic range can be achieved through continuous photography of pulse signals.

According to some embodiments of the present application, the detecting whether there is a change in a light intensity signal representing a light intensity includes: determining whether a difference between a pulse width of each pulse signal in the light intensity signal and a specified pulse width is within a deviation range; and in response to determining that the difference between the pulse width of any one pulse signal in the light intensity signal and the specified pulse width exceeds the deviation range, determining that there is a change in the light intensity signal.

Since the pulse width of the pulse signal is inversely proportional to the light intensity, that is, the reciprocal of the pulse width can represent the light intensity, the pulse width may be used as the light intensity information. The specified pulse width may be preset according to actual needs, for example, the specified pulse width may be a pulse width of a pulse signal corresponding to a previous change in the light intensity.

For example, each time a change in the pulse signal is detected, the pulse signal that has changed may be used as a specified pulse signal, and a pulse width of the specified pulse signal is used as the specified pulse width. The specified pulse width may be used as a comparison reference for determining whether there is a change in a subsequent pulse signal. In an implementation of the present application, for the current pulse signal, the specified pulse width may be a pulse width of a previous pulse signal that has changed. A pulse signal that has changed may indicate that a pulse width of the pulse signal has changed compared with a pulse width of a previous pulse signal.

In an example, one of consecutive pulse signals is used as a current pulse signal in turn to determine whether a difference between a pulse width of the current pulse signal and the specified pulse width is within a deviation range. If the difference between the pulse width of the current pulse signal and the specified pulse width is within the deviation range, it indicates that the pulse width of the current pulse signal is the same as or close to the specified pulse width, and it can be considered that there is no change in the pulse signal. If the difference between the pulse width of the current pulse signal and the specified pulse width exceeds the deviation range, it indicates that the pulse width of the current pulse signal differs greatly from the specified pulse width, and it can be considered that there is a change in the current pulse signal.

Further, the encoding method for a light signal further includes: in response to determining that the difference between the pulse width of the any one pulse signal in the light intensity signal and the specified pulse width exceeds the deviation range, updating the pulse width of the pulse signal to the specified pulse width.

In an example, a pulse width of a pulse signal whose comparison result exceeds the deviation range may be updated as a new specified pulse width, and the new specified pulse width continues to be used for comparison with a pulse width of a subsequent pulse signal. The deviation range may be estimated based on the accumulation threshold Q, which may be specifically set to 0. For example, it is considered that there is no change in the pulse signal only when the pulse width of the current pulse signal is the same as the specified pulse width. Alternatively, the deviation range may be set to a specific numerical value interval or an upper limit value. For example, if the difference between the pulse width of the current pulse signal and the specified pulse width is within the numerical value interval or not greater than the upper limit value, it can be considered that there is no change in the pulse signal.

According to some embodiments of the present application, a pulse sequence formed by M pulse signals is included between two consecutive pulse signals that have changed, a difference between pulse widths of the M pulse signals is within the deviation range, and a difference between a pulse width of any one pulse signal in a current pulse sequence and a pulse width of any one pulse signal in a previous pulse sequence exceeds the deviation range.

One or more consecutive pulse signals within a time period from a pulse start moment of each pulse signal that has changed to a pulse start moment of a next pulse signal that has changed may form a pulse sequence, and each pulse sequence may be considered as an expression period. Pulse widths of pulse signals in a pulse sequence may be the same or similar (a difference does not exceed the deviation range), and when encoding and outputting are performed, regardless of whether there is one or more pulse signals in a pulse sequence, only one pulse signal is encoded for expression and outputted. For example, each pulse sequence may include M consecutive pulse signals. A difference between a pulse width of each of the M pulse signals and the specified pulse width is within the deviation range. For a plurality of pulse signals collected by the photosensitive unit, a difference between a pulse width of each pulse signal and a corresponding specified pulse width may be determined in turn, and then the plurality of pulse signals may be divided into a plurality of pulse sequences. The difference between the pulse widths of the M pulse signals in the current pulse sequence is within the deviation range, and the difference between the pulse width of the any one pulse signal in the current pulse sequence and the pulse width of the any one pulse signal in the previous pulse sequence exceeds the deviation range. The first pulse signal in the current pulse sequence may be considered as a pulse signal that has changed.

In an example, when the difference between the pulse width of each current pulse signal and the corresponding specified pulse width is determined in turn, the specified pulse width includes any one of the following: the pulse width of the first pulse signal in the M pulse signals; an average value of pulse widths of pulse signals that have been received in the M pulse signals; or a pulse width of a previous pulse signal of the current pulse signal.

For example, when the pulse width of the first pulse signal in the M pulse signals is determined, the pulse width of the previous pulse signal of the first pulse signal may be used as the specified pulse width; and when a pulse width of any one pulse signal after the first pulse signal in the M pulse signals is determined in turn, the pulse width of the first pulse signal in the M pulse signals may be used as the specified pulse width.

For another example, when the pulse width of the first pulse signal in the M pulse signals is determined, an average value of pulse widths of pulse signals in a previous pulse sequence of the first pulse signal may be used as the specified pulse width; and when the pulse width of the any one pulse signal after the first pulse signal in the M pulse signals is determined in turn, an average value of pulse widths of pulse signals that have been received in the M pulse signals may be used as the specified pulse width. In an example, when a pulse width of an $i^{th}$ pulse signal in the M pulse signals is determined, an average value of pulse widths of (i-1) pulse signals before the $i^{th}$ pulse signal may be used as the specified pulse width, where i is an integer greater than 1. The average value of the pulse widths of the pulse signals that have been received in the M pulse signals is used as the specified pulse width, so that a slight difference between the pulse widths of the pulse signals that have been received may be ignored, and consecutive pulse signals with similar pulse widths may be grouped into a same pulse sequence, which can reduce a data amount and a code rate.

For another example, when a pulse width of any one current pulse signal in the M pulse signals is determined in turn, a pulse width of a previous pulse signal of the current pulse signal may be used as the specified pulse width. In this way, a determining process can be simplified.

For another example, when a pulse signal after the M pulse signals is used as the current pulse signal, a specified pulse width corresponding to the current pulse signal may be: the pulse width of the first pulse signal in the M pulse signals; an average value of the pulse widths of the M pulse signals; or a pulse width of a previous pulse signal of the current pulse signal. If the difference between the pulse width of the current pulse signal and the specified pulse width is within the deviation range, the current pulse signal and the M pulse signals belong to a same pulse sequence. Otherwise, the current pulse signal is a pulse signal that has changed, the current pulse signal belongs to a new pulse sequence, and the pulse width of the current pulse signal may be updated as a new specified pulse width, which is used for determining whether there is a change in a subsequent pulse signal.

Certainly, the specified pulse width may alternatively be a pulse width of any one pulse signal in a pulse sequence, and which is not limited in this embodiment of the present application.

It should be understood that when the light intensity signal is represented by a level signal or another type of signal, the process of determining whether there is a change in the light intensity signal may be performed based on related information of the another type of signal, as long as the related information can reflect the light intensity.

In some embodiments, the encoding, in response to detecting a change in the light intensity signal, the changed light intensity signal to obtain an encoding result includes: encoding pulse signals in each pulse sequence. In an example, the encoding result of each pulse sequence may be represented by a pulse signal that can represent a light intensity situation during a time period of the pulse sequence, or in other words, after a plurality of pulse signals in a pulse sequence are combined, a pulse signal that can represent a light intensity situation of the pulse sequence may be outputted. The encoding result may include at least one of a start time or an end time of the pulse sequence, and a pulse width of a pulse signal that is used for representing the light intensity situation during a time period of the pulse sequence. A pulse width of a pulse signal that corresponds to each pulse sequence and represents a light intensity situation during a time period of the pulse sequence may generally be represented by a pulse width of the first pulse signal in the pulse sequence, or may be represented by a pulse width of any one of a plurality of pulse signals in the pulse sequence, or may be represented by an average value of pulse widths of the plurality of pulse signals. A sequence formed by pulse signals in a plurality of pulse sequences that are used for representing light intensity situations during their respective time periods of pulse sequences may be considered as a time sequence encoding result for a photon stream.

In some embodiments, encoding and outputting information such as a pulse width of a pulse signal in each pulse sequence (a plurality of consecutive pulse signals with a same or similar pulse width during a time period from a pulse start moment of each pulse signal that has changed to a pulse start moment of a next pulse signal that has changed) that can represent a light intensity situation during a time period of the pulse sequence can reduce a data amount and a code rate.

According to some embodiments of the present application, the encoding, in response to detecting a change in the light intensity signal, the changed light intensity signal to obtain an encoding result includes at least one of the following: performing encoding based on a pulse start moment and a pulse width of the changed pulse signal, performing encoding based on a pulse end moment and the pulse width of the changed pulse signal, or performing encoding based on a weighted value of pulse widths of the pulse signal before and after the change. The weighted value may be a median value of the pulse signal before and after the change.

According to some embodiments of the present application, the changed pulse signal may be the first pulse signal in the pulse sequence, and the pulse width of the changed pulse signal may be the pulse width of the first pulse signal. The pulse start moment/pulse end moment of the changed pulse signal may be a pulse start moment/pulse end moment of the first pulse signal. Alternatively, the changed pulse signal may be all pulse signals in the pulse sequence corresponding to this change, and the pulse width of the changed pulse signal may be a pulse width of any one pulse signal in the pulse sequence, or an average value of all pulse widths in the pulse sequence. The pulse start moment of the changed pulse signal may be the pulse start moment of the first pulse signal in the pulse sequence, and the pulse end moment of the changed pulse signal may be a pulse end moment of the last pulse signal in the pulse sequence.

According to some embodiments of the present application, the encoding, in response to detecting a change in the light intensity signal, the changed light intensity signal to obtain an encoding result includes: performing encoding based on at least one of a pulse start moment or a pulse end moment of the pulse sequence, and at least any one of the following: the pulse width of the first pulse signal in the M pulse signals; an average value of the pulse widths of the M pulse signals; or a number of the M pulse signals.

Changed pulse signals may form a pulse sequence. A pulse start moment of the pulse sequence may be a pulse start moment of the first pulse signal in the pulse sequence, and a pulse end moment of the pulse sequence may be a pulse end moment of the last pulse signal in the pulse sequence. A pulse width corresponding to the pulse sequence may be a pulse width of any one pulse signal in the pulse sequence, such as a pulse width of the first pulse signal in the pulse sequence. Alternatively, the pulse width corresponding to the pulse sequence may be an average value of pulse widths of a plurality of pulse signals in the pulse sequence.

In an example, the pulse start moment of the pulse sequence and the pulse width corresponding to the pulse sequence may be encoded. In this way, a time period during which light intensity information is stable between two adjacent changes in the light intensity information can be determined based on pulse start moments corresponding to the two changes. For example, a duration period of the first pulse sequence in two adjacent pulse sequences can be determined based on pulse start moments corresponding to the two pulse sequences. A pulse width corresponding to a pulse sequence may be used for representing a light intensity during this time period. In this way, the encoded data may retain change information of the pulse signal, that is, retain complete light intensity information. In this example, when a last changed pulse signal is encoded, at least one of a pulse start moment or a pulse end moment of the changed pulse signal, and a pulse width of the pulse signal may be encoded, that is, a pulse start moment and a pulse end moment of the last pulse sequence and a pulse width corresponding to the last pulse sequence may be encoded. In this way, a duration period of the last pulse sequence can be obtained based on the pulse start moment and the pulse end moment of the last pulse sequence.

In an example, the pulse end moment of the pulse sequence and the pulse width corresponding to the pulse sequence may be encoded. In this way, a time period during which the light intensity information is stable between two adjacent changes in the light intensity information can be determined based on pulse end moments corresponding to the two changes. For example, a duration period of the second pulse sequence in two adjacent pulse sequences can be determined based on pulse end moments corresponding to the two pulse sequences. In this example, when a first changed pulse signal is encoded, a pulse start moment, a pulse end moment, and a pulse width of the changed pulse signal may be encoded, that is, a pulse start moment and a pulse end moment of an initial pulse sequence and a pulse width corresponding to the initial pulse sequence may be encoded. In this way, a duration period of the initial pulse sequence can be obtained based on the pulse start moment and the pulse end moment of the initial pulse sequence.

In an example, the pulse start moment and the pulse end moment of the pulse sequence and the pulse width corresponding to the pulse sequence may be encoded.

In an example, the number of the M pulse signals in the pulse sequence, and at least one of the pulse start moment or the pulse end moment of the pulse sequence may be encoded. In an example, a duration period corresponding to each pulse sequence can be obtained based on at least one of a pulse start moment or a pulse end moment of the pulse sequence, and an average value of pulse widths of M pulse signals in the pulse sequence can be obtained based on the duration period corresponding to each pulse sequence and a number of the M pulse signals in the pulse sequence. For example, the average value of the pulse widths of the M pulse signals can be obtained by dividing the duration period (a total pulse width of the M pulse signals) corresponding to the pulse sequence by the number of the M pulse signals, and the average value may be used for representing a light intensity of the pulse sequence, where the larger the average value, the lower the light intensity. In this way, when there is a slight difference between the pulse widths of the M pulse signals, the pulse width of each pulse signal may be comprehensively considered to obtain the pulse width corresponding to the pulse sequence. The pulse width corresponding to the pulse sequence may more closely match an actual light intensity within the pulse sequence.

Further, the encoded sequence is obtained by encoding based on at least one of the pulse start moment or the pulse end moment of the changed pulse signal and the pulse width, and the encoded sequence array for photons in the entire spatial region is formed based on the position arrangement of all the photosensitive units in the photosensitive unit array and the encoded sequences for the local spatial regions corresponding to all the photosensitive units.

Since an actual photon stream is often a "piecewise linear" change process: there are sudden changes in the light intensity, and the light intensity is stable between sudden changes. When the light intensity remains unchanged, pulse signals are issued periodically and repeatedly, but no new information is provided. Therefore, only an issuing moment and a pulse width of a pulse that has changed need to be outputted as an encoded sequence for photons in the local spatial region corresponding to the photosensitive unit. If there is no output afterwards, it means repetition. Due to physical randomness of the pulse width when the light intensity is stable, the "repetition" here is repetition in a statistical sense, indicating that fluctuations in the pulse width are within the deviation range (same or similar pulses). For example, a time period during which the pulse signal that has changed is stable can be determined based on the pulse start moment of the changed pulse signal. The pulse width of the pulse signal that has changed may be used for representing a light signal intensity within the stable time period. In this way, the encoded data may retain change information of the pulse signal, that is, retain complete light intensity information.

In some embodiments, a pulse width of a current pulse signal in consecutive pulse signals is compared with the specified pulse width, and when a comparison result does not meet the deviation range, it is determined that there is a change in the light intensity. In this way, a pulse signal that has suddenly changed in the consecutive pulse signals may be conveniently determined, and therefore it may be avoided that a plurality of stable pulse signals before the pulse signal that has suddenly changed are separately encoded. Therefore, an encoding process can be simplified, and a code rate can be reduced while retaining complete light intensity information, for example, lossless pulse encoding is achieved. In addition, the deviation range is set, and it is determined, when the difference between the pulse width of the current pulse signal and the specified pulse width does not exceed the deviation range, that there is no change in the current pulse signal. In this way, consecutive pulse signals with a same or similar pulse width as the specified pulse width may be grouped into a same time period during which the light intensity information is stable, that is, same encoded information may be used for representing the consecutive pulse signals. Therefore, data to be encoded can be further reduced.

According to some embodiments of the present application, the encoding method for a light signal further includes: outputting, using an asynchronous transmission protocol, time sequence code of photon streams corresponding to one or more photosensitive units.

In an example, the encoded sequence may include two types of parameters, namely, a pulse width corresponding to each pulse sequence and a pulse start moment/pulse end moment corresponding to each pulse sequence. This may simplify an encoding process, reduce a code rate, and achieve lossless encoding of pulse signals.

In another example, the encoded sequence may include three types of parameters, namely, position information corresponding to the photosensitive unit, a pulse width corresponding to each pulse sequence, and a pulse start moment/pulse end moment corresponding to each pulse sequence. This may simplify an encoding process, reduce a code rate, and achieve lossless encoding of pulse signals.

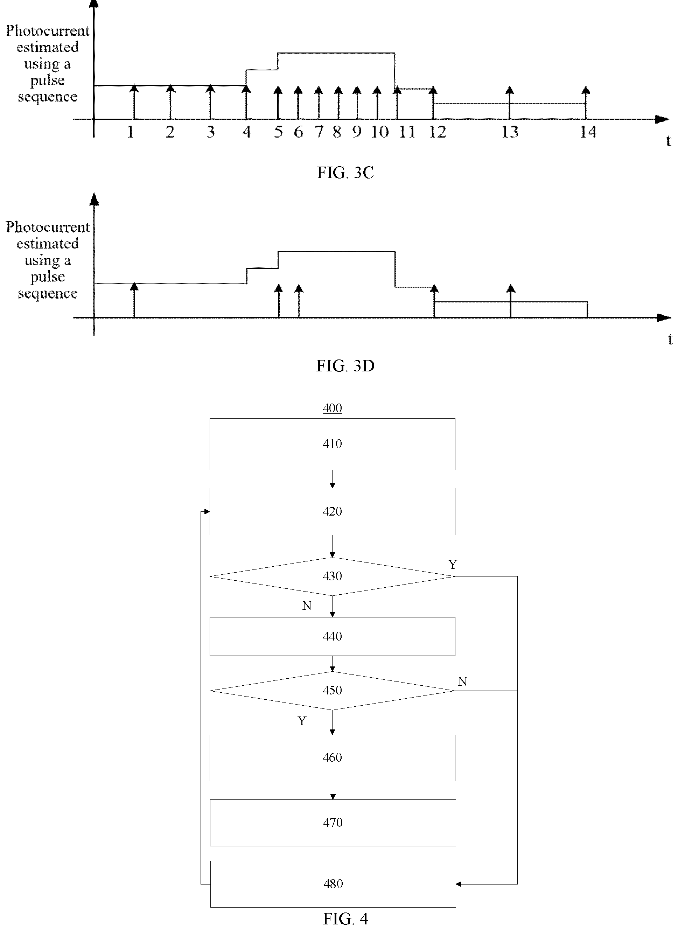

In an example, photosensitive units corresponding to different pixels will generate their respective electrical signals. Therefore, the photosensitive units corresponding to different pixels will correspond to their respective encoded sequences, and the encoded sequences are asynchronous sequences. For the photosensitive unit array, if a plurality of photosensitive units share one asynchronous output channel, position information corresponding to the photosensitive unit also needs to be added. For example, the position information may be a pixel position (i, j) corresponding to the photosensitive unit. The changed light intensity signal and the position information of the photosensitive unit in the photosensitive unit array are encoded, the encoded sequence for the photons in the local spatial region corresponding to the photosensitive unit is formed based on the encoded information obtained by the encoding, the time sequence relationship, and the position information, and the encoded sequence may be represented by an encoded quadruple (i, j, t, $\tau$). t is a pulse start moment/pulse end moment corresponding to each pulse sequence, and $\tau$ may be a pulse width corresponding to the pulse sequence (it may be the specified pulse width, or an average value of pulse widths of M pulse signals in the pulse sequence). The encoded quadruple may be outputted using the asynchronous transmission protocol. For example, the asynchronous transmission protocol such as Address Event Representation (AER) mode is used for output. An image at any moment may be reconstructed based on the encoded sequence array corresponding to the plurality of photosensitive units. When the asynchronous transmission protocol (the AER mode) is used for output, since each photosensitive unit is assigned an address, which corresponds to a position of the photosensitive unit in the photosensitive unit array (or the image), events are transmitted through a high-speed digital parallel bus. When the photosensitive unit generates an output pulse (such as the first pulse signal in the pulse sequence in the present application), an AER encoder assigns a digital address to this pulse, information is transmitted to a target chip through bus routing, and the photosensitive unit can send an event to any target neuron in the target chip by analyzing the digital address. In this way, the photosensitive unit and units/modules with a same address in the target chip are actually connected to the same pulse, and the AER protocol may establish virtual connections between neurons, which is conducive to efficient hardware implementation of a large-scale spiking neural network (SNN). A pulse/encoding result is outputted using the asynchronous transmission protocol (AER mode), such that pulse modulation start time of the photosensitive units in the photosensitive unit array may be different, thereby preventing problems such as data transmission congestion caused by a large number of photosensitive units bursting pulses simultaneously. Referring to FIGS. 3A to 3D, FIGS. 3A to 3D show a process of signal acquisition using pulse sequence modulation. As shown in FIG. 3A, the photosensitive unit collects a generated photocurrent, which increases from a medium intensity and then decreases. FIG. 3B shows a pulse sequence expression of the photocurrent, and FIG. 3B is a schematic diagram of the photocurrent estimated using a pulse sequence. A moment where a pulse signal 1 is located is a moment when accumulation of the first pulse signal is completed, and duration from a starting point to this moment is a pulse width of the pulse signal 1 (the arrow indicates a moment when the pulse is generated). An intensity of the photocurrent remains unchanged for a period of time after the pulse signal 1, so that pulse widths of pulse signals 2 to 4 after the pulse signal 1, when compared with the pulse width of the previous pulse signal 1 that has changed (the specified pulse width), are all the same as that of the pulse signal 1. Compared with the pulse width of the previous pulse signal 1 that has last changed, a pulse width of a pulse signal 5 is shortened, that is, the difference exceeds the deviation range. Because the photocurrent suddenly increases during an accumulation period of the pulse signal 5 in the accumulation process, a pulse start moment and the pulse width of the pulse signal 1 may be encoded and outputted. Further, the pulse width of the pulse signal 5 may be updated as the specified pulse width, and a difference between a pulse width of a pulse signal 6 and the pulse width of the previous pulse signal 5 that has changed exceeds the deviation range, so that a pulse start moment and the pulse width of the pulse signal 5 may be encoded and outputted. Further, the pulse width of the pulse signal 6 may be updated as the specified pulse width, pulse widths of pulse signals 7 to 11 are compared with the specified pulse width, and if no comparison result exceeds the deviation range, that is, the pulse widths of the pulse signals 6 to 11 are the same (or similar), there is no change in the photocurrent. Since an intensity of the photocurrent during this period is twice that during the period of the pulse signals 1 to 4, the pulse width is halved. A difference between a pulse width of a pulse signal 12 and the pulse width of the previous pulse signal 6 that has changed exceeds the deviation range, so that a pulse start moment and the pulse width of the pulse signal 6 may be encoded and outputted. During an accumulation period of the pulse signal 12, the photocurrent weakens, so that the pulse width becomes longer. Further, the pulse width of the pulse signal 12 may be updated as the specified pulse width, and a difference between a pulse width of a pulse signal 13 and the specified pulse width exceeds the deviation range, so that a pulse start moment and the pulse width of the pulse signal 12 may be encoded and outputted. Further, the pulse width of the pulse signal 13 may be updated as the specified pulse width, and a difference between a pulse width of a pulse signal 14 and the specified pulse width does not exceed the deviation range, that is, the pulse widths of the pulse signals 13 and 14 are the same (or similar). The pulse widths of the pulse signals 13 and 14 are twice as long as that of the pulse signals 1 to 4, because the photocurrent during the accumulation period is half as weak as during the period of the pulses 1 to 4. The pulse signal 14 is the last pulse signal. Therefore, a pulse start moment and a pulse width of the pulse signal 13 may be encoded and outputted, and so on. FIG. 3C shows estimation of an intensity of the photocurrent during a corresponding time period using the reciprocal of a pulse width. Estimates of the pulse signals 1 to 4, 6 to 11, and 13 and 14 may be the same as an original intensity of the photocurrent. The photocurrent undergoes a sudden change during the accumulation periods of the pulse signals 5 and 12, so that an estimated value is a median value of the intensities of the photocurrent before and after the sudden change. FIG. 3D describes lossless pulse encoding with a reduced code rate.

For a photosensitive unit, a pulse signal sequence corresponding to a pulse signal that has changed is an asynchronous sequence, and an encoded sequence may be represented as $\{(t\_i, \tau\_i)\}$, where $t\_i$ is an occurrence moment of the $i^{th}$ pulse signal that has changed, and $\tau\_i$ is a pulse width of the pulse signal. For the photosensitive unit array, if a plurality of pixels share one asynchronous output channel, a pixel position $(i, j)$ also needs to be added to form a quadruple $(i, j, t, \tau)$, which is outputted using an asynchronous transmission protocol.

It should be understood that, in this embodiment of the present application, the light intensity information corresponding to the pulse signal may alternatively be other pulse parameters, than the pulse width, that are obtained based on the interval duration information and can be used for pulse modulation, such as pulse frequency, pulse amplitude (referred to as a pulse amplitude, or a pulse height), or pulse phase, etc. When the light intensity information is represented by another type of signal, the process of determining whether there is a change in the light intensity signal may be performed based on the another type of signal, as long as the related information can reflect the intensity of the light signal. Correspondingly, light intensity information of a specified light intensity signal may be a pulse frequency, a pulse amplitude (a pulse amplitude, or a pulse height), a pulse phase, or the like of a specified pulse signal. During a specific application process, reference may be made to the implementation ideas in each embodiment of the present application, which will not be repeated here.

According to some embodiments of the present application, encoding, when there is a change in the light intensity signal, the changed light intensity signal includes: encoding the light intensity signal using an equal-length or variable-length encoding method.

In an example, the quadruple $(i, j, t, \tau)$ may be a sequence of natural numbers, and the four parameters i, j, t, and $\tau$ may be represented by using an equal-length or variable-length encoding method. The equal-length encoding method may include a binary encoding method, for example, stipulating that a maximum value of the natural numbers in the quadruple is $2^n-1$, and each natural number is represented by n bits. This encoding method is simple and clear.

In an example, the four parameters may be encoded with variable lengths according to probability distribution, such as Huffman encoding, etc. This encoding method is efficient.

FIG. 4 is a schematic flowchart of an encoding method 400 for a light signal according to another example embodiment of the present application. The embodiment in FIG. 4 is an example of the embodiment in FIG. 2. To avoid repetition, similarities between the two embodiments will not be repeated. As shown in FIG. 4, the encoding method 400 for a light signal includes the following content.

410: Collect a photon stream in a local spatial region by using a photosensitive unit, and convert the photon stream into consecutive pulse signals representing a change process of a light intensity.

The process of converting the photon stream into the pulse signals may be implemented by the photosensitive unit or by another signal conversion device.

420: Calculate a difference between a pulse width of a current pulse signal in the consecutive pulse signals and a specified pulse width corresponding to the current pulse signal.

The specified pulse width may be a pulse width of a previous pulse signal of the current pulse signal. In an example, the specified pulse width may be a pulse width of the first pulse signal in a pulse sequence. For example, if the difference between the pulse width of the current pulse signal and the specified pulse width corresponding to the current pulse signal exceeds a deviation range, the specified pulse width corresponding to the current pulse signal may be a pulse width of the first pulse signal in a previous pulse sequence, and a specified pulse width corresponding to a next pulse signal of the current pulse signal may be a pulse width of the first pulse signal in a current pulse sequence (that is, the pulse width of the current pulse signal).

430: Determine whether the difference is within a deviation range.

If the difference between the pulse width and the specified pulse width exceeds the deviation range, it indicates that there is a change in the pulse signal/light intensity, and step 440 is performed. If the difference between the pulse width and the specified pulse width does not exceed the deviation range, it indicates that there is no change in the pulse signal/light intensity, and step 480 is performed.

440: Encode a pulse start moment and the pulse width of the current pulse signal to obtain an encoding result.

450: Determine whether the current pulse signal is the last pulse signal in the consecutive pulse signals.

If the current pulse signal is the last pulse signal in the consecutive pulse signals, step 460 is performed, otherwise, step 480 is performed.

460: Form an encoded sequence based on a plurality of encoding results.

For example, referring to the pulse sequence expression of the photocurrent in FIG. 3B, the moment where the pulse signal 1 is located is the moment when the accumulation of the first pulse is completed, and the duration from the starting point to this moment is the pulse width of the pulse signal 1 (the arrow may indicate the moment when the pulse signal is generated, and a height of the arrow has no meaning). The intensity of the photocurrent remains unchanged for a period of time after the pulse signal 1, so that the pulse widths of the pulse signals 2 to 4 after the pulse signal 1 are all the same as that of the pulse signal 1. A pulse width of a pulse signal 5 is shortened because the photocurrent suddenly increases during an accumulation period of the pulse signal 5 in the accumulation process. pulse widths of pulse signals 6 to 11 are the same because there is no change in the photocurrent during an accumulation periods of these pulse signals, and because the intensity of the photocurrent during these periods is twice that of the period of the pulse signals 1 to 4, the pulse width is halved. During an accumulation period of the pulse signal 12, the photocurrent weakens, so that the pulse width of the pulse signal 12 becomes longer. The pulse widths of the pulse signals 13 and 14 are twice as long as that of the pulse signals 1 to 4, because the photocurrent during the accumulation period is half as weak as during the period of the pulse signals 1 to 4. FIG. 3C shows estimation of the intensity of the photocurrent during this period using the reciprocal of the pulse width. Estimates of the pulse signals 1 to 4, 6 to 11, and 13 and 14 are the same as an original intensity of the photocurrent. The photocurrent undergoes a sudden change during the accumulation periods of the pulse signals 5 and 12, so that an estimated value is a median value of the intensities of the photocurrent before and after the sudden change.

Since actual fluctuation of the photocurrent is more complex, a piecewise process composed of average values estimated using the pulse sequence can better approximate the change process of the photocurrent. It should be noted that, although the pulse signals 5 and 12 fail to accurately approximate the original photocurrent, they are still very meaningful: they are each located between two stable periods and their pulse widths are between the pulse widths within the two periods, indicating that there is a change in the light intensity during the accumulation periods of the pulse signals, and these pulse signals will serve as key pulse signals for subsequent encoding optimization, and may also be used for vision tasks such as moving target detection.

With reference to both FIG. 3C and FIG. 3D, the pulse signals 1 to 14 may be considered as consecutive pulse signals, and determination may be performed on the pulse signals 1 to 14 in sequence. For example, the pulse signal 1 serves as the first pulse signal, and may do not need to be compared to a pulse width of a specified pulse signal (a specified pulse width), or the pulse width of the specified pulse signal corresponding to the pulse signal 1 may be set to 0. The pulse start moment and the pulse width of the pulse signal 1 are encoded to obtain an encoding result, and the pulse width of the pulse signal 1 may be used as the specified pulse width, to determine a comparison result between the pulse width of the pulse signal 2 and the specified pulse width. Since the comparison result is within the deviation range, the pulse signals 1 and 2 may be within a same pulse sequence. Similarly, comparison results between the pulse widths of the pulse signals 3 and 4 and the specified pulse width may be determined separately. Since the comparison results are within the deviation range, the pulse signals 1 to 4 may be within a same pulse sequence. If a comparison result between the pulse width of the pulse signal 5 and the specified pulse width is not within the deviation range, the pulse start moment and the pulse width of the pulse signal 5 may be encoded to obtain an encoding result. The pulse width of the pulse signal 5 may be updated as the specified pulse width, and a comparison result between the pulse width of the pulse signal 6 and the specified pulse width is determined. Since the comparison result is not within the deviation range, the pulse start moment and the pulse width of the pulse signal 6 may be encoded to obtain an encoding result. The pulse width of the pulse signal 6 may be updated as the specified pulse width, and comparison results between the pulse widths of the pulse signals 7 to 11 and the specified pulse width are determined in sequence. Since the comparison results are within the deviation range, the pulse signals 6 to 11 may be within a same pulse sequence. If a comparison result between the pulse width of the pulse signal 12 and the specified pulse width is not within the deviation range, the pulse start moment and the pulse width of the pulse signal 12 may be encoded to obtain an encoding result. The pulse width of the pulse signal 12 may be updated as the specified pulse width, and a comparison result between the pulse width of the pulse signal 13 and the specified pulse width is determined. Since the comparison result is not within the deviation range, the pulse start moment and the pulse width of the pulse signal 13 may be encoded to obtain an encoding result. The pulse width of the pulse signal 13 may be updated as the specified pulse width, and a comparison result between the pulse width of the pulse signal 14 and the specified pulse width is determined. Since the comparison result is within the deviation range, the pulse signals 13 and 14 may be within a same pulse sequence. In summary, the encoding results corresponding to the pulse sequences where the pulse signals 1, 5, 6, 12, and 13 are located can be obtained. These encoding results may form encoded sequences.

470: Arrange encoded sequences for a plurality of photosensitive units according to position information corresponding to the plurality of photosensitive units, to obtain an encoded sequence array.

480: Use a next pulse signal of the current pulse signal as the current pulse signal.

Step 420 may be further performed after step 480.

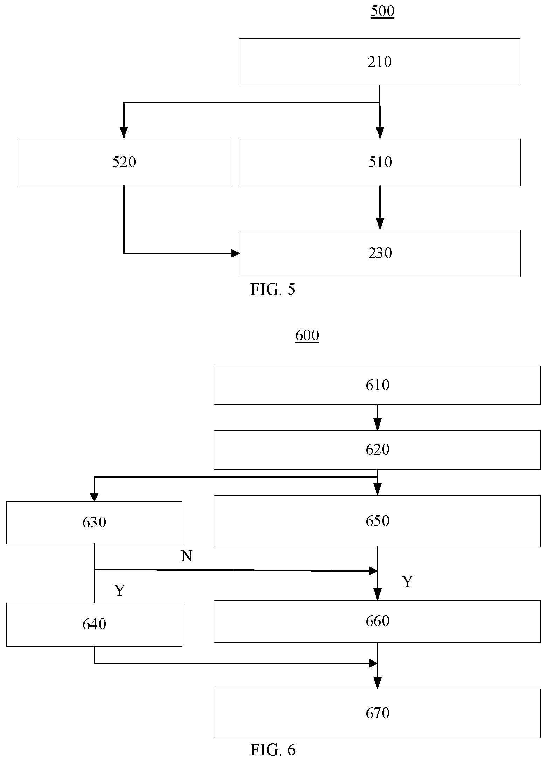

FIG. 5 is a flowchart of an encoding method 500 including steps 210 and 230 in the encoding method 200 for a light signal, according to an example embodiment of the present disclosure. That a light intensity signal is a pulse signal is used as an example. As shown in FIG. 5, the encoding method 500 includes the following steps.

210: Detect whether there is a change in a light intensity signal representing a light intensity, the light intensity signal being converted by a photosensitive unit from a received photon stream.

510: In response to determining that a difference between a pulse width of any one pulse signal and a specified pulse width exceeds a deviation range, encode moment information of the pulse signal and a pulse width of the pulse signal to obtain encoded information of the pulse signal, where the moment information of the pulse signal includes at least one of a pulse start moment or a pulse end moment of the pulse signal.

In some implementations, light signals in a space may be continuously collected, and the light signals may be converted into electrical signals to be accumulated, to obtain a signal accumulation amount. Each time when the signal accumulation amount reaches an accumulation threshold, a pulse signal is generated, and the signal accumulation amount is set to zero (that is, reset) for re-accumulation. Then, pulse signals corresponding to the space may also be arranged based on generation moments of the pulse signals and according to a time sequence relationship, to obtain a pulse sequence used for expressing a light intensity in the space and a change process of the light intensity.

In this embodiment of the present disclosure, the moment information of the pulse signal may include at least one of the pulse start moment or the pulse end moment of the pulse signal. Unless otherwise specified, the description is provided using an example in which the moment information of the pulse signal is the pulse end moment of the pulse signal, and a case where the moment information of the pulse signal is the pulse start moment of the pulse signal may be implemented with reference to this example, and will not be specifically described in this embodiment of the present disclosure.

As shown in FIG. 5, the encoding method 500 further includes:

520: In response to the pulse width of the pulse signal reaching the specified pulse width, encode the moment information of the pulse signal to obtain encoded information of the pulse signal, the specified pulse width including a maximum pulse width that hardware supports recording.

The specified pulse width may include any one of the following: a pulse width of the first pulse signal in M pulse signals between two pulse signals that have changed in succession; an average value of pulse widths of pulse signals that have been received in the M pulse signals; or a pulse width of a previous pulse signal of the current pulse signal. A maximum specified pulse width may also be a maximum pulse width that hardware supports recording. For example, limited by practical factors such as hardware area and power consumption, pulse widths that can be recorded range from 0 to 8, then the specified pulse width is 8.

Step 510 and step 520 are steps performed based on their respective trigger conditions, and they are performed only when their respective trigger conditions are met, and are performed as long as their respective trigger conditions are met. There is no time or order limitation between the two steps.

230: Arrange the encoding result into an encoded sequence according to a time sequence relationship corresponding to changes in the light intensity, the encoded sequence representing time sequence code of the photon stream, and the time sequence relationship representing an order of the changes in the light intensity within a time period.

Since encoding is performed only when there is a change in the pulse width of the pulse signal relative to the specified pulse width, and when the pulse width reaches the specified pulse width, there is no need to encode related information of other pulse signals. The light intensity and the change situations of the light intensity in the space can be reflected by the encoded sequence, and no encoding means that there is no change in the light intensity, which can reduce an amount of data to be encoded, and therefore reduce an amount of data to be transmitted to the outside, thereby helping to reduce transmission pressure and improve transmission efficiency. Secondly, since the amount of data to be encoded is reduced, hardware resources required for encoding data can be saved, thereby reducing hardware requirements and helping to improve encoding efficiency and resource utilization. In addition, encoding is performed when the pulse width of the pulse signal reaches the specified pulse width, which can avoid limitations on a dynamic range of imaging caused by a limited range of pulse widths that can be recorded due to hardware limitation factors such as hardware area and power consumption, and can improve the dynamic range of imaging while reducing an amount of data to be encoded.

FIG. 6 is a flowchart of another embodiment of the encoding method for a light signal according to the present disclosure. As shown in FIG. 6, based on the embodiment shown in FIG. 5, the encoding method 600 in this embodiment includes:

> 610: Convert a photon stream received for the space into pulse signals representing a change process of a light intensity.
> 620: Obtain a pulse width of the pulse signal.

Then, steps 630 and 650 are performed.

630: Determine whether the pulse width of the pulse signal reaches the specified pulse width.

If the pulse width of the pulse signal reaches the specified pulse width, step 640 is performed. Otherwise, if the pulse width of the pulse signal does not reach the specified pulse width, step 640 is not performed, and step 650 may be performed.

640: Encode moment information of the pulse signal to obtain encoded information of the pulse signal.

Then, step 670 is performed.

650: Determine whether there is a change in the pulse width of the pulse signal based on whether a difference between the pulse width of the pulse signal and the specified pulse width exceeds the deviation range.

The difference between the pulse width of the pulse signal and the specified pulse width, that is, a deviation of the pulse width of the pulse signal relative to the specified pulse width, may be specifically an absolute value of the difference between the two. The deviation range may be set according to actual requirements, for example, may be 0, which indicates that the pulse width of the pulse signal is the same as the specified pulse width. If the deviation range is greater than 0, it indicates that a small deviation is allowed between the pulse width of the pulse signal and the specified pulse width, as long as the deviation between the two is within the deviation range, and it can be considered that there is no change in the pulse width of the pulse signal.

If the difference between the pulse width of the pulse signal and the specified pulse width exceeds the deviation range, it is determined that there is a change in the pulse width of the pulse signal relative to the specified pulse width, and step 660 is performed. Otherwise, if the difference between the pulse width of the pulse signal and the specified pulse width is within the deviation range, it is determined that there is no change in the pulse width of the pulse signal relative to the specified pulse width, and step 660 is not performed.

660: Encode the moment information and the pulse width of the pulse signal to obtain encoded information of the pulse signal.

If the pulse width of the pulse signal does not reach the specified pulse width, and the difference between the pulse width of the pulse signal and the specified pulse width is also within the deviation range, related information of the pulse signal (a pulse end moment, or a pulse end moment and the pulse width) is not encoded, and step 620 is performed for a next pulse signal.

670: Form, according to a time sequence relationship, an encoded sequence by the encoded information of the pulse signal corresponding to the space.

In an example, in some implementations, in step 620, an actual pulse width of the pulse signal can be obtained. The actual pulse width of the pulse signal, that is, accumulation duration of pulses of the pulse signal, is a time interval between the pulse signal and pulses of a previous pulse signal adjacent to the pulse signal, and a time interval between the pulse end moment and the pulse start moment (that is, a pulse end moment of the adjacent previous pulse signal) of the pulse signal may be used as the actual pulse width of the current pulse signal; and a smaller value between the actual pulse width of the pulse signal and the specified pulse width is obtained as the pulse width of the pulse signal.

As an example rather than a limitation, after the actual pulse width of the pulse signal is obtained, whether the actual pulse width of the pulse signal is greater than the specified pulse width may be determined by comparison, and if the actual pulse width of the pulse signal is greater than the specified pulse width, the specified pulse width is used as the pulse width of the pulse signal. Otherwise, if the actual pulse width of the pulse signal is less than the specified pulse width, the actual pulse width of the pulse signal is used as the pulse width of the pulse signal. If the actual pulse width of the pulse signal is equal to the specified pulse width, since they have the same value, one of them is used as the pulse width of the pulse signal.

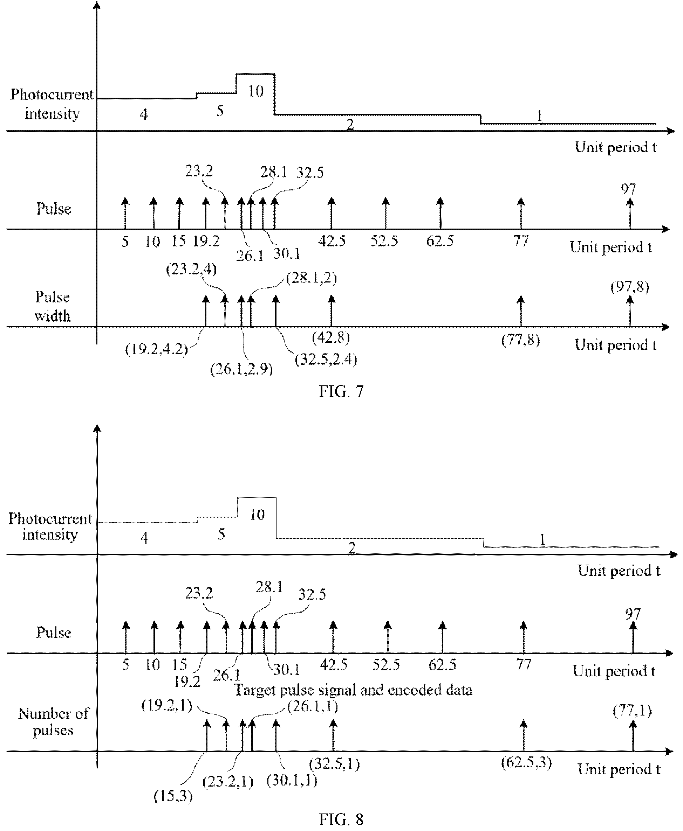

FIG. 7 is a schematic diagram of related information of a pulse signal according to an embodiment of the present disclosure. As shown in FIG. 7, each segment of photocurrent is marked with an intensity, which is a light signal intensity (i.e., a light intensity) or an intensity of a converted electrical signal (i.e., a current intensity), an accumulation threshold of the photocurrent intensity is set to 20. Therefore, a light intensity with a photocurrent intensity of 4 reaches the accumulation threshold after 5 unit periods, triggering generation of a pulse. For a transition of the photocurrent intensity from 4 to 5, it is assumed here that the photocurrent intensity of 4 lasts for 16 unit periods. Since a pulse is generated by triggering in the $15^{th}$ unit period, followed by the light intensity with the photocurrent intensity of 4 that lasts for one unit period, as the light intensity with the photocurrent intensity of 5 arrives, it takes (20 - 4) / 5 = 3.2 unit periods to reach the accumulation threshold and trigger generation of a pulse. Therefore, at an end moment of the $19.2^{th}$ unit period, another pulse is generated by triggering, and at this time, a pulse interval (i.e., a pulse width) is 4.2.

For ease of description, for example, limited by practical factors such as hardware area and power consumption, pulse widths that can be recorded range from 0 to 8, then the specified pulse width is 8. FIG. 7 is used as an example. For a pulse within a period from an end moment of the $19^{th}$ unit period to the end moment of the $19.2^{th}$ unit period, a pulse start moment is 15 and a pulse end moment is 19.2, expressed as [15, 19.2]. An actual pulse width of the pulse signal is 19.2 - 15 = 4.2, which is not greater than the specified pulse width of 8. Then, the actual pulse width 4.2 of the pulse signal is recorded as the pulse width of the pulse signal. The specified pulse width of the pulse signal is 5 (a pulse width of a previous pulse signal adjacent to the pulse signal), the deviation range is 0, then a difference between the pulse width of 4.2 of the pulse signal and the specified pulse width of 5 is 0.8, which exceeds the deviation range 0, so that the moment information and the pulse width of the pulse signal need to be encoded and outputted, and a format for encoding data may be expressed as, for example, (t, $\tau$), where t represents the pulse end moment and $\tau$ represents the pulse width. This embodiment of the present disclosure does not limit the format for encoding data.

For a pulse within a period from an end moment of the $32.5^{th}$ unit period to an end moment of the $42.5^{th}$ unit period, a pulse start moment is 32.5 and a pulse end moment is 42.5, expressed as [32.5, 42.5]. An actual pulse width of the pulse signal is 42.5 - 32.5 = 10, which exceeds the specified pulse width of 8. Then, the specified pulse width of 8 is recorded as the pulse width of the pulse signal, the moment information of the pulse signal needs to be encoded and outputted, and a format for encoding data may be expressed as, for example, (t), where t represents the pulse end moment. The embodiments of the present disclosure do not limit the format for encoding data.

In practical applications, due to limitations by hardware area, power consumption, and other hardware factors, the range of pulse widths that the hardware can record is limited. The maximum pulse width that the hardware supports recording is used as the specified pulse width. After the actual pulse width of the pulse signal is obtained, a smaller value between the actual pulse width of the pulse signal and the specified pulse width is obtained and recorded as the pulse width of the pulse signal, thereby effectively recording the pulse width of the pulse signal, so as to determine whether there is a change in the pulse width of the pulse signal.

In an example, in step 520 or 640, as some implementations, when the moment information of the pulse signal is encoded, the moment information of the pulse signal can be directly encoded. In this way, a receiver side (a decoder side) of the encoded information can determine, based on preset settings when the encoded information includes only the moment information of the pulse signal and does not include pulse width-related information (such as the pulse width, a maximum pulse width identifier, the specified pulse width, etc.), that the pulse width of the current pulse signal has reached the specified pulse width.

Alternatively, as some other implementations, the moment information of the pulse signal and a maximum pulse width identifier (ID) may be encoded, and the maximum pulse width identifier is used for indicating that the pulse width of the pulse signal is greater than or equal to the specified pulse width. The maximum pulse width identifier may be agreed upon between a transmitter side (an encoder side) of the encoded information and the receiver side (the decoder side) of the encoded information. In this way, the receiver side can determine, when the maximum pulse width identifier exists in the encoded information, that the pulse width of the current pulse signal has reached the specified pulse width. A specific representation method of the maximum pulse width identifier is not limited in the embodiments of the present disclosure.

Alternatively, as some other implementations, the moment information of the pulse signal and the specified pulse width may be encoded. In this way, the receiver side can directly determine, when the encoded information includes the specified pulse width, that the pulse width of the current pulse signal has reached the specified pulse width.

In an example, in the encoding method of any one embodiment of the present disclosure, after the photon stream received for the space is converted into the pulse signals representing the light intensity, the pulse signals corresponding to the space may also be arranged based on the generation moments of the pulse signals corresponding to the space and according to the time sequence relationship, to obtain the pulse sequence corresponding to the space.

In this case, the specified pulse width described above may be, for example, but is not limited to any one of the following: a pulse width of a previous pulse signal adjacent to the pulse signal in the pulse sequence, or a pulse width of the first pulse signal in a plurality of consecutive pulse signals adjacent to and before the pulse signal in the pulse sequence, or an average value of pulse widths of a plurality of consecutive pulse signals adjacent to and before the pulse signal in the pulse sequence. A difference between the pulse width of each pulse signal in the plurality of consecutive pulse signals and a pulse width of a previous pulse signal adjacent to the pulse signal is within the deviation range, so that it can be considered that there is no change in the pulse widths of the plurality of consecutive pulse signals.

In practical applications, each time a pulse signal is generated, an actual pulse width of the generated pulse signal may be obtained, and subsequent processes of this embodiment of the present disclosure are performed. Alternatively, after the pulse sequence is obtained, an actual pulse width of each pulse signal in the pulse sequence may be obtained in sequence, and subsequent processes of this embodiment of the present disclosure are performed. Alternatively, during the process of obtaining the pulse sequence, an actual pulse width of each pulse signal in the pulse sequence may be obtained in sequence, and subsequent processes of this embodiment of the present disclosure are performed, that is, an operation of obtaining the pulse sequence and an operation of obtaining the actual pulse width of each pulse signal, which may be asynchronously performed with any time difference. This is not limited in the embodiments of the present disclosure.

In this embodiment of the present disclosure, in a case where the pulse width exceeds the specified pulse width, the light intensity is generally low and the number of pulses generated is small. In this case, related information of the pulse signal is encoded and outputted, which actually occupies less computing resources and a small data transmission bandwidth, and will not occupy a large amount of computing resources and bandwidth resources.

In the case of exceeding a range of a pulse width counter, the light intensity is generally low. In this case, regardless of a comparison result, pulse width data is sent to the outside, which actually occupies a small data transmission bandwidth, and will not occupy a large amount of bandwidth resources.

In an example, still referring to FIG. 6, in the encoding method of any one embodiment of the present disclosure, when there is a change in the pulse width of the pulse signal relative to the specified pulse width, the specified pulse width may be updated as the pulse width of the pulse signal.

After it is determined that there is a change in the pulse width of the pulse signal relative to the specified pulse width, that is, there is a change in the pulse width of the pulse sequence, the specified pulse width described above is updated as the pulse width of the pulse signal, and the pulse width of the pulse signal is used as the specified pulse width. A dynamic update of the specified pulse width helps to subsequently determine, based on the specified pulse width, whether there is a change in a pulse width of a next pulse signal, thereby effectively determining whether there is a change in the pulse width of each pulse signal in the pulse sequence.

In an example, in some implementations, the photon stream received for the space may be converted by the photosensitive unit into the pulse signals representing the change process of the light intensity.

Correspondingly, the position of the photosensitive unit in the photosensitive unit array, the moment information of the pulse signal, and the pulse width of the pulse signal may be encoded to obtain the encoded sequence corresponding to the space or the photosensitive unit. The format for encoding data may be expressed as, for example, $(x, y, t, \tau)$, where x and y respectively represent the positions of the photosensitive unit in the $x^{th}$ row and $y^{th}$ column of the photosensitive unit array, t represents the pulse end moment, and $\tau$ represents the pulse width.

In step 520 or 640, the position of the photosensitive unit in the photosensitive unit array and the moment information of the pulse signal may be encoded, to obtain the encoded sequence corresponding to the space or the photosensitive unit. The format for encoding data may be expressed as, for example, $(x, y, t)$, where x and y respectively represent the positions of the photosensitive unit in the $x^{th}$ row and $y^{th}$ column of the photosensitive unit array, and t represents the pulse end moment.

Each photosensitive unit may perform time-domain sampling on light signals in a specified spatial position in an entire observation scene. In the photosensitive unit array formed by arranging the plurality of photosensitive units, each photosensitive unit collects light signals in one space in the observation scene, and spaces corresponding to different photosensitive units do not overlap. The photosensitive units in the photosensitive unit array cooperate with each other to cover the entire observation scene, so that the light signals in the entire observation scene can be sampled. The pulse sequences corresponding to all the spaces in the observation scene are arranged according to a spatial position relationship of the spaces, to form a pulse array. The above embodiment is a processing process for the light signals in the space that are collected by one photosensitive unit. The light signals in the spaces that are collected by the photosensitive units in the photosensitive unit array are separately processed independently according to the procedure of the above embodiment, and therefore, the light signals in the entire observation scene can be processed to obtain an encoded array of the pulse signals corresponding to the entire observation scene.

In some embodiments, the encoding, in response to detecting a change in the light intensity signal, the changed light intensity signal to obtain an encoding result includes: in response to determining that the difference between the pulse width of the any one pulse signal and the specified pulse width exceeds the deviation range, encoding, by using each pulse signal whose pulse width has changed as a target pulse signal, moment information of an encoding period corresponding to the target pulse signal and pulse signal information corresponding to the encoding period, so as to obtain an encoding result corresponding to the target pulse signal.

In some implementations, light signals in a space may be continuously collected, and the light signals may be converted into electrical signals to be accumulated, to obtain a signal accumulation amount. Each time when the signal accumulation amount reaches an accumulation threshold, a pulse signal is generated, and the signal accumulation amount is set to zero (that is, reset) for re-accumulation. The pulse sequence used for expressing the light intensity in the space and the change process of the light intensity is generated based on the generation moments of the pulse signals corresponding to the space and according to the time sequence relationship.

In some embodiments, the arranging the encoding result into an encoded sequence according to a time sequence relationship corresponding to changes in the light intensity includes: arranging encoding results corresponding to target pulse signals into an encoded sequence according to a time sequence relationship of the target pulse signals.

After the encoded sequence is formed, the encoded sequence may be transmitted to the outside, or the encoded sequence may be transmitted to the outside after being further encoded and compressed. The receiver side may correspondingly decode the encoded sequence obtained after the further encoding and compression, to obtain the encoded sequence. This is not limited in the embodiments of the present disclosure.

Only related information of each pulse signal whose pulse width has changed is encoded, and there is no need to encode related information of other pulse signals. The encoded sequence formed by encoded information of the pulse signal whose pulse width has changed may reflect the light intensity and the change situations of the light intensity in the space, and no encoding means that there is no change in the light intensity, which can reduce an amount of data to be encoded, and therefore reduce an amount of data to be transmitted to the outside, thereby helping to reduce transmission pressure and improve transmission efficiency. Secondly, since the amount of data to be encoded is reduced, hardware resources required for encoding data can be saved, thereby reducing hardware requirements and helping to improve encoding efficiency and resource utilization. In addition, the moment information of the encoding period of each pulse signal whose pulse width has changed and the pulse signal information corresponding to the encoding period are encoded, so that the corresponding pulse width can be determined based on the moment information of the encoding period of the pulse signal and the pulse signal information corresponding to the encoding period, and there is no need to directly encode the pulse width, which can avoid limitations on a dynamic range of imaging caused by a limited range of pulse widths that can be recorded due to hardware limitation factors such as hardware area and power consumption, and can improve the dynamic range of imaging while reducing an amount of data to be encoded.

In an example, each time there is a change in the pulse width in the pulse sequence, at least one of an end moment or a start moment corresponding to a previous pulse width of a target pulse signal whose pulse width has changed, and a number of pulses corresponding to the previous pulse width may be encoded. This is not limited in the embodiments of the present disclosure.

In an example, in some implementations, a pulse start moment of the target pulse signal may be used as the moment information of the encoding period corresponding to the target pulse signal, a number of pulse signals with a same pulse width adjacent to and before the target pulse signal may be used as the pulse signal information corresponding to the encoding period, and the pulse start moment of the target pulse signal and the number of the pulse signals with the same pulse width are encoded.

FIG. 8 is a schematic diagram of related information of a pulse signal according to an embodiment of the present disclosure. As shown in FIG. 8, each segment of photocurrent is marked with an intensity, which is a light signal intensity (i.e., a light intensity) or an intensity of a converted electrical signal (i.e., a current intensity), an accumulation threshold of the photocurrent intensity is set to 20. Therefore, a light intensity with a photocurrent intensity of 4 reaches the accumulation threshold after 5 unit periods, triggering generation of a pulse. For a transition of the photocurrent intensity from 4 to 5, it is assumed here that the photocurrent intensity of 4 lasts for 16 unit periods. Since a pulse is generated by triggering in the 15th unit period, followed by the light intensity with the photocurrent intensity of 4 that lasts for one unit period, as the light intensity with the photocurrent intensity of 5 arrives, it takes (20 - 4) / 5 = 3.2 unit periods to reach the accumulation threshold and trigger generation of a pulse. Therefore, at an end moment of the 19.2th unit period, another pulse is generated by triggering, and at this time, a pulse interval (i.e., a pulse width) is 4.2.

FIG. 8 is used as an example. In this implementation, since pulse widths of pulses generated at end moments of the 5th, 10th, and 15th unit periods are the same, which are all 5, but a pulse width of a pulse generated at the end moment of the 19.2th unit period is 4.2, which has changed compared with the pulse widths of the previous three pulses, the pulse generated at the end moment of the 19.2th unit period is used as the target pulse signal. A pulse start moment of the target pulse signal (i.e., a pulse end moment of a previous pulse signal adjacent to the target pulse signal) is 15, and a number of pulse signals (i.e., a number of pulses) with a same pulse width adjacent to and before the target pulse signal is 3, then the pulse start moment 15 of the target pulse signal and the number 3 of the pulse signals with the same pulse width are encoded, and a format for encoding data may be expressed as, for example, (t, C), where t represents the moment information, C represents the number of the pulse signals, and the format for encoding data is not limited in the embodiments of the present disclosure. Based on every two adjacent pieces of encoded information, an encoding period corresponding to the latter piece of encoded information (including duration between moment information in the former piece of encoded information and moment information in the latter piece of encoded information) and a number of pulses with a same pulse width in the encoding period can be determined, and a pulse width of each pulse signal during each time period in the observation scene can be determined based on a ratio of the encoding period to the number of pulses.

In an example, in some other implementations, a pulse start moment of pulse signals with a same pulse width adjacent to and before the target pulse signal may be used as the moment information of the encoding period corresponding to the target pulse signal, a number of the pulse signals with the same pulse width may be used as the pulse signal information corresponding to the encoding period, and the pulse start moment of the target pulse signal and the number of the pulse signals with the same pulse width are encoded.

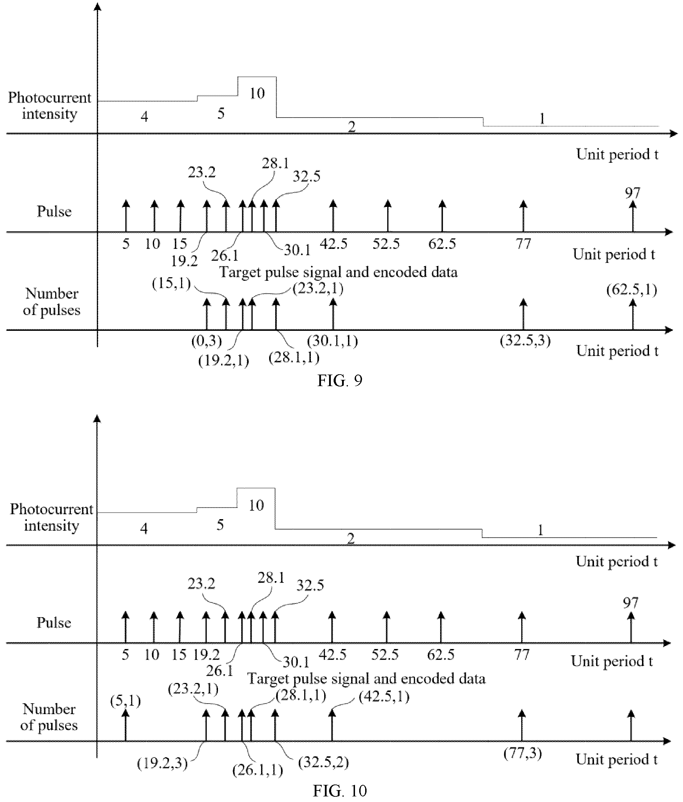

FIG. 9 is a schematic diagram of related information of another pulse signal according to an embodiment of the present disclosure. As shown in FIG. 9, a pulse width of a pulse generated at an end moment of the 32.5th unit period is 4.4, pulse widths of pulses generated at end moments of the 42.5th, 52.5th, and 62.5th unit periods are all 10, and a pulse width of a pulse generated at an end moment of the 77th unit period is 14.5, which has changed compared with the pulse widths of the pulses adjacent to and before it, then the pulse generated at the end moment of the 77th unit period is used as the target pulse signal. A pulse start moment of pulse signals with a same pulse width adjacent to and before the target pulse signal is 32.5, and a number of the pulse signals with the same pulse width adjacent to and before the target pulse signal is 3, then the pulse start moment 32.5 of the pulse signals with the same pulse width adjacent to and before the target pulse signal and the number 3 of the pulse signals with the same pulse width are encoded, and a format for encoding data may be expressed as, for example, (t, C), where t represents the moment information, C represents the number of the pulse signals, and the format for encoding data is not limited in the embodiments of the present disclosure. Based on every two adjacent pieces of encoded information, an encoding period corresponding to the former piece of encoded information (including duration between moment information in the former piece of encoded information and moment information in the latter piece of encoded information) and a number of pulses with a same pulse width in the encoding period can be determined, and the pulse width of each pulse signal during each time period in the observation scene can be determined based on a ratio of the encoding period to the number of pulses.

In an example, in some other implementations, duration from a pulse end moment of a previous target pulse signal adjacent to the target pulse signal to the pulse end moment of the target pulse signal may be used as the encoding period corresponding to the target pulse signal, the pulse end moment of the target pulse signal may be used as the moment information of the encoding period corresponding to the target pulse signal, a number of pulse signals generated in the encoding period corresponding to the target pulse signal may be used as the pulse signal information corresponding to the encoding period, and the pulse end moment of the target pulse signal and the number of the pulse signals generated in the encoding period corresponding to the target pulse signal are encoded.

FIG. 10 is a schematic diagram of related information of still another pulse signal according to an embodiment of the present disclosure. As shown in FIG. 10, a pulse width of a pulse generated at an end moment of the 32.5th unit period is 4.4, and pulse widths of pulses generated at an end moment of the 42.5th unit period are all 10, which have changed compared with the pulse width of the adjacent previous pulse, so that the pulses are used as the target pulse signal. Pulse widths of pulses generated at end moments of the 52.5th and 62.5th unit periods are all 10, which have not changed relative to the pulse widths of the adjacent previous pulses, so that the pulses are not used as the target pulse signal. A pulse width of a pulse generated at an end moment of the 77th unit period is 14.5, which has changed relative to the pulse width of the adjacent previous pulse, so that the pulse is used as the target pulse signal. Based on this implementation, that the pulse generated at the end moment of the 77th unit period is used as the target pulse signal is used as an example. The encoding period of the target pulse signal is (42.5, 77], the pulse end moment 77 of the target pulse signal is used as the moment information of the encoding period corresponding to the target pulse signal, and a number of pulse signals generated in the encoding period (42.5, 77] is 3, then the pulse end moment 77 of the target pulse signal and the number 3 of the pulse signals generated in the encoding period corresponding to the target pulse signal are encoded, and a format for encoding data may be expressed as, for example, (t, C), where t represents the moment information, C represents the number of pulse signals, and the format for encoding data is not limited in the embodiments of the present disclosure. Based on every two adjacent pieces of encoded information, a pulse width of a target pulse signal generated based on moment information in the latter piece of encoded information can be determined, and a number and pulse widths of other pulse signals in the encoding period can be determined based on the pulse width of the target pulse signal, a number of pulses with a same pulse width in the encoding period, and a pulse width in the former piece of encoded information. Therefore, the pulse width of each pulse signal during each time period in the observation scene can be determined. For example, the pulse width $\tau_i$ of the target pulse signal generated based on the moment information $t_i$ in the latter piece of encoded information i can be determined by: $t_i - t_{i-1} - (C_{i-1})\tau_{i-1}$, where i is an order of an encoding result in a same encoded sequence, a value of i is an integer greater than 1, t represents the moment information, and C represents the pulse signal information.

In an example, in the encoding method of any one embodiment of the present disclosure, alternatively, in the process of converting the received photon stream into the pulse sequence representing the change process of the light intensity, each pulse signal may be used as the current pulse signal, to obtain a pulse width of the current pulse signal. In response to that a difference between the pulse width of the current pulse signal and the specified pulse width exceeds the deviation range, it can be determined that there is a change in the pulse width of the current pulse signal, and moment information of an encoding period corresponding to the current pulse signal and pulse signal information corresponding to the encoding period are encoded, to obtain an encoding result corresponding to the current pulse signal. If the difference between the pulse width of the current pulse signal and the specified pulse width is within the deviation range, it can be considered that there is no change in the pulse width of the current pulse signal, encoding may not be performed for the current pulse signal, and the operation of determining whether there is a change in a light intensity signal in this embodiment of the present disclosure is performed for a next pulse signal in the pulse sequence.

The difference between the pulse width of the current pulse signal and the specified pulse width, that is, a deviation of the pulse width of the current pulse signal relative to the specified pulse width, may be specifically an absolute value of the difference between the two. The deviation range may be set according to actual requirements, for example, may be 0, which indicates that the pulse width of the current pulse signal is the same as the specified pulse width. If the deviation range is greater than 0, it indicates that a small deviation is allowed between the pulse width of the current pulse signal and the specified pulse width, as long as the deviation between the two is within the deviation range, and it can be considered that there is no change in the pulse width of the current pulse signal.

In an example, in some implementations, the pulse width of the current pulse signal may be obtained by using, for example, but not limited to, the following method. An actual pulse width of the current pulse signal is obtained. The actual pulse width of the current pulse signal, that is, accumulation duration of pulses of the current pulse signal, is a time interval between the current pulse signal and pulses of a previous pulse signal adjacent to the current pulse signal, and a time interval between a pulse end moment and a pulse start moment (i.e., a pulse end moment of the adjacent previous pulse signal) of the current pulse signal may be used as the actual pulse width of the current pulse signal. Whether the actual pulse width of the current pulse signal is greater than the specified pulse width is determined by comparison, and the specified pulse width may be the maximum pulse width that the hardware supports recording. For example, limited by practical factors such as hardware area and power consumption, pulse widths that can be recorded range from 0 to 7, then the specified pulse width is 7. If the actual pulse width of the current pulse signal is greater than the specified pulse width, the pulse width of the current pulse signal is determined as a remainder of the actual pulse width of the current pulse signal divided by the specified pulse width. For example, it is assumed that the actual pulse width of the current pulse signal is 10, which exceeds the specified pulse width of 7. Then, the actual pulse width of 10 of the current pulse signal is divided by the specified pulse width of 7 to obtain a remainder of 3, that is, 10 % 7 = 3, then it is determined that the pulse width of the current pulse signal is 3. If the actual pulse width of the current pulse signal is not greater than the specified pulse width, the pulse width of the current pulse signal is determined as the actual pulse width of the current pulse signal. For example, it is assumed that the actual pulse width of the current pulse signal is 6, which does not exceed the specified pulse width of 7. Then, the pulse width of the current pulse signal is determined as 6.

Based on the examples and the encoding method shown above in FIG. 10, since the specified pulse width is 7, and widths of pulses within a period from the end moment of the 32.5th unit period to the end moment of the 42.5th unit period (which is recorded as (32.5, 42.5]) is 10, which exceeds the specified pulse width, it is determined that the pulse width of the current pulse signal is 10 % 7 = 3. Since the previous pulse width is 32.5 - 28.1 = 4.4, and 3 is not equal to 4.4, the pulse generated at the end moment of the 42.5th unit period is used as the target pulse signal, and encoding is performed and encoded information is outputted to the outside. A number of pulse signals generated in the encoding period (32.5, 42.5] is 1, then encoded data is (42.5, 1), the specified pulse width is updated as 3, and the number of pulse signals is set to 0. For a pulse in the encoding period (42.5, 52.5], its pulse width is 10 % 7 = 3, which is equal to the previous pulse width of 3, so that it is not used as the target pulse signal, and the number of pulse signals is increased by 1. For a pulse within (42.5, 52.5], its pulse width is also 3, so that it is not used as the target pulse signal, and the number of pulse signals is increased by 1. For a pulse within (62.5, 77], its pulse width is 14.5 % 7 = 0.5, which is not equal to the previous pulse width of 3, so that it is used as the target pulse signal, the number of pulse signals is increased by 1, encoding is performed to output encoded information to the outside, encoded data is (77, 3), and then the number of the pulse signals is set to 0.

In practical applications, due to limitations by hardware area, power consumption, and other hardware factors, the range of pulse widths that the hardware can record is limited. The maximum pulse width that the hardware supports recording is used as the specified pulse width. After the actual pulse width of the current pulse signal is obtained, whether the actual pulse width of the current pulse signal is greater than the specified pulse width is determined by comparison. When the actual pulse width of the current pulse signal is not greater than the specified pulse width, the actual pulse width of the current pulse signal may be directly recorded. When the actual pulse width of the current pulse signal is greater than the specified pulse width, the remainder of the actual pulse width of the current pulse signal divided by the specified pulse width is used as the pulse width of the current pulse signal, thereby effectively recording the actual pulse width of the current pulse signal, so as to determine whether there is a change in the pulse width of the pulse signal.

In practical applications, when a difference between actual pulse widths of two adjacent pulse signals is exactly the specified pulse width, pulse widths of the two pulse signals determined based on this embodiment of the present disclosure are the same, which will cause errors. In most actual scenarios, a light intensity of a single region does not change particularly dramatically. This situation is a very low probability event and will not affect the overall effect. In an implementation, the specified pulse width may be properly set for the actual scenarios, to effectively avoid occurrence of such a situation. For example, the specified pulse width may be set to a pulse width corresponding to a maximum light intensity of the region in the actual scenario, or a pulse width corresponding to an average light intensity of the region. The embodiments of the present disclosure do not limit specific setting factors and values of the specified pulse width.

In an example, in some implementations, the specified pulse width described above may include, for example, but is not limited to any one of the following: a pulse width of a previous pulse signal adjacent to the current pulse signal; a pulse width of the first pulse signal in a plurality of consecutive pulse signals adjacent to and before the current pulse signal, where a difference between a pulse width of each pulse signal in the plurality of consecutive pulse signals and a pulse width of a previous pulse signal adjacent to the pulse signal is within the deviation range, so that it can be considered that there is no change in the pulse widths of the plurality of consecutive pulse signals; an average value of the pulse widths of the plurality of consecutive pulse signals adjacent to and before the current pulse signal, where the difference between the pulse width of each pulse signal in the plurality of consecutive pulse signals and the pulse width of the previous pulse signal adjacent to the pulse signal is within the deviation range, so that it can be considered that there is no change in the pulse widths of the plurality of consecutive pulse signals, and so on.

In an example, in the encoding method of any one embodiment of the present disclosure, after it is determined that there is a change in the pulse width of the current pulse signal, the specified pulse width described above may be updated as the pulse width of the current pulse signal.

After it is determined that there is a change in the pulse width of the current pulse signal, the specified pulse width described above is updated as the pulse width of the current pulse signal, and the pulse width of the current pulse signal is used as the specified pulse width. A dynamic update of the specified pulse width helps to subsequently determine, based on the specified pulse width, whether there is a change in a pulse width of a next pulse signal, thereby effectively determining whether there is a change in the pulse width of each pulse signal in the pulse sequence.

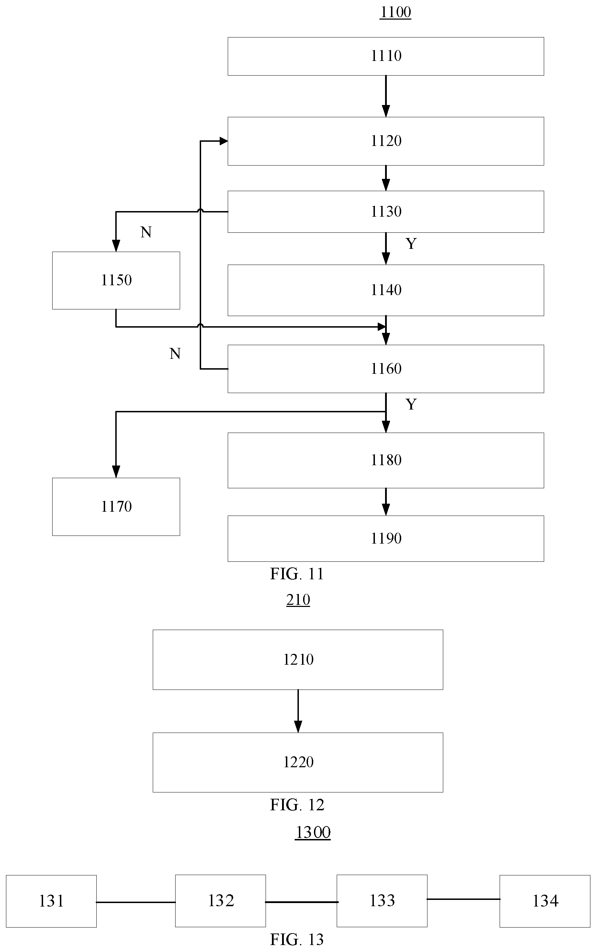

FIG. 11 is a flowchart of another embodiment of the encoding method for a light signal according to the present disclosure. As shown in FIG. 11, the encoding method 1100 in this embodiment includes the following steps.

1110: Convert the photon stream received for the space into a pulse sequence representing the change process of the light intensity, the pulse sequence including a plurality of pulse signals according to a time sequence relationship.

1120: In the process of converting the received photon stream into the pulse sequence representing the change process of the light intensity, use each pulse signal as the current pulse signal, to obtain an actual pulse width of the current pulse signal.

In practical applications, each time a pulse signal is generated, the pulse signal may be used as the current pulse signal, and the actual pulse width of the current pulse signal is obtained. Alternatively, after the pulse sequence is obtained, each pulse signal in the pulse sequence may be used as the current pulse signal in turn, and the actual pulse width of the current pulse signal is obtained. Alternatively, during the process of obtaining the pulse sequence, each pulse signal in the pulse sequence may be used as the current pulse signal in turn, and the actual pulse width of the current pulse signal may be obtained, that is, an operation of obtaining the pulse sequence and an operation of obtaining the actual pulse width of each pulse signal, which may be asynchronously performed with any time difference.

1130: Determine by comparison whether the actual pulse width of the current pulse signal is greater than the specified pulse width.

If the actual pulse width of the current pulse signal is greater than the specified pulse width, step 1140 is performed. Otherwise, if the actual pulse width of the current pulse signal is not greater than the specified pulse width, step 1150 is performed.

1140: Determine a pulse width of the current pulse signal as a remainder of the actual pulse width of the current pulse signal divided by the specified pulse width.

Then, step 1160 is performed.

1150: Determine the pulse width of the current pulse signal as the actual pulse width of the current pulse signal.

1160: Determine by comparison whether a difference between the pulse width of the current pulse signal and the specified pulse width exceeds the deviation range.

If the difference between the pulse width of the current pulse signal and the specified pulse width exceeds the deviation range, it is determined that there is a change in the pulse width of the current pulse signal, and steps 1170 and 1180 are separately performed. Otherwise, if the difference between the pulse width of the current pulse signal and the specified pulse width is within the deviation range, it is determined that there is no change in the pulse width of the current pulse signal, encoding is not performed for the current pulse signal, and step 1120 is performed to use a next pulse signal in the pulse sequence as the current pulse signal, to perform the processes in this embodiment of the present disclosure.

1170: Update the specified pulse width as the pulse width of the current pulse signal.

Step 1170 is a step triggered when the condition that the difference between the pulse width of the current pulse signal and the specified pulse width exceeds the deviation range is satisfied, and there is no execution time or order limitation between other steps than step 1160.

1180: Encode, by using each pulse signal whose pulse width has changed as a target pulse signal, moment information of an encoding period corresponding to the target pulse signal and pulse signal information corresponding to the encoding period, so as to obtain encoded information.

1190: Form, according to a time sequence relationship of target pulse signals, an encoded sequence by encoded information corresponding to each target pulse signal.

Then, step 1120 is performed to use a next pulse signal as the current pulse signal and obtain the actual pulse width of the current pulse signal.

In an example, in some implementations, the photon stream received for the space may be converted by the photosensitive unit into the pulse sequence representing the change process of the light intensity. Correspondingly, the position of the photosensitive unit in the photosensitive unit array, the moment information of the encoding period corresponding to the target pulse signal, and the pulse signal information corresponding to the encoding period may be encoded to obtain an encoded sequence corresponding to the photosensitive unit. The format for encoding data may be expressed as, for example, (x, y, t, C), where x and y respectively represent the positions of the photosensitive unit in the $x^{th}$ row and $y^{th}$ column of the photosensitive unit array, t represents the moment information, and C represents the pulse signal information.

Each photosensitive unit may perform time-domain sampling on light signals in a specified spatial position in an entire observation scene. In the photosensitive unit array formed by arranging the plurality of photosensitive units, each photosensitive unit collects light signals in one space in the observation scene, and spaces corresponding to different photosensitive units do not overlap. The photosensitive units in the photosensitive unit array cooperate with each other to cover the entire observation scene, so that the light signals in the entire observation scene can be sampled. The pulse sequences corresponding to all the spaces in the observation scene are arranged according to a spatial position relationship of the spaces, to form a pulse array. The above embodiment is a processing process for the light signals in the space that are collected by one photosensitive unit. The light signals in the spaces that are collected by the photosensitive units in the photosensitive unit array are separately processed independently according to the procedure of the above embodiment, and therefore, the light signals in the entire observation scene can be processed to obtain an encoded array of the pulse signals corresponding to the entire observation scene.

FIG. 12 is a schematic flowchart of a compression encoding method for a pulse signal according to an example embodiment of the present disclosure. In response to accumulation of light signals in a light pulse generation circuit reaching a preset condition, a pulse signal is generated. The pulse signal includes a first pulse signal and a second pulse signal. In an example, the first pulse signal and the second pulse signal are two consecutive pulse signals in a pulse signal sequence.

In an example, the preset condition may be any condition for generating a pulse signal in a pulse sensor in the prior art. For example, when light signals are accumulated to a preset threshold, a pulse signal is outputted. Each time the preset condition is reached, the light pulse generation circuit generates a pulse signal. Here, the first pulse signal and the second pulse signal do not specifically refer to two specific frames of pulse signals, but refer to only two frames of pulse signals outputted in succession by the light pulse generation circuit. The first pulse signal is outputted before the second pulse signal. In addition, each pulse signal may be the first pulse signal or the second pulse signal at the same time. When a pulse signal is just outputted, the pulse signal is the second pulse signal compared with a previous frame of pulse signal, and the previous frame of pulse signal is the corresponding first pulse signal. When the light pulse generation circuit outputs a next frame of pulse signal, the pulse signal is the first pulse signal, and a newly generated pulse signal is the corresponding second pulse signal.

As shown in FIG. 12, a pulse sequence includes a first pulse signal and a second pulse signal, and the detecting whether there is a change in a light intensity signal representing a light intensity includes the following steps.

1210: Determine a piece of duration information corresponding to each of the first pulse signal and the second pulse signal.

Since there may be a change in the light intensity received by the light pulse generation circuit at different moments, two pieces of duration information respectively corresponding to two consecutive frames of pulse signals collected based on the same preset condition may be different. The piece of duration information of each frame of pulse signal is determined to determine whether there is a change in the light intensity.

1220: Determine, based on the two pieces of duration information respectively corresponding to the first pulse signal and the second pulse signal, whether there is a change in the light intensity signal.

In an example, a relationship between the two pieces of duration information may include being the same or different. When the two pieces of duration information are the same, that is, the first pulse signal and the second pulse signal have a same length, it can be determined that there is no light intensity change between the first pulse signal and the second pulse signal. When the two pieces of duration information are different, that is, the first pulse signal and the second pulse signal have different lengths, it can be determined that there is a light intensity change between the first pulse signal and the second pulse signal.

In the compression encoding method for a pulse signal provided in the above embodiment of the present disclosure, in response to accumulation of light signals in the light pulse generation circuit reaching the preset condition, a pulse signal sequence is generated. The pulse signal sequence includes a first pulse signal and a second pulse signal. The two pieces of duration information respectively corresponding to the first pulse signal and the second pulse signal are determined. Whether there is a light intensity change between the first pulse signal and the second pulse signal is determined based on a relationship between the two pieces of duration information. Through identification of the light intensity change between the two consecutive frames of pulse signals, no signal is outputted when there is no change in the light intensity, and a changed pulse width is outputted only when there is a change in the light intensity, so that an output amount of data can be compressed while ensuring complete recording of information.

In some embodiments, step 1210 may include:

determining, based on a counting result of a first counter, first duration information corresponding to the first pulse signal; and
determining, based on a counting result of a second counter, second duration information corresponding to the second pulse signal.

Duration information corresponding to continuously outputted pulse signals is recorded by the two counters (the first counter and the second counter) alternately. The duration information can be determined using the counters to count at the first frequency (for example, based on trigger control of a clock signal). When the counting ends, the corresponding duration information can be determined by multiplying a counting result that is obtained by counting by the first frequency. The two counters are provided, through which the duration information of each pulse signal can be recorded, and the duration information of each pulse signal is compared with duration information of an adjacent pulse signal.

In an example, determining, based on a counting result of a first counter, first duration information corresponding to the first pulse signal includes:

resetting the first counter in response to receiving the first pulse signal;
causing the reset first counter to count at a first frequency;
causing the first counter to stop counting in response to outputting the second pulse signal, so as to obtain a first counting result; and
determining the first duration information based on the first counting result and the first frequency.

Before the first counter counts, it needs to be reset. A previous counting result of pulse signals is cleared by the reset, to ensure that a current counting result corresponds to only a current first pulse signal. After the reset, the first pulse signal is counted at the first frequency. When the light pulse generation circuit generates a second pulse signal, the first counter stops counting. Based on a counting result obtained at this time in combination with the first frequency, the first duration information corresponding to the first pulse signal can be determined.

In an example, determining, based on a counting result of a second counter, second duration information corresponding to the second pulse signal includes:

resetting the second counter in response to receiving the second pulse signal;

causing the reset second counter to count at a first frequency;

causing the second counter to stop counting in response to outputting the first pulse signal, so as to obtain a second counting result; and

determining the second duration information based on the second counting result and the first frequency.

A counting process of the second counter is similar to that of the first counter. The only difference is that the second counter counts the second pulse signal and stops counting when the light pulse generation circuit outputs a next frame of first pulse signal adjacent to the second pulse signal. This will not be repeated here.

In some embodiments, step 1220 may include: determining whether there is a difference between the duration information corresponding to the first pulse signal and the duration information corresponding to the second pulse signal.

In an example, the first counting result corresponding to the first pulse signal and the second counting result corresponding to the second pulse signal are processed by using at least one digital logic circuit to obtain a logical result.

Whether there is a difference between the duration information corresponding to the first pulse signal and the duration information corresponding to the second pulse signal is determined based on the logical result.

In response to that there is a difference between the two pieces of duration information, whether there is a light intensity change between the first pulse signal and the second pulse signal is determined.

The first counting result and the second counting result are logically processed by the digital logic circuit, and whether the first counting result is the same as the second counting result is determined based on a logic processing result. If they are the same, it can be determined that there is no difference between the two pieces of duration information. If they are different, it means that there is a difference between the two pieces of duration information, and it can be determined that there is a light intensity change during the collection process from the first pulse signal to the second pulse signal. At this time, a result after the light intensity change can be obtained by outputting the second pulse signal.

Any one of the compression encoding methods for a pulse signal provided in the embodiments of the present disclosure may be performed by any suitable device with a data processing capability, including but not limited to: a terminal device and a server, etc. Alternatively, any one of the compression encoding methods for a pulse signal provided in the embodiments of the present disclosure may be performed by a processor, for example, by invoking corresponding instructions stored in a memory. This is not detailed below.

FIG. 13 is a schematic diagram of a structure of a compression encoding circuit 1300 for a pulse signal according to an example embodiment of the present disclosure. As shown in FIG. 13, the compression encoding circuit 1300 includes:

a light pulse generation circuit 131 configured to convert a received light signal into a pulse, and generate a continuous pulse signal sequence when accumulation of light signals reaches a preset condition; a counter control circuit; a change determining circuit; and a readout reset circuit.

The pulse signal sequence includes a first pulse signal and a second pulse signal.

A circuit structure of the light pulse generation circuit 131 may be any circuit that can convert a light signal into a pulse signal. For example, it includes a photodiode, a comparator, a reset transistor, a phase inverter delay chain, etc. A specific circuit structure of the light pulse generation circuit 131 is not limited, as long as it can convert a light signal into a pulse signal. When light signals in the light pulse generation circuit 131 are accumulated to a preset threshold, it outputs a pulse signal, and resets itself. Such a process is repeated. The first pulse signal and the second pulse signal do not specifically refer to two specific frames of pulse signals, but refer to only two frames of pulse signals outputted in succession by the light pulse generation circuit. The first pulse signal is outputted before the second pulse signal. In addition, each pulse signal may be the first pulse signal or the second pulse signal at the same time. When a pulse signal is just outputted, the pulse signal is the second pulse signal compared with a previous frame of pulse signal, and the previous frame of pulse signal is the corresponding first pulse signal. When the light pulse generation circuit outputs a next frame of pulse signal, the pulse signal is the first pulse signal, and a newly generated pulse signal is the corresponding second pulse signal.

The counter control circuit 132 is configured to: in response to receiving a pulse signal, control the two counters to alternately count the first pulse signal and the second pulse signal, and determine a piece of duration information corresponding to each of the first pulse signal and the second pulse signal.

In an example, the counter control circuit 132 controls, when the light pulse generation circuit 131 generates a pulse signal, a counter (a counter that is not counting at a current moment) to be reset and then count the pulse signal, until the light pulse generation circuit 131 generates a next pulse signal, at which point the counter stops counting, and the counter control circuit 132 controls a next counter to count. This process is repeated. Two pieces of duration information of every two adjacent pulse signals can be recorded by using the two counters.

The change determining circuit 133 is configured to determine, based on a relationship between the two pieces of duration information, whether there is a light intensity change between the first pulse signal and the second pulse signal.

Whether there is a light intensity change between the first pulse signal and the second pulse signal is determined based on a change situation between the two pieces of duration information corresponding to the first pulse signal and the second pulse signal, and when the two pieces of duration information corresponding to the first pulse signal and the second pulse signal are different, it can be determined that there is a light intensity change between the first pulse signal and the second pulse signal. When the two pieces of duration information corresponding to the first pulse signal and the second pulse signal are the same, it can be determined that there is no light intensity change between the first pulse signal and the second pulse signal.

The readout reset circuit 134 is configured to read a counting result in a counter and output it in response to the change determining circuit 133 determining that there is a light intensity change between the first pulse signal and the second pulse signal.

Only when there is a change in the light intensity, the counting result corresponding to the pulse signal after the change in the light intensity is read, and pixel coordinates corresponding to the pulse signal (indicating a position of a pixel corresponding to the pulse signal in an image) are also outputted, so that photosensitive information is recorded. In addition, the photosensitive information may also be expressed by outputting a number of pulses of the pulse signal and a moment at which the pulse signal is outputted.

According to the compression encoding circuit for a pulse signal provided in the above embodiment of the present disclosure, through identification of the light intensity change between the two consecutive frames of pulse signals, no signal is outputted when there is no change in the light intensity, and a changed pulse width is outputted only when there is a change in the light intensity, so that an output amount of data can be compressed while ensuring complete recording of information. A pulse signal is converted into a counting result in real time, a pulse width of a previous pulse is compared with that of a current pulse, and corresponding data is outputted only when there is a change between the pulse widths. In the application of a high-resolution and high-frame-rate image sensor, the pixel can perform real-time encoding and compression on photosensitive results, which reduces an output data amount of the sensor, reduces requirements for an output bandwidth, and also ensures complete recording of high-resolution and high-frame-rate information.

In some embodiments, the counter includes a first counter and a second counter.

The first counter is configured to be reset and count at the first frequency based on control of the counter control circuit 132 and when the second counter stops counting, until the counter control circuit receives a next frame of first pulse signal, at which point the first counter stops counting.

The second counter is configured to be reset and count at the first frequency based on control of the counter control circuit 132 and when the first counter stops counting, until the counter control circuit receives a next frame of second pulse signal, at which point the second counter stops counting.

In an example, the first counter and the second counter work alternately to record a pulse interval between pulses that occur at odd-numbered times and a pulse interval between pulses that occur at even-numbered times. Only one counter is working at a time. Each time a frame of pulse signal is generated, the counter is switched once, so that a time difference between two consecutive frames of pulse signals is determined by using the two counters. When counting, the first counter and the second counter use the same first frequency for calculation (for example, the counters are controlled to count based on a same clock signal). Therefore, when comparing the two pieces of duration information of the pulse signals, it is only necessary to compare the counting results of the two counters to determine whether there is a difference between the two pieces of duration information, or to determine whether the difference is within the preset deviation range.

In an example, the counter includes a plurality of frequency dividers connected in series.

Each frequency divider is independently connected to a same reset signal. The counter control circuit controls connection or disconnection between the frequency divider and the clock signal.

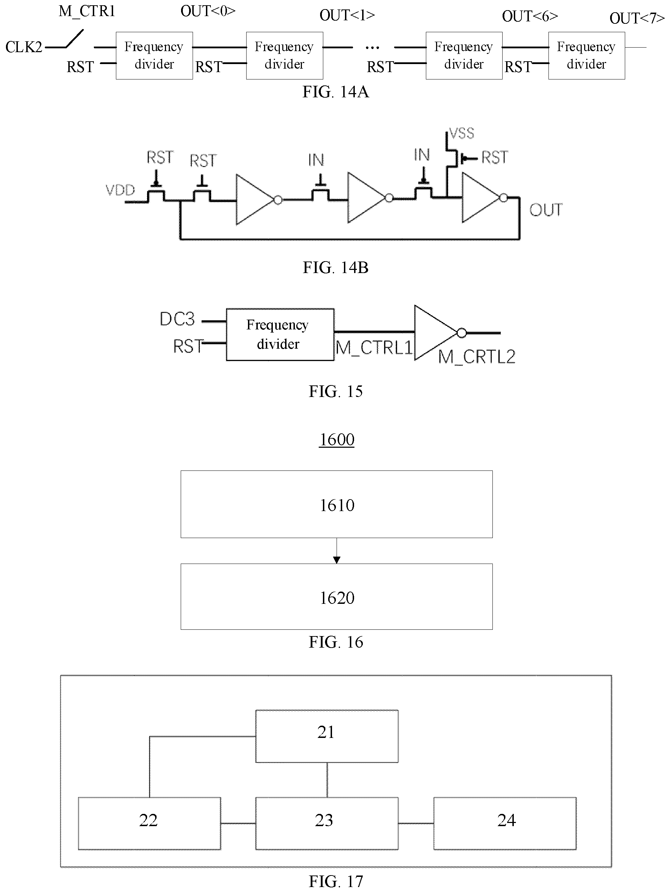

In some examples, as shown in FIG. 14A, a diagram of a specific structure of the counter in this embodiment of the present disclosure is shown. For example, an 8-bit counter is used as an example. Eight frequency dividers are connected in series, and a clock signal is inputted into a first-stage frequency divider, so as to obtain an 8-bit counter. As shown in FIG. 14B, it also shows a specific structure of the frequency divider in an example, including three phase inverters and five control transistors. When the frequency divider works, it is first reset, and when reset, a reset (RST) signal is set to a low level, and an output (OUT) signal is reset to a high level. After the reset is completed, the RST signal is set to a high level, and a first-stage phase inverter outputs a low level. When a rising edge of an IN signal arrives, the low level is outputted to a second-stage phase inverter, and the second-stage phase inverter outputs a high level. Then, when a falling edge of the IN signal arrives, the high level is outputted to a third-stage phase inverter, and the OUT signal changes to a low level, and is re-outputted to the first-stage phase inverter. This process is repeated. When the IN experiences a rising edge and a falling edge, the OUT signal flips once, so that a frequency of the OUT signal is reduced to half of the IN signal, that is, a frequency division effect is achieved. The frequency dividers are connected in series stage by stage, an output result at each stage corresponds to each bit of a binary counter, and an 8-bit counting result is outputted in sequence through OUT<0>, OUT<1> ...OUT<7>. Reset signals of all the frequency dividers are controlled by a same RST signal. An M_CTR1 signal (the other counter corresponds to an M_CTR2 signal) is outputted by the counter control circuit and is used to control whether a clock signal CLK2 can be inputted into the counter. When CLK2 is inputted to the counter, the counter starts counting, otherwise, the counter stops counting.

In some examples, FIG. 15 is a schematic diagram showing a structure of the counter control circuit in this embodiment of the present disclosure. A DC3 signal outputted by the light pulse generation circuit is used as an input of a frequency divider, an output M_CTRL1 of the frequency divider is used as a control signal of the first counter, and is outputted into a phase inverter, and a result M_CTRL2 of the phase inverter is used as a control signal of the second counter. According to the principle of the frequency divider, each time a DC3 pulse signal is generated, M_CTRL1 and M_CTRL2 will flip over once, thereby switching the counter once.

In some embodiments, the change determining circuit 133 includes an XNOR logic circuit and a NAND logic circuit.

The XNOR logic circuit is configured to receive the counting results of the two counters and perform an XNOR operation on the two counting results to obtain an XNOR result.

The NAND logic circuit is configured to receive the XNOR result, perform a NAND logical operation on the XNOR result to obtain a NAND result, and determine the relationship between the two pieces of duration information based on a value of the NAND result.

The counting results of the two counters are subj ected to the XNOR operation of the XNOR logic circuit. For example, if both the counters are 8-bit counters, two 8-bit numbers are each XNORed bit by bit, and the XNOR result is also an 8-bit number. Then, each pair of bits in the 8-bit number is subjected to the NAND operation of the NAND logic circuit to obtain a single-bit result, and if results of the two counters are the same, 8 bits of the XNOR result are all 1, and the NAND result is 0. However, if the results of the two counters are different, there is at least one 0 in the 8 bits of the XNOR result, and the NAND result is 1. Therefore, whether the two pieces of duration information are the same can be determined based on the NAND result being outputted as 1 or 0. The circuit structures of the XNOR logic circuit and the NAND logic circuit may be implemented using circuit structures in the prior art.

In some embodiments, the readout reset circuit 134 is specifically configured to: in response to the change determining circuit determining that there is a light intensity change between the first pulse signal and the second pulse signal, determine, according to the counter control circuit, a counter corresponding to the second pulse signal, and read a counting result in the determined counter and output it.

In an example, when the illumination intensity received by the compression encoding circuit for a pulse signal (may correspond to a pixel unit in the image sensor) remains unchanged, the frequency at which the light pulse generation circuit generates pulses remains unchanged, and the counting results of the two counters are always equal. In this case, the pixel does not issue a readout request and no data will be outputted. When there is a change in the illumination intensity, the results of the two counters are unequal. The compression encoding circuit for a pulse signal will output a pulse width of a current pulse for representing a changed light intensity. At the same time, an array peripheral circuit will also record pixel coordinates requested to be outputted. For a specific output, a counter that currently counts pulse signals whose light intensity has changed can be determined based on control of the counter control circuit (when the first pulse signal is compared with the second pulse signal, it is found that there is a light intensity change between the two, it indicates that there is a light intensity change in the second pulse signal relative to the first pulse signal, so that a counting result corresponding to the second pulse signal is outputted), a counting result of the counter is outputted, duration information is determined based on the counting result and the first frequency, and the duration information may be used as a pulse width obtained after the light intensity change.

In some embodiments, the circuit may further include:

a readout request circuit configured to issue a readout request to an external array handshaking circuit, and control, based on a signal fed back by the external array handshaking circuit, the readout reset circuit to perform a read operation.

When the change determining circuit 133 determines that there is a light intensity change between two consecutive frames of pulse signals, the readout request circuit will send a readout request to the external array handshaking circuit. After receiving the request, the external array handshaking circuit will send a signal to a readout request circuit of a corresponding pixel unit. After receiving the signal, the readout request circuit determines, according to a signal status of the counter control circuit, which counter is counting current pulses, and outputs a counting result corresponding to the counter.

FIG. 16 is a schematic flowchart of a decoding method 1600 according to an example embodiment of the present application. The decoding method is used to decode the encoded sequence or encoded sequence array obtained by the above encoding method for a light signal. The decoding method in FIG. 16 corresponds to the above encoding method 200 for a light signal. For corresponding parts, reference may be made to the description of the above embodiments and will not be described again here. The method in FIG. 16 may be performed by a computing device. The computing device may be a video camera, a mobile phone, a computer, a server, another electronic device, etc. As shown in FIG. 16, the decoding method includes the following content.

1610: Obtain an encoded sequence array for photon streams in a spatial region, where the encoded sequence array is formed based on a position arrangement of a plurality of photosensitive units and encoded sequences corresponding to the plurality of photosensitive units, the encoded sequence includes an encoding result obtained by encoding, in response to detecting a change in a light intensity signal, the changed light intensity signal, and time sequence code formed by arranging the encoding result according to a time sequence relationship corresponding to changes in a light intensity.

1620: Decode the encoded sequence array to obtain a decoding result for the spatial region, the decoding result including a light intensity signal representing a light intensity that is converted from a received photon stream.

In an example, the encoded sequence array is decoded, so that change information of a light intensity signal included in the encoded sequence corresponding to each photosensitive unit can be obtained. The change information of the light intensity signal may be considered as the encoding result. The change information of the light intensity signal may include information corresponding to the light intensity signal that has changed. For example, the change information of the light intensity signal may include a start moment/end moment of the change in the light intensity signal. When there are a plurality of changes in the light intensity signal, the change information of the light intensity signal may include a plurality of start moments/a plurality of end moments respectively corresponding to the plurality of changes in the light intensity signal. Further, the change information of the light intensity signal may further include light intensity information corresponding to each change. The light intensity information may represent a light signal intensity during a time period from a start moment of this change and a start moment of a next change; or it represents a light signal intensity during a time period from an end moment of a previous change to an end moment of this change.

This embodiment of the present application provides the decoding method. In this method, determination is performed on the light intensity signal, and when there is change in the light intensity signal, the changed light intensity signal is encoded, and the encoding result may reflect the light intensity and the change situations of the light intensity in the corresponding spatial region within a time period. In this way, data to be encoded can be reduced, there is no need to encode each light intensity signal within this time period, and only the light intensity signal that has changed is encoded and outputted. No encoding and outputting means that there is no change in the light intensity signal, so that an encoding process can be simplified, and a code rate can be reduced while retaining complete light intensity information corresponding to the light intensity signal, thereby achieving efficient lossless compression encoding of the light intensity signal. Correspondingly, the decoding method provided in this embodiment of the present application is simple and can obtain complete light intensity information.

According to some embodiments of the present application, the light intensity signal includes a pulse signal encoded by performing pulse modulation on the received photon stream. For specific content of a pulse modulation method, reference may be made to the description of the embodiments of the above encoding method for a light signal. To avoid repetition, the details will not be repeated here.

According to some embodiments of the present application, the light intensity signal is expressed by consecutive pulse signals, and the decoding result includes at least one of the following: a pulse start moment and a pulse width of the changed pulse signal, a pulse end moment and the pulse width of the changed pulse signal, or a weighted value of pulse widths of the pulse signal before and after the change.

In an example, the pulse start moment is used for representing a start moment when the light intensity signal has changed, and the pulse width is used for representing a light signal intensity when the light intensity signal has changed. The decoding result may include a sequence composed of a plurality of sets of pulse start moments and pulse widths. According to the decoding result, the light intensity in the local spatial region corresponding to the photosensitive unit and the change process of the light intensity can be obtained.

In an example, the decoding result includes: at least one of a pulse start moment or a pulse end moment of a changed pulse signal, and at least any one of the following: a pulse width of the first pulse signal; an average value of pulse widths of pulse signals; or a number of the pulse signals.

One or more consecutive pulse signals during a period from a pulse start moment of each pulse signal that has changed to a pulse start moment of a next pulse signal that has changed form a pulse sequence. A pulse sequence formed by M pulse signals is included between two pulse signals that have changed in succession. A difference between pulse widths of the M pulse signals is within a deviation range, and a difference between a pulse width of any one pulse signal in a current pulse sequence and a pulse width of any one pulse signal in a previous pulse sequence exceeds the deviation range. The decoding result may include: at least one of a pulse start moment or a pulse end moment of the pulse sequence, and at least one of the following: the pulse width of the first pulse signal in the M pulse signals; an average value of the pulse widths of the M pulse signals; or a number of the M pulse signals.

The pulse start moment is used for representing a start moment of the change in the light intensity signal, and the pulse end moment is used for representing an end moment of the change in the light intensity signal. For example, a pulse start moment of the pulse sequence may be a pulse start moment of the first pulse signal in the pulse sequence, and a pulse end moment of the pulse sequence may be a pulse end moment of the last pulse signal in the pulse sequence. A pulse width and a number of pulse signals in each pulse sequence are used for representing a light signal intensity when there is a change in the pulse signals. In an example, a plurality of pulse signals between two adjacent changes may be considered as a pulse sequence, and a pulse width of the first pulse signal corresponding to each change/an average value of pulse widths may be used for representing a pulse width of any one pulse signal in the same pulse sequence. Therefore, the pulse width of the first pulse signal in the M pulse signals, or the average value of pulse widths of the pulse signals in the M pulse signals may be considered as a pulse width corresponding to the pulse sequence. The greater the pulse width of the first pulse signal/the average value of pulse widths, the smaller the light signal intensity corresponding to the pulse sequence. Similarly, the smaller the number of pulse signals in each pulse sequence, the smaller the light signal intensity corresponding to the pulse sequence. For example, the decoding result includes a sequence composed of a plurality of sets of pulse start moments and pulse widths corresponding to pulse sequences. According to the decoding result, the change process of the light intensity signal in the local spatial region corresponding to the photosensitive unit can be obtained, and the light intensity signal can be restored based on the change process.

Further, the decoding result may further include position information of the photosensitive unit in the arrangement relationship. The position information may be a coordinate position, which is used to distinguish light intensity signals/encoding results for different local spatial regions corresponding to different photosensitive units. According to the decoding result, a change process of light intensity signals collected by each photosensitive unit within a time period can be obtained, or a light intensity signal for the local spatial region corresponding to each photosensitive unit can be obtained. Therefore, an image at any moment within this time period can be reconstructed according to the decoding result.

Further, the decoding method further includes: obtaining an accumulated value of a photocurrent (or voltage difference information obtained by performing quantification on the accumulated value of the photocurrent), the accumulated value of the photocurrent being an accumulated value of the photocurrent that is outputted in response to that an output period is reached and a current accumulated value of the photocurrent does not reach an accumulation threshold; and performing decoding in conjunction with the encoded sequence array and the accumulated value of the photocurrent, so as to obtain the decoding result for the spatial region.

Since illumination in a natural scene ranges from $10^{-4}$ lux (night) to $10^5$ lux (sunlight at Summer Solstice), spanning 9 orders of magnitude, and if the 9 orders of magnitude need to be covered at the same time, for example, observing the sun and faint starlight at the same time in outer space, an intensity of a dark current needs to be controlled, and the accumulation threshold Q needs to be set to more than 10 times the intensity of the dark current. In this way, when duration for pulse accumulation reaches an allowed imaging duration (preset output period), a voltage difference for the signal accumulation amount that has not reached the accumulation threshold (not full trap) is measured and quantified, thereby increasing the dynamic range by more than 20 dB. Therefore, voltage difference information under weak light conditions may be outputted, such that a decoding result is subsequently obtained based on the received encoded sequence array and received voltage difference information within a corresponding period of time of the photosensitive unit, which avoids affecting an image reconstruction effect due to that the accumulation of pulse signals for a long period of time in a weak light intensity environment is not sufficient for output, and can improve the dynamic range.

The photosensitive unit is used to collect photons in the corresponding local spatial region, and accumulate an instantaneous light intensity value of the collected photons or the photocurrent converted from the instantaneous light intensity value, to obtain the accumulated value of the photocurrent, and when the accumulated value of the photocurrent reaches the accumulation threshold, the pulse signal is obtained, and the accumulated value of the photocurrent is set to zero for re-accumulation. However, in some cases, the light intensity may be relatively low, and it may take a long time for the accumulated value of the photocurrent to reach the accumulation threshold, such that there will be no pulse signal output for a long period of time. When the photosensitive device fails, there will also be no pulse signal output for a long period of time.

In an example, a light intensity within a time period corresponding to the voltage difference information may be determined based on the voltage difference information. In an example, the voltage difference information may be obtained by encoding, when the preset output period is reached, an accumulated value of the photocurrent that does not reach the accumulation threshold. For example, the encoding process may be a quantification process. Therefore, after the voltage difference information is decoded, an accumulated value of the photocurrent corresponding to this time period can be obtained.

In addition, the encoded sequence array may be decoded to obtain initial pulse signals, and the accumulated value of the photocurrent is used to modify pulse signals in the initial pulse signals that are within the time period corresponding to the accumulated value of the photocurrent, so that a final pulse signal can be obtained. The final pulse signal can restore the pulse signal outputted by the photosensitive unit. It should be understood that during the encoding process, there may be no pulse signal within the time period corresponding to the accumulated value of the photocurrent (or the voltage difference information), or an intensity value of pulse signals within this time period may be a preset value. For example, the pulse signals are a pulse signals. During the encoding process, there may be no pulse signal within the time period corresponding to the voltage difference information, or a pulse width of a pulse signal within this time period may be a preset value, and the preset value may be distinguished or not distinguished from pulse widths of other pulse signals, that is, it may be any possible value, because the decoded initial pulse signals can be adjusted according to the time period corresponding to the voltage difference information.

In another embodiment, the encoded sequence array may be decoded in conjunction with the accumulated value of the photocurrent (the voltage difference information) to obtain information such as a pulse width of the final pulse signal. For example, the pulse signals within the corresponding time period are determined based on the accumulated value of the photocurrent, and pulse signals within other time periods are determined based on the encoded sequence array, so that decoded pulse signals can be obtained.

After the received encoded sequence array is decoded, a display device is driven to output.

The display device includes a display array formed by arranging a plurality of display units. After the pulse signal sequence (the sequence formed by pulse signals that have changed) used for representing the change process of the dynamic photon stream is obtained, a display status of each display unit is determined based on a time-space relationship between the pulse signal sequence and the display array, and the pulse signals are visualized on the display device based on the display status of each display unit. In this way, the change process of the light signal recorded by the pulse signal sequence can be completely displayed, that is, the change process of the light signal in the original scene can be accurately reproduced.

In an example, high-quality images at any consecutive moments can also be reconstructed according to the decoding result, and the display device is driven to directly or indirectly (such as projection) output the images.

In some embodiments, step 1610 includes: obtaining the encoded sequences corresponding to the space.

The encoded sequences are formed, according to the time sequence relationship, by encoded information of pulse signals corresponding to the space. The encoded information of the pulse signals is obtained by encoding moment information and a pulse width of a pulse signal whose pulse width has changed relative to a specified pulse width, and/or the encoded information of the pulse signals is obtained by encoding moment information of a pulse signal whose pulse width has reached the specified pulse width.

The encoded sequences in this embodiment of the present disclosure can be obtained by using any one of the above encoding method embodiments of the present disclosure. The encoding method and the decoding method in the embodiments of the present disclosure may be implemented correspondingly with reference to each other, and details are not described here again.

In some embodiments, step 1620 includes: decoding the encoded sequences corresponding to the space to obtain a decoding result sequence corresponding to the space.

The decoding result includes a decoding result of at least one pulse signal according to the time sequence relationship, and each decoding result (corresponding to the encoded information) includes at least one of the following: moment information and a pulse width of a pulse signal whose pulse width has changed relative to the specified pulse width, moment information of a pulse signal whose pulse width has reached the specified pulse width.

The encoded sequences corresponding to the space may be decoded to obtain the corresponding decoding result sequence, and each decoding result in the decoding result sequence includes moment information and a pulse width of a pulse signal whose pulse width has changed relative to the specified pulse width, and/or moment information of a pulse signal whose pulse width has reached the specified pulse width. Since encoding is performed only when there is a change in the pulse width of the pulse signal relative to the specified pulse width, and when the pulse width reaches the specified pulse width, there is no need to encode related information of other pulse signals. The light intensity and the change situations of the light intensity in the space can be reflected by the encoded sequence, and no encoding means that there is no change in the light intensity, which can reduce an amount of data to be encoded, and therefore reduce an amount of data to be transmitted to the outside, thereby helping to reduce transmission pressure and improve transmission efficiency. Secondly, since the amount of data to be encoded is reduced, hardware resources required for encoding data can be saved, thereby reducing hardware requirements and helping to improve encoding efficiency and resource utilization. In addition, encoding is performed when the pulse width of the pulse signal reaches the specified pulse width, which can avoid limitations on a dynamic range of imaging caused by a limited range of pulse widths that can be recorded due to hardware limitation factors such as hardware area and power consumption, and can improve the dynamic range of imaging while reducing an amount of data to be encoded.

In an example, in step 1610, the encoded sequence array corresponding to the observation scene can be obtained. The encoded sequence array includes: the encoded sequence corresponding to each space in the observation scene. Correspondingly, in step 1620, the encoded sequence array may be decoded to obtain an encoding result sequence corresponding to each space in the observation scene.

In some embodiments, after step 1620, the decoding method 1600 further includes:

determining, based on each decoding result, an actual pulse width of the pulse signal corresponding to the decoding result.

In an example, whether the decoding result includes a pulse width less than the specified pulse width can be determined based on the decoding result. If the decoding result includes a pulse width less than the specified pulse width, the pulse width in the decoding result is determined as the actual pulse width of the corresponding pulse signal. Otherwise, if the decoding result includes no pulse width, or includes a maximum pulse width identifier, or includes the specified pulse width, it can be determined that the actual pulse width of the pulse signal corresponding to the decoding result has reached or exceeded the specified pulse width, Then, the actual pulse width of the corresponding pulse signal can be determined based on a pulse end moment in the decoding result and a pulse end moment in a previous decoding result adjacent to the decoding result in the decoding result sequence where the decoding result is located, for example, a difference between the pulse end moment in the decoding result and the pulse end moment in the adjacent previous decoding result is used as the actual pulse width of the corresponding pulse signal.

For example, continuing to refer to FIG. 7, calculation of a pulse width of a pulse signal within [62.5, 77] is used as an example, pulses of a previous pulse signal adjacent to the pulse signal are within [52.5, 62.5], a pulse width is 10, and a decoding result thereof is (x, y, 62.5, 8). A decoding result of the pulse signal outputted at the end moment of the 77th unit period is (x, y, 77, 8). Since 8 is the specified pulse width, a difference between the pulse end moment 77 in the decoding result and a pulse end moment 62.5 in a previous decoding result adjacent to the decoding result in a decoding result sequence where the decoding result is located is 77 - 62.5 = 14.5, which is used as the actual pulse width of the pulse signal and recorded.

Although the maximum pulse width that the hardware can record is limited by practical factors such as hardware area and power consumption, a pulse width greater than the maximum pulse width that the hardware can record, that is, a lower light intensity, can still be calculated based on the decoding result, thereby extending the dynamic range.

In an example, after the actual pulse width of the pulse signal corresponding to the decoding result is determined, a light intensity value of the space can also be determined based on each decoding result in the decoding result sequence corresponding to the space and the actual pulse width of the pulse signal corresponding to each decoding result.

For example, an instantaneous light intensity value i corresponding to the pulse signal that corresponds to each decoding result can be obtained by: $I = k * 1 / t$. In the formula, $\tau$ is the actual pulse width of the pulse signal, k is a constant greater than zero, and k may be specifically set according to actual requirements.

After the instantaneous light intensity value corresponding to the pulse signal that corresponds to each encoding result is determined based on each encoding result, an instantaneous light intensity value after the change in the light intensity in this space and an instantaneous light intensity value when a light intensity value exceeds a preset light intensity value (corresponding to a case where the pulse width exceeds the specified pulse width) can be learned. A value between every two adjacent light intensity values is the previous light intensity value in the adjacent light intensity values. Therefore, the light intensity value and light intensity changes in this space in the time domain can be determined. Based on the light intensity value of each space in the entire observation scene, image reconstruction may be performed or it may be directly used for target detection. Based on the light intensity changes in each space in the observation scene in the time domain, the light intensity changes of the entire observation scene can be determined, which can effectively perform machine vision tasks such as target detection that require detection of light signal changes at any time, and improve an execution effect of such machine vision tasks.

In some embodiments, the light intensity signal includes a pulse signal, the target pulse signal is each pulse signal whose pulse width has changed, the encoded sequence is formed, according to the time sequence relationship, by the encoding result corresponding to the target pulse signal that corresponds to the space, the encoding result corresponding to the target pulse signal is obtained by encoding moment information of an encoding period corresponding to the target pulse signal and pulse signal information corresponding to the encoding period.

The encoded sequences in this embodiment of the present disclosure can be obtained by using any one of the above encoding method embodiments of the present disclosure. The encoding method and the decoding method in the embodiments of the present disclosure may be implemented correspondingly with reference to each other, and details are not described here again.

In some embodiments, decoding the encoded sequence array to obtain a decoding result for the spatial region includes: decoding the encoded sequence array corresponding to the space, so as to obtain a decoding result sequence corresponding to the space, the decoding result sequence including a decoding result, corresponding to at least one target pulse signal, according to a time sequence relationship, and each decoding result including moment information of an encoding period corresponding to a target pulse signal and pulse signal information corresponding to the encoding period. The decoding result sequence includes a decoding result, corresponding to at least one target pulse signal, according to a time sequence relationship, and each decoding result includes moment information of an encoding period corresponding to a target pulse signal and pulse signal information corresponding to the encoding period.

The encoded sequences corresponding to the space may be decoded to obtain the corresponding decoding result sequence, and each decoding result in the decoding result sequence includes moment information of an encoding period corresponding to a pulse signal whole pulse width has changed and pulse signal information corresponding to the encoding period. Since only related information of each pulse signal whose pulse width has changed is encoded, there is no need to encode related information of other pulse signals. The encoded sequence formed by encoded information of the pulse signal whose pulse width has changed may reflect the light intensity and the change situations of the light intensity in the space, and no encoding means that there is no change in the light intensity, which can reduce an amount of data to be encoded, and therefore reduce an amount of data to be transmitted to the outside, thereby helping to reduce transmission pressure and improve transmission efficiency. Secondly, since the amount of data to be encoded is reduced, hardware resources required for encoding data can be saved, thereby reducing hardware requirements and helping to improve encoding efficiency and resource utilization. In addition, the moment information of the encoding period of each pulse signal whose pulse width has changed and the pulse signal information corresponding to the encoding period are encoded, so that the corresponding pulse width can be determined based on the moment information of the encoding period of the pulse signal and the pulse signal information corresponding to the encoding period, and there is no need to directly encode the pulse width, which can avoid limitations on a dynamic range of imaging caused by a limited range of pulse widths that can be recorded due to hardware limitation factors such as hardware area and power consumption, and can improve the dynamic range of imaging while reducing an amount of data to be encoded.

In an example, the encoded sequence array corresponding to the observation scene may be obtained. The encoded sequence array includes: the encoded sequence corresponding to each space in the observation scene. Correspondingly, the encoded sequence array may be decoded to obtain an encoding result sequence corresponding to each space in the observation scene.

In an example, in some implementations, the moment information of the encoding period corresponding to the target pulse signal may be: a pulse start moment of the target pulse signal. The pulse signal information corresponding to the encoding period may be: a number of pulse signals with a same pulse width adjacent to and before the target pulse signal.

Alternatively, in some other implementations, the moment information of the encoding period corresponding to the target pulse signal may be: a pulse start moment of the pulse signals with the same pulse width adjacent to and before the target pulse signal. The pulse signal information corresponding to the encoding period may be: the number of the pulse signals with the same pulse width.

Alternatively, in some other implementations, the moment information of the encoding period corresponding to the target pulse signal may be: a pulse end moment of the target pulse signal. The pulse signal information corresponding to the encoding period includes: a number of pulse signals generated within the encoding period corresponding to the target pulse signal, where the encoding period corresponding to the target pulse signal is from a pulse end moment of a previous target pulse signal adjacent to the target pulse signal to the pulse end moment of the target pulse signal.

In an example, in the decoding method of this embodiment of the present disclosure, after the decoding result sequence corresponding to the space is obtained, the pulse width of the target pulse signal corresponding to the decoding result can also be obtained based on the decoding result sequence corresponding to the space, the moment information of the encoding period in the decoding result, and the pulse signal information corresponding to the encoding period.

A specific determining method may be determined based on the meaning of the moment information in the decoding result and the pulse signal information.

For example, in correspondence to the above decoding method, in some implementations, when the moment information in the decoding result is the pulse start moment of the target pulse signal, and the pulse signal information in the decoding result is the number of the pulse signals with the same pulse width adjacent to and before the target pulse signal, based on every two adjacent pieces of encoded information, an encoding period corresponding to the latter piece of encoded information (including duration between moment information in the former piece of encoded information and moment information in the latter piece of encoded information) and a number of pulses with a same pulse width in the encoding period can be determined, and a pulse width of each pulse signal during each time period in the observation scene can be determined based on a ratio of the encoding period to the number of pulses.

For example, in correspondence to the above decoding method, in some other implementations, when the moment information in the decoding result is the pulse start moment of the pulse signals with the same pulse width adjacent to and before the target pulse signal, and the pulse signal information in the decoding result is the number of the pulse signals with the same pulse width, based on every two adjacent pieces of encoded information, an encoding period corresponding to the former piece of encoded information (including duration between moment information in the former piece of encoded information and moment information in the latter piece of encoded information) and a number of pulses with a same pulse width in the encoding period can be determined, and a pulse width of each pulse signal during each time period in the observation scene can be determined based on a ratio of the encoding period to the number of pulses.

For example, in correspondence to the above decoding method, in some other implementations, if the period from the pulse end moment of the previous target pulse signal adjacent to the target pulse signal to the pulse end moment of the target pulse signal is used as the encoding period corresponding to the target pulse signal, the moment information in the decoding result is the pulse end moment of the target pulse signal, and the pulse signal information in the decoding result is the number of pulse signals generated in the encoding period corresponding to the target pulse signal, based on every two adjacent pieces of encoded information, a pulse width of a target pulse signal generated based on moment information in the latter piece of encoded information can be determined, and a number and pulse widths of other pulse signals in the encoding period can be determined based on the pulse width of the target pulse signal, a number of pulses with a same pulse width in the encoding period, and a pulse width in the former piece of encoded information. Therefore, a pulse width of each pulse signal during each time period in the observation scene can be determined. For example, the pulse width $\tau_i$ of the target pulse signal generated based on the moment information $t_i$ in the latter piece of encoded information i can be determined by: $t_i - t_{i-1} - (C_{i-1})\tau_{i-1}$, where i is an order of an encoding result in a same encoded sequence, a value of i is an integer greater than 1, t represents the moment information, and C represents the pulse signal information.

In a specific implementation, each decoding result in the decoding result sequence is encoded data before each piece of encoded information is encoded, and its format may be expressed as $(x, y, t_i, C_i)$, where i represents an order of each decoding result in the decoding result sequence. The pulse width $\tau_i$ of the target pulse signal generated based on the moment information $t_i$ in each encoding result i can be determined by: $t_i - t_{i-1} - (C_{i-1})\tau_{i-1}$. For example, pulse calculation of the target pulse signal generated at the end moment of the 77th unit period within the encoding period (62.5, 77] in FIG. 10 is used as an example. A pulse width within a previous encoding period (32.5, 42.5] is 10, encoded data of the target pulse signal outputted at the end moment of the 77th unit period is (x, y, 77, 3), and a pulse width is 77 - 42.5 - (3-1) × 10 = 14.5, which is equal to the actual pulse width of the target pulse signal.

Further, based on the pulse width of the pulse signal corresponding to each decoding result in the decoding result sequence that corresponds to the space, the corresponding instantaneous light intensity value may be determined based on the pulses of each pulse signal. Based on the light intensity value of the entire observation scene, image reconstruction may be performed or it may be directly used for target detection.

In an example, in the decoding method of the previous embodiment of the present disclosure, after the decoding result sequence corresponding to the space is obtained, the light intensity value of the space corresponding to the decoding result may also be obtained based on the decoding result sequence corresponding to the space, the moment information of the encoding period in the decoding result, and the pulse signal information corresponding to the encoding period.

For example, the light intensity value i corresponding to each encoding period in the space can be obtained by: I = k * C / T. In the formula, T is duration of the encoding period corresponding to the decoding result, C represents the number of pulse signals generated in the encoding period, k is a constant greater than zero, and k may be specifically set according to actual requirements.

Based on the light intensity value of the entire observation scene, image reconstruction may be performed or it may be directly used for target detection.

FIG. 17 is a schematic diagram of a structure of a pixel circuit for a pulse sequence type image sensor according to an example embodiment of the present disclosure. The pixel circuit for a pulse sequence type image sensor (hereinafter referred to as the pixel circuit) may be applied to the pulse sequence type image sensor. As shown in FIG. 17, the pixel circuit includes: a light pulse generation circuit 21, a pulse width time integration circuit 22, a voltage caching circuit 23, and a cache voltage output circuit 24.

The light pulse generation circuit 21 is configured to convert a light signal into a light intensity signal, the light intensity signal including a pulse signal. The pulse width time integration circuit 22 is connected to the light pulse generation circuit 21 and configured to convert a pulse time interval between two consecutive pulse signals into a corresponding first voltage signal. The voltage caching circuit 23 is connected to the pulse width time integration circuit 22 and configured to cache, based on the first voltage signal outputted by the pulse width time integration circuit 22, a second voltage signal that satisfies a caching condition. The cache voltage output circuit 24 is connected to the voltage caching circuit 23 and configured to output the second voltage signal.

The light pulse generation circuit 21 may be implemented using any implementable circuit structure. For example, it may include a photodiode, a comparator, and a reset circuit. The reset circuit may be, for example, a reset transistor. The photodiode senses a light intensity during an exposure and converts a light signal into an electrical signal, causing a voltage at one terminal of the photodiode to change. When the voltage reaches a threshold, the comparator outputs a pulse signal, thereby converting the light signal into the pulse signal. The pulse signal in the present disclosure refers to a high-level signal. In practical applications, an exposure intensity may be low and conditions for outputting a high-level signal cannot be met. Then, a low-level signal may be outputted, and the low-level signal may not trigger the caching function of the voltage caching circuit.

The pulse width time integration circuit 22 may generally implement integration based on an integrator. The integrator may be, for example, a capacitor, which may be specifically set according to actual requirements. The pulse width time integration circuit 22 performs integration at a fixed rate during a pulse time interval between two consecutive pulse signals. When the light intensity is high, the light pulse generation circuit 21 will generate a pulse signal within a short period of time, thus making a pulse time interval between this pulse signal and a previous pulse signal short, so that the integration time of the pulse width time integration circuit 22 is short, which makes a voltage at one terminal of the integrator after integration (i.e., the first voltage signal) large. Therefore, the magnitude of this voltage may be used for representing the strength of the light intensity, thereby converting the pulse time interval between the two consecutive pulse signals into the corresponding first voltage signal.

It should be noted that, to ensure that the pulse width time integration circuit 22 can perform integration at a fixed rate, a constant bias current needs to be provided for the pulse width time integration circuit 22, and a specific provision method may be set according to actual requirements.

The voltage caching circuit 23 may cache a voltage signal in any implementable manner, such as implementing voltage cache based on a capacitor, or may implement cache in other manners, which may be specifically set according to actual requirements. The caching condition may also be set according to actual requirements. For example, the caching condition is caching a voltage signal corresponding to a maximum light intensity within a first period. For another example, the caching condition is that an exposure intensity has changed compared to a previous exposure, and so on.

A specific structure of the cache voltage output circuit 24 may be set according to actual needs, as long as it can output the second voltage signal cached by the voltage caching circuit 23 in the first period, and it may also output other signals according to actual needs. For example, if there is a change in the exposure intensity, a high-level pulse is outputted, which may be specifically set according to actual requirements.

The pixel circuit refers to a pixel circuit corresponding to each pixel. In practical applications, a pixel circuit corresponding to each pixel may be set in the pulse sequence type image sensor according to a number of pixels of the sensor, and the pixel circuit corresponding to each pixel may be controlled through a readout circuit, so that the second voltage signal that meets the caching condition can be read out.

The pixel circuit for a pulse sequence type image sensor provided in this embodiment of the present disclosure converts a light signal into a pulse signal through the light pulse generation circuit, converts the pulse time interval between two consecutive pulse signals into the corresponding first voltage signal through the pulse width time integration circuit, further caches, through the voltage caching circuit, the second voltage signal that meets the caching condition, and outputs the cached second voltage signal through the cache voltage output circuit, such that a photosensitive frequency of the pixel is higher than a data output frequency, thereby ensuring that an output data amount is effectively reduced on the basis of ensuring time sensitivity of the pixel, solving the problem of an excessively large data amount in the prior art.

In an embodiment, the voltage caching circuit 23 is specifically configured to: cache, based on each first voltage signal outputted by the pulse width time integration circuit in the first period, a second voltage signal corresponding to a maximum light intensity in the first period. The cache voltage output circuit 24 is specifically configured to output the second voltage signal at an end moment of the first period.

In order to further reduce an output data amount of the image sensor, the first period is set as an output period. Duration of the first period may be set according to actual requirements. For example, the first period needs to include at least two exposure periods, and is not specifically limited. Each exposure will generate a first voltage signal if a pulse signal can be generated, and a plurality of first voltage signals may be generated in the first period. The voltage caching circuit 23 caches, after each exposure, only a voltage signal corresponding to a maximum value of first voltage signals currently generated in a current period. The cache voltage signal may be the first voltage signal of the maximum value, or a voltage signal after certain consumption of the first voltage signal of the maximum value. For example, when whether the currently generated first voltage signal needs to be cached is determined by using a specific device, the device needs to consume a certain voltage, and therefore the first voltage signal will decrease by a certain amount after passing through the device, causing the cache voltage signal to be less than the current first voltage signal of the maximum value. However, since the consumption of the determining device is fixed, relative to the first voltage signal, the cache voltage signal can also represent the magnitude of the exposure intensity. Based on this, when duration of the first period is completed, the voltage caching circuit 23 caches the voltage signal corresponding to the maximum light intensity in the first period, and this voltage signal is called the second voltage signal.

A specific structure of the cache voltage output circuit 24 may be set according to actual requirements, as long as it can output the second voltage signal cached in the first period by the voltage caching circuit 23. For example, the cache voltage output circuit 24 may include a source follower and a row selection transistor. The row selection transistor is controlled by a peripheral readout circuit. When the readout circuit detects that an end time of a first period is reached currently, the readout circuit controls the row selection transistor to be turned on (or activated), indicating that the pixel is selected for output. The source follower is configured to follow the cached second voltage signal, to output the second voltage signal to the readout circuit.

The pixel circuit may select, through row and column selection, the pixel that needs to be read out, the maximum light intensity sensed by the pixel in the first period corresponding to the second voltage signal, for representing the maximum light intensity sensed by the pixel in the first period.

The pixel circuit for a pulse sequence type image sensor provided in this embodiment of the present disclosure converts the light signal into the pulse signal through the light pulse generation circuit, converts the pulse time interval between two consecutive pulse signals into the corresponding first voltage signal through the pulse width time integration circuit, further caches, through the voltage caching circuit, the second voltage signal corresponding to the first voltage signal of the maximum light intensity in the first period, and outputs the cached second voltage signal of the maximum light intensity through the cache voltage output circuit after the first period, such that a photosensitive frequency of the pixel is higher than a data output frequency, thereby ensuring that an output data amount is effectively reduced on the basis of ensuring time sensitivity of the pixel, solving the problem of an excessively large data amount in the prior art.

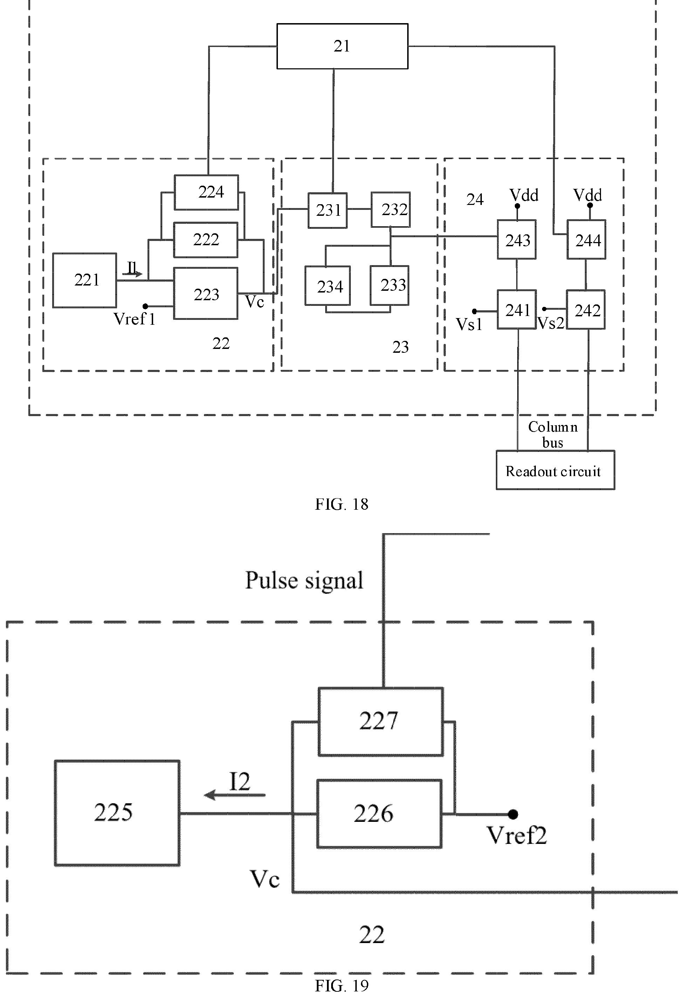

FIG. 18 is a schematic diagram of a structure of the pixel circuit for a pulse sequence type image sensor according to another example embodiment of the present disclosure.

In an example, the pulse width time integration circuit 22 includes a bias current input circuit 221, a first capacitor 222, and an operational amplifier 223.

The bias current input circuit 221 is configured to output a first constant current. The first capacitor 222 has a first terminal connected to the bias current input circuit 221. The first capacitor 222 is configured to be charged under the action of the first constant current during the pulse time interval. The operational amplifier 223 has a first input terminal connected to each of the bias current input circuit 221 and the first terminal of the first capacitor 222, a first output terminal connected to a second terminal of the first capacitor 222, a second input terminal that inputs a first reference voltage, and the first output terminal outputs a first voltage signal after the first capacitor 222 completes the charging for the pulse time interval.

Vref1 represents the first reference voltage, and I1 represents the first constant current. During an exposure, when light signals in the light pulse generation circuit 21 are accumulated to a threshold, a pulse signal is outputted. During a pulse interval between two pulse signals, the first constant current I1 charges the first capacitor 222 and converts the pulse interval into a voltage signal. Specifically, the operational amplifier 223 fixes a voltage at the first terminal of the first capacitor 222 at the first reference voltage. When the first capacitor 222 is not charged, a voltage at the second terminal of the first capacitor 222 is the first reference voltage. When the first capacitor 222 is charged, since the voltage at the first terminal is fixed, as the charging progresses, an electrode plate at the first terminal of the first capacitor 222 is positively charged, and an electrode plate at the second terminal is negatively charged, thereby causing the voltage Vc at the second terminal of the first capacitor 222 to decrease from the first reference voltage Vref1 at a fixed rate, for example, decrease to V1, then V1 is the first voltage signal. The light pulse generation circuit 21 outputs a pulse signal, triggers the voltage caching circuit 23 to enter a caching phase, the pulse width time integration circuit 22 outputs the first voltage signal to the voltage caching circuit 23 for caching. At the beginning of each first period, the voltage caching circuit 23 caches a voltage as 0. After a pulse signal is generated during a first exposure in the first period, the first voltage signal V1 outputted by the pulse width time integration circuit 22 based on this exposure is cached, thereby caching the cache voltage signal corresponding to V1 to the voltage caching circuit 23. After the caching, the light pulse generation circuit 21 and the first capacitor 222 of the pulse width time integration circuit 22 are triggered to be reset. A reset triggering method may be set according to actual needs, for example, transmitting the pulse signal to the light pulse generation circuit 21 and the pulse width time integration circuit 22 after delaying the pulse signal for a specific period of time to trigger their reset, which may be specifically set according to actual requirements. After the reset, the first capacitor 222 starts to be charged again. The light pulse generation circuit generates a second pulse signal through a second exposure. At the time of the second pulse signal, the voltage Vc at the second terminal of the first capacitor 222 decreases to V2. If a light intensity during the second exposure is greater than that during the first exposure, the light pulse generation circuit will generate the second pulse signal within a shorter period of time. This causes a pulse time interval between the second pulse signal and the first pulse signal to be shorter than a pulse time interval between the first pulse signal and a previous pulse signal, so that an integration duration of the first capacitor 222 is also short. Therefore, a decrease degree of Vc is small, so that V2 is greater than V1, and the voltage caching circuit 23 will then cache a cache voltage signal corresponding to V2. Conversely, if the light intensity during the second exposure is less than that during the first exposure, V2 is less than V1, and V2 will not be cached. By this analogy, at any moment, the voltage signal cached by the voltage caching circuit 23 is the voltage signal corresponding to the maximum light intensity that has been generated in the current first period. Therefore, when the first period ends, what the voltage caching circuit 23 caches is the second voltage signal corresponding to the maximum light intensity in the first period.

According to the present disclosure, the constant current is provided for the first capacitor through the bias current input circuit, such that the first capacitor can be charged at a fixed rate. This further, in conjunction with the operational amplifier, causes the first voltage signal to which the voltage Vc at the second terminal of the first capacitor decreases after the charging is completed to represent the exposure intensity. This makes it easy to cache the voltage signal corresponding to the maximum light intensity in the first period, so that the second voltage signal corresponding to the maximum light intensity in the first period can be outputted at the end time of the first period, thereby effectively reducing a data output amount of the pixel circuit.

In an example, the pulse width time integration circuit 22 further includes a first reset circuit 224 connected to each of the light pulse generation circuit 21 and the first terminal and the second terminal of the first capacitor 222 and configured to reset the first capacitor under the action of a pulse signal.

The first reset circuit 224 may use any implementable reset structure, for example, a reset transistor. A gate of the reset transistor is connected to the light pulse generation circuit 21, so that the reset transistor is turned on under the action of the pulse signal, to discharge the first capacitor 222 and reset it to an uncharged state.

In an example, the pulse signal used to trigger the first reset circuit 224 to be turned on may be a signal after a certain delay in a pulse signal generated by the light pulse generation circuit 21, to provide enough time for the voltage caching circuit 23 to cache, ensuring the accuracy of the caching result of the voltage caching circuit 23.

According to the present disclosure, the first capacitor is reset through the reset circuit, such that the first capacitor can be repeatedly used to convert a new pulse time interval into a voltage signal, ensuring that the outputted first voltage signal is accurate and effective.

FIG. 19 is a schematic diagram of a structure of the pulse width time integration circuit 22 according to an example embodiment of the present disclosure.

In an example, the pulse width time integration circuit 22 includes a bias current circuit 225 configured to provide a second constant current; a second capacitor 226 having a first terminal connected to the bias current circuit 225, and a second terminal, a voltage at which is set to a second reference voltage, where the second capacitor 226 is configured to be charged under the action of the second constant current within a pulse time interval. After the charging for the pulse time interval is completed, the first terminal of the second capacitor 226 outputs a first voltage signal; and a second reset circuit 227 connected to each of the light pulse generation circuit 21 and the first terminal and the second terminal of the second capacitor 226 and configured to reset the second capacitor 226 under the action of a pulse signal.

Vref2 represents the second reference voltage, and I2 represents the second constant current. Within the pulse time interval, the second constant current I2 charges the second capacitor 226, making an electrode plate at the second terminal of the second capacitor positively charged and an electrode plate at the first terminal negatively charged. Since the voltage at the second terminal of the second capacitor 226 is a fixed second control voltage Vref2, the voltage at the first terminal of the second capacitor 226 is a changing Vc. As the second capacitor 226 continues to be charged, Vc decreases from Vref2 at a fixed rate to a specific value such as V1 or V2 as mentioned above. The voltage Vc (a value obtained after the decrease) at the first terminal of the charged second capacitor 226 is outputted as the first voltage signal. A specific structure and working principle of the second reset circuit 227 are similar to those of the first reset circuit 224 mentioned above and will not be repeated here. The bias current circuit 225 may use any implementable device, as long as it can provide the required second constant current I2 for the second capacitor 226.

According to the present disclosure, the pulse time interval is converted into the voltage signal by the pulse width time integration circuit based on the bias current circuit, the second reset circuit, and the second capacitor. Compared to the example mentioned above, the operational amplifier is saved, thereby reducing costs and a circuit area.

In an example, the voltage caching circuit 23 includes a first gating circuit 231, a first determining circuit 232, and a first caching circuit 233.

The first gating circuit 231 is connected to each of the light pulse generation circuit 21 and the pulse width time integration circuit 22, and is configured to be turned on under the action of a pulse signal. The first determining circuit 232 is connected to the first gating circuit 231 and is configured to determine, when the first gating circuit 231 is turned on, whether the first voltage signal needs to be cached. The first caching circuit 233 is connected to the first determining circuit 232 and configured to cache, in response to that the first voltage signal needs to be cached, cache a cache voltage signal corresponding to the first voltage signal, and cache the cache voltage signal as the second voltage signal after the end time of the first period is reached.

The first gating circuit 231 may be any implementable gating device, for example, a gating transistor. A gate of the gating transistor is connected to the light pulse generation circuit 21. After the light pulse generation circuit 21 generates a pulse signal, the pulse signal triggers the gating transistor to be turned on, to output the first voltage signal generated by the pulse width time integration circuit 22 to the first determining circuit 232. The first determining circuit 232 may be implemented using any implementable device, as long as it can determine, based on a voltage signal currently cached by the first caching circuit 233 and the first voltage signal, whether the first voltage signal needs to be cached. For example, the first determining circuit 232 may be implemented using a source follower or a comparator, which may be specifically set according to actual requirements, and is not limited in the present disclosure. The first caching circuit 233 may use any device having a caching function, such as a capacitor device, which may be specifically set according to actual requirements. When determining that the first voltage signal needs to be cached, the first determining circuit 232 caches the cache voltage signal corresponding to the first voltage signal to the first caching circuit 233, for example, charges the capacitor through the first voltage signal, such that a voltage of the capacitor is equal to the cache voltage signal corresponding to the first voltage signal. The cached cache voltage signal may be equal to the first voltage signal or less than the first voltage signal, which is specifically determined according to the specific device of the first determining circuit 232. For example, when the first determining circuit 232 uses a source follower, due to certain threshold voltage consumption between a gate and a source of the source follower, the cached cache voltage signal is equal to a difference between the first voltage signal and a gate-source threshold voltage signal of the source follower. When the first determining circuit 232 does not need consumption, the first voltage signal may be directly cached to the first caching circuit 233, such as charging the capacitor to make the voltage of the capacitor equal to the voltage corresponding to the first voltage signal.

According to the present disclosure, the first gating circuit is turned on under the action of the pulse signal, to trigger caching of the voltage signal, and determines, in conjunction with the first determining circuit, whether the first voltage signal needs to be cached, ensuring that the cached voltage signal is a voltage signal corresponding to a maximum light intensity that has been generated in a current period, and when there is a need for caching, the cache voltage signal corresponding to the first voltage signal is cached by the first caching circuit, thereby ensuring that at the end of the first period, the first caching circuit has cached the second voltage signal corresponding to the maximum light intensity in the first period.

In an example, the voltage caching circuit 23 further includes: a third reset circuit 234 connected to each of a peripheral readout circuit and the first terminal and the second terminal of the first caching circuit 233, and is configured to reset the first caching circuit 233 after outputting the second voltage signal in each first period.

A specific structure and principle of the third reset circuit 234 may be set according to actual requirements. Referring to the first reset circuit 224 mentioned above, in this example, triggering of the third reset circuit 234 is controlled by the readout circuit. When the readout circuit detects that the end time of the first period is reached, after the second voltage signal is read from the cache voltage output circuit 24, the third reset circuit 234 may be controlled to reset the first caching circuit 233, such that the first caching circuit 233 can enter voltage caching of a next period.

According to the present disclosure, the first caching circuit is reset after each first period ends, such that the first caching circuit can be repeatedly used for voltage caching in a new period, thereby enabling the pixel circuit to continuously output a second voltage signal corresponding to a maximum light intensity in each period, and ensuring continuous normal operation of the image sensor.

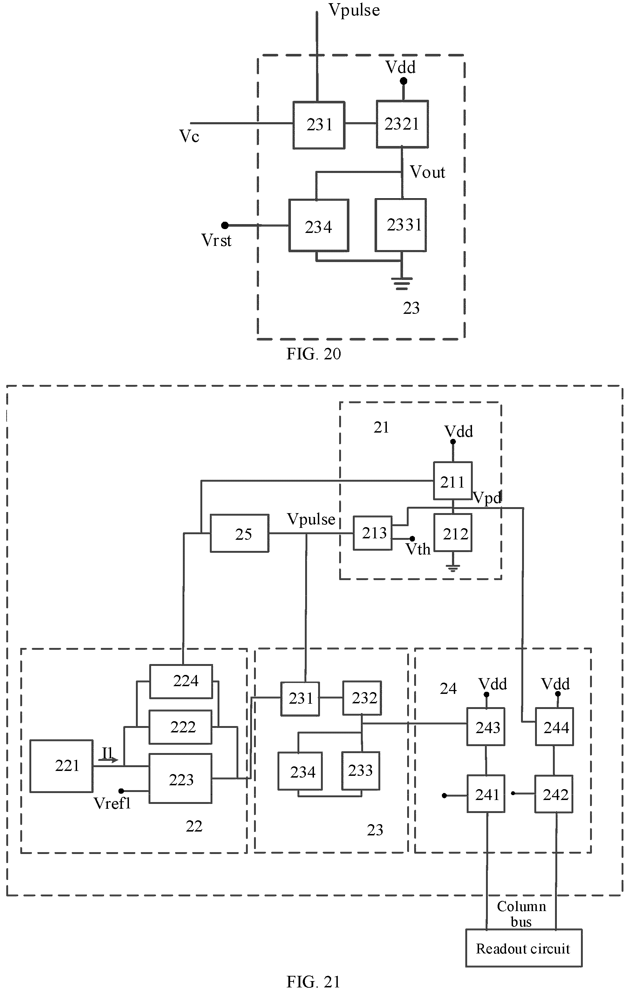

FIG. 20 is a schematic diagram of a structure of a voltage caching circuit 23 according to an example embodiment of the present disclosure.

In an example, the first determining circuit 232 includes a first source follower 2321, and the first caching circuit 233 includes a third capacitor 2331. A first terminal of the first source follower 2321 is connected to the first gating circuit 231, a second terminal of the first source follower 2321 is connected to a first terminal of the third capacitor 2331, and a third terminal of the first source follower 2321 is connected to a preset power supply, such that a voltage at the third terminal is a preset voltage, and a second terminal of the third capacitor 2331 is grounded. The first source follower 2321 is configured to: when the first gating circuit 231 is turned on, if a difference between a first voltage signal at the first terminal of the first source follower and a current voltage signal at the second terminal of the first source follower is greater than a first threshold voltage of the first source follower 2321, charge the third capacitor 2331 based on the first voltage signal, such that the third capacitor 2331 caches a cache voltage signal corresponding to the first voltage signal.

Vpulse represents a pulse signal, Vdd represents a preset voltage provided by the preset power supply, the first determining circuit 232 is implemented by the first source follower 2321, and the first caching circuit 233 is implemented by the third capacitor 2331. The second terminal of the third capacitor 2331 is grounded, the first terminal of the third capacitor 2331 is connected to the second terminal (a source) of the first source follower 2321, and the first terminal (a gate) of the first source follower 2321 is connected to the first gating circuit 231. When the first gating circuit 231 is turned on, the first voltage signal is inputted to the first terminal of the first source follower 2321. Before the first voltage signal is inputted, a voltage at the second terminal of the first source follower 2321 is a voltage Vout cached by the third capacitor 2331. After the first voltage signal is inputted, if a difference between the first voltage signal (for example, Vc = V1) and Vout is greater than the first threshold voltage Vt of the first source follower 2321, the third capacitor 2331 will be triggered to be charged, such that the voltage signal Vout cached by the third capacitor 2331 is equal to V1-Vt. Then, Vout is a cache voltage signal corresponding to a current maximum light intensity that is cached by the third capacitor 2331. As a number of exposures increases, Vout may change continuously, ensuring that it always equals the cache voltage signal corresponding to the maximum light intensity. When a first period ends, Vout may be used as a second voltage signal corresponding to the maximum light intensity in the first period. If a current first voltage signal is less than a previous first voltage signal, it indicates that a light intensity during a current exposure is less than a light intensity during a previous exposure, causing a difference between a gate voltage and a source voltage of the first source follower 2321 to be unable to meet the gate-source threshold voltage Vt of the first source follower 2321, and therefore the third capacitor 2331 cannot be charged, so that the third capacitor 2331 keeps caching a cache voltage signal corresponding to the higher light intensity during the previous exposure.

According to the present disclosure, whether to cache the first voltage signal is determined by using the source follower, and then the voltage signal corresponding to the maximum light intensity in the period is cached by using the capacitor, such that the pixel circuit can output the second voltage signal corresponding to the maximum light intensity in the period, thereby further reducing an output data amount.

In an example, the third reset circuit 234 is connected to each of a peripheral readout circuit and the first terminal and the second terminal of the third capacitor, and is configured to reset the third capacitor 2331 after outputting the second voltage signal in each first period.

Vrst represents a control voltage of the third reset circuit 234, which is controlled by the readout circuit. When the third capacitor 2331 needs to be reset, Vrst is controlled to be at a high level, such that the third reset circuit 234 is turned on, to discharge the third capacitor 2331 to reset the third capacitor 2331 to an uncharged state. After the reset is completed, Vrst is controlled to be a low level, causing the third reset circuit 234 to be turned off, to prepare for caching of a voltage signal by charging the third capacitor 2331 in a next first period. Specifically, the readout circuit is responsible for detecting whether an end moment of the first period is currently reached. When it is detected that the end moment of the first period is reached, the cache voltage output circuit 24 is controlled to output the second voltage signal finally cached by the voltage caching circuit 23. After the readout circuit reads the second voltage signal, the third reset circuit 234 may be controlled to be turned on by controlling a status of Vrst, so as to reset the third capacitor 2331.

According to the present disclosure, the third capacitor is periodically reset through the third reset circuit, such that the third capacitor can be repeatedly used for voltage caching in a new period, thereby enabling the pixel circuit to continuously output the second voltage signal corresponding to the maximum light intensity in each period, and ensuring continuous normal operation of the image sensor.

In an example, the first determining circuit 232 may also be implemented by a comparator. For example, the first determining circuit 232 is a first comparator, and two input terminals of the first comparator are connected to the first gating circuit and the second terminal of the third capacitor, respectively. A first voltage signal newly generated by the pulse width time integration circuit is compared with a current voltage of the third capacitor, and when the first voltage signal is greater than the current voltage of the third capacitor, the third capacitor is controlled to be charged based on the first voltage signal, thereby caching a new voltage signal corresponding to a higher light intensity to the third capacitor.

In an example, the cache voltage output circuit 24 includes a first row selection circuit 241, a second row selection circuit 242, a second source follower 243, and a third source follower 244.

The first row selection circuit 241 is configured to be turned on or off under the control of the peripheral readout circuit. The second row selection circuit 242 is configured to be turned on or off under the control of the readout circuit. The second source follower 243 has a first terminal connected to the voltage caching circuit 23, a second terminal connected to the first row selection circuit 241, and a third terminal connected to the preset power supply. The second source follower 243 is configured to output the second voltage signal cached by the voltage caching circuit 23 to the readout circuit when the first row selection circuit 241 is turned on. The third source follower 244 has a first terminal connected to the light pulse generation circuit 21, a second terminal connected to the second row selection circuit 242, and a third terminal connected to the preset power supply. The third source follower 244 is configured to output a third voltage signal of a photodiode in the light pulse generation circuit 21 to the readout circuit when the second row selection circuit 244 is turned on.

Vdd represents the preset voltage provided by the preset power supply. The working principles of the second source follower 243 and the third source follower 244 are similar to those of the first source follower and will not be repeated here. The first row selection circuit 241 and the second row selection circuit 242 may be implemented using gating transistors. The first row selection circuit 241 is used as an example. A gate of the first row selection circuit is connected to a controllable voltage Vs1. If the readout circuit detects that a pulse signal has been generated in a current first period, it may control the controllable voltage Vs1 of the first row selection circuit 241 to be a high level, such that the first row selection circuit 241 is turned on, and the second source follower 243 will transmit the second voltage signal cached by the voltage caching circuit 23 to the readout circuit through a bus, enabling the readout circuit to read the second voltage signal of the pixel circuit. The same applies to other pixels, and will not be described one by one. When the readout circuit detects that no pulse signal is generated in the current first period, a caching result in the voltage caching circuit 23 is 0, and the readout circuit may control the gate controllable voltage Vs2 of the second row selection circuit 242 to be a high level, and maintain the gate controllable voltage Vs1 of the first row selection circuit 241 as a low level to indicate that the second row selection circuit 242 is selected, and a gate of the third source follower 244 connected to the second row selection circuit 242 is connected to the light pulse generation circuit 21, thereby outputting the third voltage signal of the photodiode of the light pulse generation circuit 21 to the readout circuit through a column bus.

According to the present disclosure, the two row selection circuits and the two source followers are used, so that if a pulse signal is generated in any one first period, the second voltage signal corresponding to the maximum light intensity may be read out. If no pulse signal is generated, the third voltage signal of the photodiode may be read out, and the third voltage signal may be used for subsequent analysis of changes in the voltage of the photodiode, thereby improving user experience.

FIG. 21 is a schematic diagram of a structure of a pixel circuit for a pulse sequence type image sensor according to an example embodiment of the present disclosure.

In an example, the pixel circuit for a pulse sequence type image sensor of the present disclosure further includes a time-delay circuit 25. The time-delay circuit 25 is connected to each of the light pulse generation circuit 21 and the pulse width time integration circuit 22, and is configured to transmit the pulse signal to the light pulse generation circuit 21 and the pulse width time integration circuit 22 after delaying the pulse signal for a first period of time, to reset the light pulse generation circuit 21 and the pulse width time integration circuit 22.

The time-delay circuit 25 may be implemented in any implementable manner, for example, a phase inverter chain, to implement delayed reset under triggering by the pulse signal, which may be specifically set according to actual requirements.

According to the present disclosure, the pulse signal generated by the light pulse generation circuit is delayed for a specific period of time and then used to trigger the reset of the light pulse generation circuit and the pulse width time integration circuit, so as to ensure that the voltage caching circuit can successfully complete voltage caching, thereby ensuring the accuracy and effectiveness of the outputted second voltage signal.

In an example, the light pulse generation circuit 21 includes a fourth reset circuit 211, a photodiode 212, and a second comparator 213.

A first terminal of the fourth reset circuit 211 is connected to an output terminal of the time-delay circuit 25, a second terminal of the fourth reset circuit 211 is connected to a second terminal of the photodiode 212, and a third terminal of the fourth reset circuit 211 is connected to a preset power supply. A first terminal of the photodiode 212 is grounded, and the photodiode 212 is configured to convert a light signal into an electrical signal, such that a voltage signal at the second terminal of the photodiode 212 changes with exposure time. The second comparator 213 is configured to compare the voltage signal at the second terminal of the photodiode 212 with a second threshold voltage signal, and outputs a pulse signal when the voltage signal at the second terminal of the photodiode 212 equals the second threshold voltage signal. An input terminal of the time-delay circuit 25 is connected to an output terminal of the second comparator 213. The output terminal of the time-delay circuit 25 is also connected to the first reset circuit 224 of the pulse width time integration circuit 22. The time-delay circuit 25 is configured to delay a pulse signal outputted by the second comparator 213 for the first period of time and then transmit it to the first reset circuit 224 and the fourth reset circuit 211, to reset the photodiode and the capacitor of the pulse width time integration circuit 22.

Vth represents the second threshold voltage signal, and Vdd represents a preset voltage provided by the preset power supply. The first period of time may be set according to actual requirements, and the principle of setting the first period of time is enabling it to be greater than caching duration of the voltage caching circuit 23, so as to ensure that the voltage caching circuit 23 can successfully complete voltage signal caching, which is not specifically limited. A specific structure of the fourth reset circuit 211 may be set according to actual requirements, and reference is made to the first reset circuit 224 mentioned above, which will not be repeated here. The photodiode 212 may be any implementable photodiode, and may be specifically set according to actual requirements. After the reset, a voltage Vpd at the first terminal of the photodiode 212 is a reset voltage Vdd. When no pulse signal reaches the fourth reset circuit 211, the fourth reset circuit 211 is turned off. During an exposure, the photodiode senses a light signal, and converts the light signal into an electrical signal, causing Vpd to continuously decrease from the reset voltage. After a specific period of time of exposure, Vpd decreases to Vth, triggering the second comparator 213 to output a pulse signal Vpulse = Vh (a high level), and the first gating circuit 231 is turned on. Then, a caching phase is entered. Time required for the caching phase may be represented as tw. A specific value of tw is determined according to a caching component in the voltage caching circuit 23, for example, a capacitor, which needs a specific period of time to be charged. After the voltage caching circuit 23 completes caching, a reset phase is entered, the photodiode of the light pulse generation circuit 21 and the integration capacitor of the pulse width time integration circuit 22 are reset. Time required for the reset phase is represented as tr. A specific value of tr is determined based on delay time of the time-delay circuit and the time tw required for the caching phase. Because the delay time (the first period of time mentioned above) is greater than the time tw required for the caching phase, after the caching is completed, the pulse for reset has not yet reached the fourth reset circuit 211 of the light pulse generation circuit 21 and the first reset circuit 224 of the pulse width time integration circuit 22, and the fourth reset circuit and the first reset circuit can only be reset when the pulse signal reaches the two reset circuits, and during the reset, the capacitor also requires a specific period of time to discharge, so that the reset requires a specific period of time.

According to the present disclosure, the light pulse generation circuit converts a light signal into a pulse signal through the photodiode, the second comparator, and the fourth reset circuit, thereby ensuring continuous operation of the light pulse generation circuit through the reset, and providing necessary support for normal operation of the image sensor.

In an example, the time-delay circuit 25 may also be a module in the light pulse generation circuit 21, which may be specifically set according to actual requirements.

In an example, the time-delay circuit 25 may be implemented by a phase inverter chain, or may be implemented by another structure, such as a clock-based counter, which may be specifically set according to actual requirements, as long as it can reset the photodiode and the capacitor of the pulse width time integration circuit after delaying the pulse signal for a specific period of time.

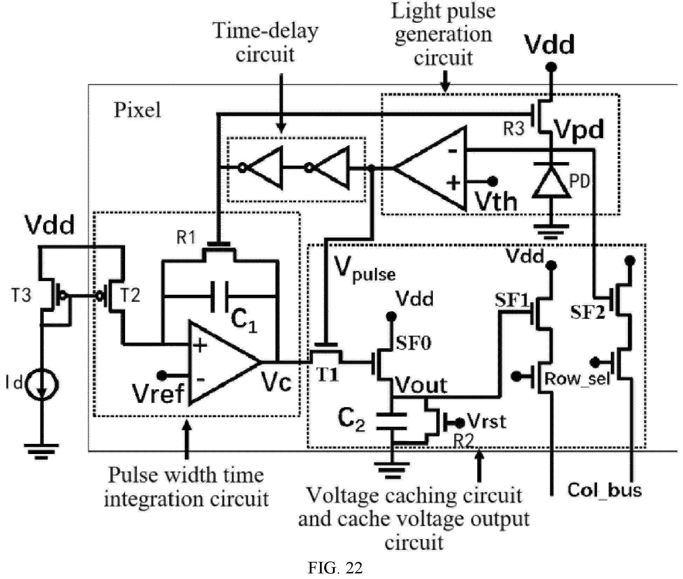

In an example, FIG. 22 is a schematic diagram of a structure of the pixel circuit for a pulse sequence type image sensor according to still another example embodiment of the present disclosure. Col_bus represents the column bus, which is connected to the readout circuit, C1 represents the first capacitor 222, Vref represents the first reference voltage, SF0, SF1, and SF2 respectively represent the first source follower 2321, the second source follower 243, and the third source follower 244, C2 represents the third capacitor 2331, T1 represents the first gating circuit 231, T2 represents the bias current input circuit 221, T3 is a peripheral bias current introduction transistor, Id represents a constant current source, T3 and T2 are symmetrical, the first constant current I provided by the constant current source Id is inputted to the pulse width time integration circuit. Row_sel represents a row selection circuit, and the first row selection circuit 241 is on the left and the second row selection circuit 242 is on the right. PD represents the photodiode 212. R1 represents the first reset circuit 224, R2 represents the third reset circuit 234, and R3 represents the fourth reset circuit 211. The time-delay circuit is implemented by a phase inverter chain, specifically by a cascade of two phase inverters. Vth corresponds to the second threshold voltage signal of the second comparator 213, and Vref corresponds to the first reference voltage of the operational amplifier 223. For the working principles of the parts, reference may be made to the content mentioned above, and will not be repeated in detail here.

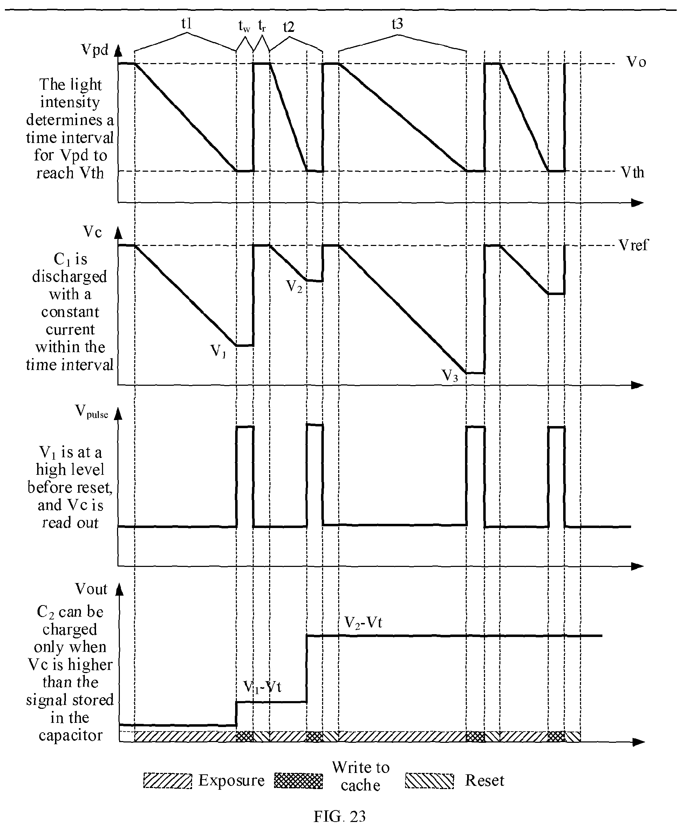

Illustratively, FIG. 23 is a schematic diagram of a time sequence relationship of voltages at key nodes according to an example embodiment of the present disclosure. V3 represents a value to which Vc decreases after charging C1 during a third exposure, t1 represents duration required for Vpd to reach Vth during a first exposure, t2 represents duration required for Vpd to reach Vth during a second exposure, and t3 represents duration required for Vpd to reach Vth during the third exposure. For specific meanings of the other symbols, reference is made to the content mentioned above, and will not be repeated here one by one. Within t1, Vc decreases from Vref to V1 at a fixed rate. When Vpd reaches Vth, Vpulse becomes a high level (a pulse signal), triggering T1 to be turned on, and a caching phase is entered. V1 adjusts Vout to V1-Vt by charging through the source follower SF0, SF0 is turned off, and C2 is no longer charged. Duration required for the caching phase is tw (that is, $t_w$). Then, a reset phase is entered, to reset Vpd and Vc. The duration required for the reset phase is $t_r$ (that is, tr). The above process is repeated. If the light intensity increases during the second exposure, the duration required for vpd to reach Vth is shortened, and the decrease in Vc is smaller, i.e., V2 > V1, the gate-source voltage of the source follower SF0 is greater than its threshold voltage Vt, the source follower SF0 is turned on, and Vout is adjusted to V2-Vt by charging. If the light intensity decreases during the third exposure, V3 < V2, the gate-source voltage of the source follower SF0 is less than its threshold voltage Vt, the source follower SF0 is turned off, and Vout will continue to remain at V2-Vt. After a readout period (the first period) ends, the voltage cached on Vout can represent the maximum illumination intensity in this period.

In an embodiment, the voltage caching circuit 23 is specifically configured to: determine a current second voltage signal based on the first voltage signal outputted by the pulse width time integration circuit 22, and cache the current second voltage signal as a new second voltage signal. The cache voltage output circuit 24 is specifically configured to output a cached second voltage signal that meets a preset condition.

The current second voltage signal may be a difference between the cached second voltage signal and a current integration quantity. The current integration quantity is an integration quantity of the pulse width time integration circuit 22 within duration of a last exposure. Illustratively, after the pulse width time integration circuit 22 is reset after the first exposure, the second voltage signal cached by the voltage caching circuit 23 is

$$V_{ref} + \frac{I_c t_1}{C_1}$$, where $V_{ref}$ represents a reference voltage, $t_1$ represents integration duration of the first capacitor 222 during the first exposure, $I_c$ represents a charging current of the first capacitor, which is equal to the first constant current I1 mentioned above, and $C_1$ represents a capacitance value of the first capacitor. During the second exposure, an integration quantity of the pulse width time integration circuit 22 is $\frac{I_c t_2}{C_1}$, where $t_2$ represents integration duration of the first capacitor 222 during the second exposure, then the second voltage signal is $V_{ref} + \frac{I_c t_1}{C_1} - \frac{I_c t_2}{C_1}$. The second voltage signal may be cached by a capacitor. The preset condition may be that the difference between the cached second voltage signal and the reference voltage (for example, $\frac{I_c t_1}{C_1} - \frac{I_c t_2}{C_1}$) is not 0 or that an absolute value of the difference is greater than the threshold, then the cache voltage output circuit 24 may output the cached second voltage signal that meets the preset condition. It can be seen that the difference between the second voltage signal and the reference voltage represents the magnitude of the exposure intensity during the second exposure relative to the exposure intensity during the first exposure. When the difference is greater than 0, it indicates that the exposure intensity during the second exposure is greater than that during the first exposure, and when the difference is less than 0, it indicates that the exposure intensity during the second exposure is less than that during the first exposure. When the difference meets the preset condition, the cached second voltage signal is outputted.

In an embodiment, a comparison may also be made between a cached new second voltage signal and the reference voltage $v_{ref}$. In response to a comparison result meeting the preset condition, a target voltage signal is outputted. This target voltage signal is used to indicate a change in an intensity during a last exposure relative to an intensity during a previous exposure, or that a change amount exceeds the threshold. The target voltage signal may be set according to actual requirements, such as a high-level pulse, so that sparse pulses can be outputted with continuous exposure.

In an embodiment, the voltage caching circuit 23 is further specifically configured to cache, as a new second voltage signal based on the first voltage signal outputted by the pulse width time integration circuit 22, a difference between pulse width time integration quantities during a current exposure corresponding to the first voltage signal and a previous exposure, or cache the difference between the pulse width time integration quantities during the previous exposure and the current exposure as a new second voltage signal.

The current exposure refers to a last exposure, and the previous exposure refers to an exposure previous to the current exposure. For example, if the current exposure is the third exposure, then the previous exposure is the second exposure. The pulse width time integration quantity refers to an integration quantity generated by the pulse width time integration circuit 22 during an exposure. For example, the first capacitor of the pulse width time integration circuit is charged at a fixed rate under the action of a constant current to generate an integration quantity. For example, a pulse width time integration quantity during an (i-1)th exposure is $\frac{I_c t_{i-1}}{C_1}$, , and a pulse width time integration quantity during an ith exposure is $\frac{I_c t_i}{C_1}$. If the current exposure is the ith exposure, then $\frac{I_c t_{i-1}}{C_1} - \frac{I_c t_i}{C_1}$ or $\frac{I_c t_i}{C_1} - \frac{I_c t_{i-1}}{C_1}$ will be cached as the new second voltage signal. A specific caching method and caching structure may be set according to actual requirements.

In this way, the difference between the pulse width time integration quantities during the two exposures is cached, which is convenient for outputting sparse pulses with light intensity changes.

In an embodiment, the voltage caching circuit is specifically configured to:
cache, if it is determined that a pulse width time integration quantity during a current exposure corresponding to the first voltage signal is different from a pulse width time integration quantity during a previous exposure, the pulse width time integration quantity during the current exposure as a new second voltage signal based on the first voltage signal outputted by the pulse width time integration circuit.

After the previous exposure, the pulse width time integration quantity during the previous exposure may be cached. After the current exposure, the pulse width time integration quantity during the current exposure may be compared with the cached pulse width time integration quantity during the previous exposure to determine whether the pulse width time integration quantity during the current exposure is the same as the pulse width time integration quantity during the previous exposure. If they are the same, the cached integration quantity may be maintained. If they are different, the pulse width time integration quantity during the current exposure may be cached as the new second voltage signal. A specific caching method and caching structure may be set according to actual requirements.

Illustratively, the pulse width time integration quantity during the (i-1)th exposure is $\frac{I_c t_{i-1}}{C_1}$, and the pulse width time integration quantity during the ith exposure is $\frac{I_c t_i}{C_1}$. If the current exposure is the ith exposure, whether $\frac{I_c t_{i-1}}{C_1} - \frac{I_c t_i}{C_1}$ or $\frac{I_c t_i}{C_1} - \frac{I_c t_{i-1}}{C_1}$ is 0 may be determined. If is not 0, $\frac{I_c t_i}{C_1}$ may be cached as the new second voltage signal.

In this way, the pulse width time integration quantity of light intensity changes is cached, which is convenient for a user to know light intensity change situations and output sparse pulses with light intensity changes.

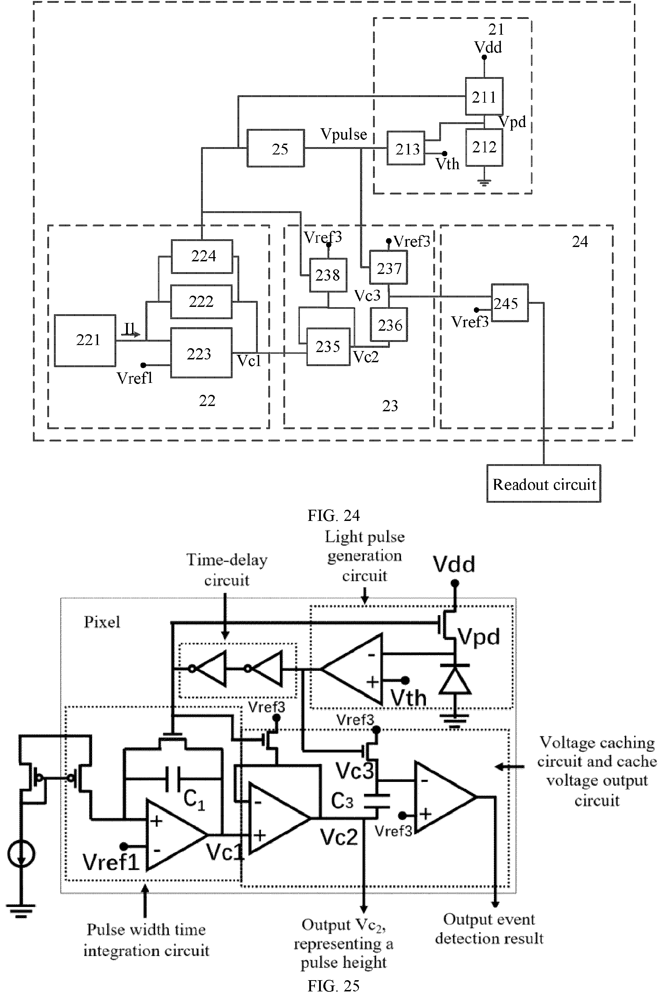

FIG. 24 is a schematic diagram of a structure of a pixel circuit for a pulse sequence type image sensor according to an example embodiment of the present disclosure.

In an embodiment, the voltage caching circuit 23 includes a voltage buffer 235 and a fourth capacitor 236. The cache voltage output circuit 24 includes a third comparator 245.

A first input terminal of the voltage buffer 235 is connected to the pulse width time integration circuit 22, a second input terminal of the voltage buffer 235 is connected to a first output terminal of the voltage buffer 235, a first output terminal of the voltage buffer 235 is connected to a first terminal of the fourth capacitor 236, and the voltage buffer 235 is configured to transmit the first voltage signal to the first terminal of the fourth capacitor 236.

A second terminal of the fourth capacitor 236 is connected to a first input terminal of the third comparator 245. The fourth capacitor 236 is configured to cache a current second voltage signal as a new second voltage signal.

A second input terminal of the third comparator 245 is connected to a third reference voltage. The third comparator 245 is configured to compare the new second voltage signal with the third reference voltage. If a comparison result meets the preset condition, pulse signals with a light intensity change are outputted.

The voltage caching circuit 23 is further configured to output the first voltage signal.

The voltage buffer 235 may be implemented using any implementable structure, a function of the voltage buffer is to maintain a voltage at the first output terminal $V_{c2} = V_{c1}$, and to transmit the first voltage signal outputted by the pulse width time integration circuit 22 to the first terminal of the fourth capacitor 236. The third comparator 245 may be implemented using any implementable structure, and Vref3 represents a third reference voltage. The output of the pulse signals with a light intensity change indicates that the intensity during the current exposure has changed relative to the intensity during the previous exposure or that a change amount meets the preset condition. After the i<sup>th</sup> exposure ends, Vc2 decreases to Vi as Vc1 decreases, and Vc3 changes from the cached second voltage signal $V_{ref3} + \dfrac{I_c t_{i-1}}{C_1}$ to the new second voltage signal $V_{ref3} + \dfrac{I_c t_{i-1}}{C_1} - \dfrac{I_c t_i}{C_1}$.

At the end of each exposure, a cached second voltage signal is updated once, and a new second voltage signal may be outputted. The third comparator can also be used to output sparse pulses indicating changes in the exposure intensity or the change amount in the exposure intensity meeting a specific condition, which is convenient for understanding the changes in the exposure intensity.

In an embodiment, the circuit in the present disclosure further includes the time-delay circuit 25. The voltage caching circuit further includes a fifth reset circuit 237 and a sixth reset circuit 238.

The time-delay circuit 25 is configured to transmit a pulse signal outputted by the light pulse generation circuit 21 to the sixth reset circuit after delaying the pulse signal for a first period of time.

The fifth reset circuit 237 is connected to each of the second terminal of the fourth capacitor 236 and the light pulse generation circuit 21, and is configured to reset the voltage at the second terminal of the fourth capacitor 236 to the third reference voltage under the action of the pulse signal of the light pulse generation circuit 21.

The sixth reset circuit 238 is connected to each of the time-delay circuit 25 and the second input terminal and the first output terminal of the voltage buffer 235, and is configured to reset the voltage at the first output terminal of the voltage buffer 235 to the third reference voltage under the action of the delayed pulse signal.

When the voltage at the first output terminal of the voltage buffer 235 is reset to the third reference voltage, the voltage at the second terminal of the fourth capacitor 236 becomes a third voltage, and the third voltage is cached as a new second voltage signal.

Specific structures and working principles of the fifth reset circuit 237 the sixth reset circuit 238 are similar to those of the first reset circuit 224 mentioned above and will not be repeated here. After the exposure ends and the second voltage signal and sparse pulses are outputted, the pulse signal outputted by the light pulse generation circuit 21 drives the fifth reset circuit 237 to be turned on, resetting the voltage Vc3 at the second terminal of the fourth capacitor 236 to the third reference voltage. The pulse signal triggers, after being delayed by the time-delay circuit 25 for the first period of time, the first reset circuit 224 of the first capacitor and the sixth reset circuit 238 of the voltage buffer 235 to be turned on, to reset the first capacitor 222 and the voltage buffer 235. The voltage Vc2 ( $V_{ref3} - \dfrac{I_c t_i}{C_1}$ ) at the first output terminal of the voltage buffer 235 is reset to the third reference voltage $V_{ref3}$, and at the same time, a reset change amount of Vc2 $\dfrac{I_c t_i}{C_1}$ is coupled to Vc3, causing Vc3 to cache the third voltage $V_{ref3} + \dfrac{I_c t_i}{C_1}$ as the cached second voltage signal required for a next exposure.

Illustratively, FIG. 25 is a schematic diagram of a structure of the pixel circuit for a pulse sequence type image sensor according to an example embodiment of the present disclosure. Vref3 represents the third reference voltage, Vref1 represents the first reference voltage, Vref3 = Vref1, Vc1 represents a voltage at the output terminal of the operational amplifier 223 of the pulse width time integration circuit 22, and an output event detection result represents the pulse signals with a light intensity change outputted by the third comparator. For the meanings of the other symbols, reference is made to the above content, and will not be repeated one by one here.

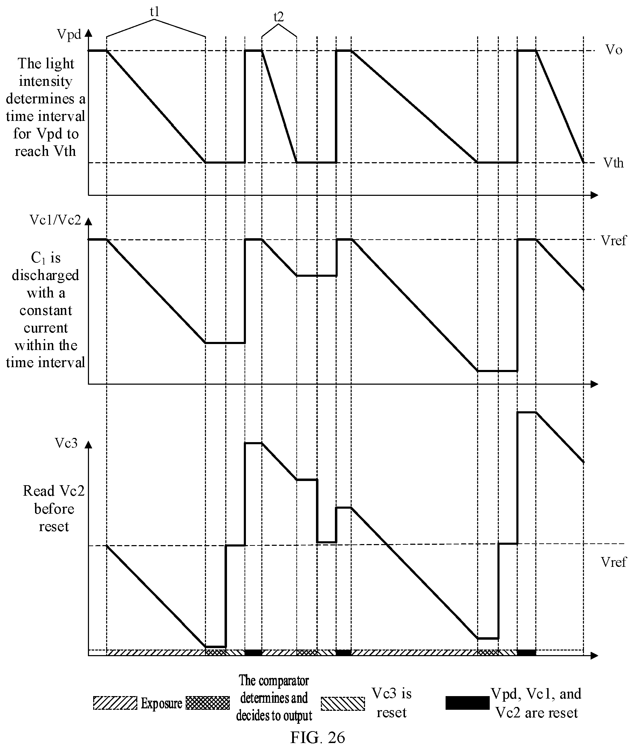

FIG. 26 is a schematic diagram of a time sequence relationship of voltages at key nodes according to another example embodiment of the present disclosure. Vref represents the third reference voltage Vref3. A specific process is as follows:

1. At the end of the first exposure, exposure duration of the first exposure is expressed as $t_1$, determined by the characteristics of the photodiode and the exposure intensity,

$$V_{c2} = V_{c1} = V_{ref3} - \frac{I_c t_1}{C_1} , \text{, Vc3 is reset,}$$

then Vc1, then Vc2 are reset, and

$$Vc3 = V_{ref3} + \frac{I_c t_1}{C_1}, \text{, which is the cached sec-}$$

ond voltage signal during the second exposure.

2. At the end of the second exposure, the exposure duration is expressed as $t_2$, and

$$Vc3 = V_{ref3} + \frac{I_c t_1}{C_1} - \frac{I_c t_2}{C_1} .$$

3. The third comparator determines and decides whether to output pulse signals with a light intensity change.

4. Vc3 is reset, and Vc3 = Vref3.

5. Vc1 and Vc2 are reset, Vc2 = Vc1 = Vref3, and Vc3 = Vref3+ at the same time $\frac{I_c t_2}{C_1}$ .

6. At the end of the third exposure,

$$Vc3 = Vref3 + \frac{I_c t_2}{C_1} - \frac{I_c t_3}{C_1} .$$

7. Vc3 is reset, Vc1 and Vc2 are reset after the delay for the first period of time, and

$$Vc3 = Vref3 + \frac{I_c t_3}{C_1} .$$

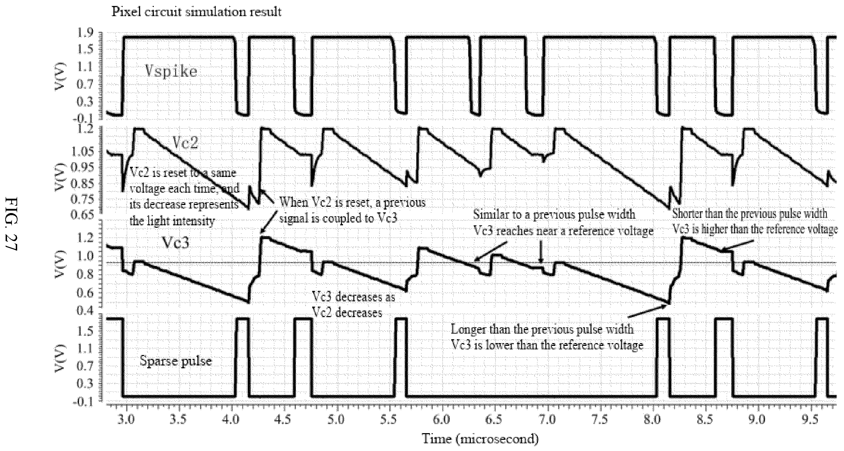

FIG. 27 is a schematic diagram of a simulation result of the pixel circuit according to an example embodiment of the present disclosure. Vspike represents a phase-inverted time-delay pulse signal outputted by the time-delay circuit, and coefficient pulses are the pulse signals with a light intensity change outputted by the third comparator. It can be seen that after the exposure is completed, if the updated second voltage signal is near the third reference voltage, it indicates that the change amount of the current light intensity relative to the previous light intensity does not meet the preset condition, so that no pulse signal with a light intensity change will be outputted. Therefore, an output data amount is reduced.

It should be noted that the above embodiments or examples of the present disclosure may be implemented individually or in any combination in the case of no conflict, and may be specifically set according to actual requirements.

In some embodiments, the voltage caching circuit includes two field-effect transistors.

A gate terminal and a drain terminal of a first field-effect transistor in the two field-effect transistors are used as two input terminals, and a source terminal of the first field-effect transistor and a drain terminal of a second field-effect transistor are used as output terminals.

A gate of the second field-effect transistor is connected to a reset signal and is turned on or off according to the control of the reset signal, and a source terminal of the second field-effect transistor is grounded or connected to a power supply.

Simple digital logic may be used, such as AND logic, OR logic, etc. The voltage caching circuit includes two field-effect transistors, and a connection relationship between the two field-effect transistors is simple. A source terminal of a first field-effect transistor is connected to a drain terminal of a second field-effect transistor. A gate terminal and a drain terminal of the first field-effect transistor are provided as two input terminals, and the source terminal of the first field-effect transistor is used as an output terminal. A gate of the second field-effect transistor is connected to a reset signal. When the reset signal controls the second field-effect transistor to be turned off, the output terminal is connected to a source terminal of the second field-effect transistor. At this time, according to a connection condition of the source terminal of the second field-effect transistor, it can be determined that a corresponding first state is a high-level state or a low-level state, to reset a first logic circuit.

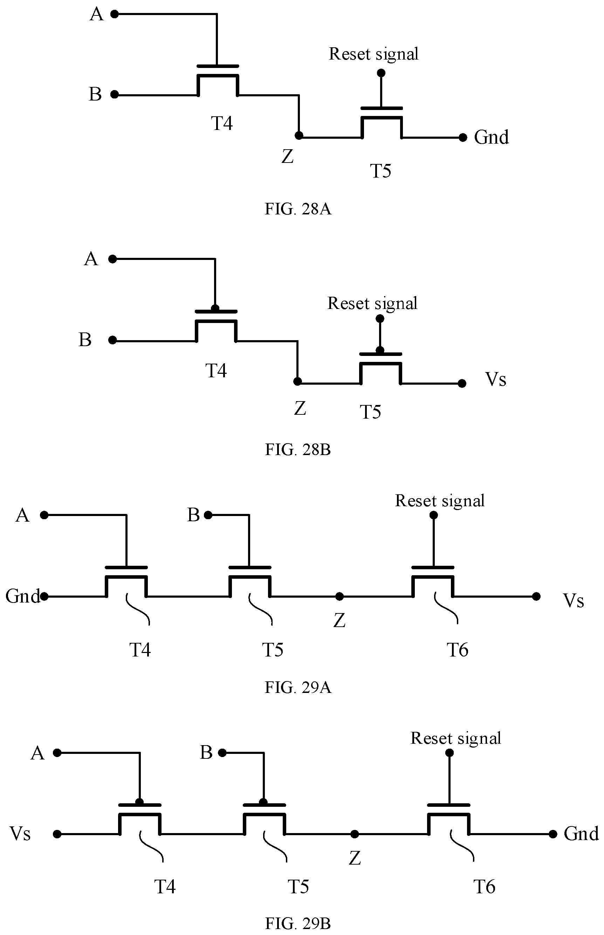

FIG. 28A is a schematic diagram of a circuit structure of an AND logic to which the voltage caching circuit is applied according to an example embodiment of the present disclosure. As shown in FIG. 28A, the first logic circuit is an AND logic circuit. The first field-effect transistor and the second field-effect transistor are n-type field-effect transistors. The first state is a low-level state. The source terminal of the second field-effect transistor is grounded.

Two input signals are respectively received through the gate terminal and the drain terminal of the first field-effect transistor, and the two input signals are respectively output signals of the light pulse generation circuit and the pulse width time integration circuit.

In response to both the two input signals being at a high level, the first field-effect transistor is turned on, and a logic processing result is determined as a high level.

A high-level state corresponding to the logic processing result is outputted through the output terminal of the logic circuit.

In some embodiments, in response to at least one of the two input signals being at a low level, the first field-effect transistor is not turned on, and the logic processing result is determined as a low level. A low-level state corresponding to the logic processing result is outputted through the output terminal of the logic circuit.

An operation logic of the AND logic is that a high level is outputted only when both the two signals are at a high level, and a low level is outputted in other cases. Therefore, when the logic circuit is reset, the logic circuit is reset to a state in which the output terminal outputs a low level. Therefore, only when the output terminal of the logic circuit is in a high-level state, it can be determined that both the two input signals are at a high level, implementing an AND logic operation. For example, as shown in FIG. 28A, an input signal A and an input signal B are respectively connected to a gate terminal and a drain terminal of an n-type field-effect transistor T4 (corresponding to the first field-effect transistor), a source terminal of which is an output terminal Z. In the reset phase, an n-type field-effect transistor T5 (corresponding to the second field-effect transistor) is controlled to be turned on according to a reset signal, which may be a charging signal (charge), a source terminal of the n-type field-effect transistor T5 is grounded (Gnd), and the output terminal Z is reset to a low level. In an operation phase, the n-type field-effect transistor T5 is turned off, the n-type field-effect transistor T4 is turned on only when the input signal A and the input signal B are both at a high level, and a high-level signal is transmitted to the output terminal Z, otherwise, the output terminal Z is at a low level, thereby implementing an AND logic operation.

FIG. 28B is a schematic diagram of a logic circuit structure of an OR logic to which the voltage caching circuit is applied according to an example embodiment of the present disclosure. As shown in FIG. 28B, the first field-effect transistor and the second field-effect transistor are p-type field-effect transistors. The first state is a high-level state. The source terminal of the second field-effect transistor is connected to a power supply.

Two input signals are respectively received through the gate terminal and the drain terminal of the first field-effect transistor, and the two input signals are respectively output signals of the light pulse generation circuit and the pulse width time integration circuit.

In response to both the two input signals being at a low level, the first field-effect transistor is turned on, and a logic processing result is determined as a low level.

A low-level state corresponding to the logic processing result is outputted through the output terminal.

In some embodiments, in response to at least one of the two input signals being at a high level, the first field-effect transistor is not turned on, and the logic processing result is determined as a high level. A high-level state corresponding to the logic processing result is outputted through the output terminal.

An operation logic of the OR logic is that a low level is outputted only when both the two signals are at a low level, and a high level is outputted in other cases. When the logic circuit is reset, the logic circuit is reset to a state in which the output terminal outputs a high level. Therefore, only when the output terminal of the logic circuit is in a low-level state, it can be determined that both the two input signals are at a low level, implementing an OR logic operation. As shown in FIG. 28B, an input signal A and an input signal B are respectively connected to a gate terminal and a drain terminal of a p-type field-effect transistor T4, and a source terminal of which is an output terminal Z. In the reset phase, a p-type field-effect transistor T5 is controlled to be turned on according to a reset signal, which may be a charging signal (charge). A source terminal of the p-type field-effect transistor T5 is connected to a power supply (Vs), the output terminal is reset to a high level, and in the operation phase, the p-type field-effect transistor T5 is turned off. The p-type field-effect transistor T4 is turned on only when the input signal A and the input signal B are both at a low level, and a low-level signal is transmitted to the output terminal Z, otherwise, the output terminal Z is at a high level, thereby implementing an OR logic operation.

In some embodiments, the voltage caching circuit includes three field-effect transistors.

A gate terminal of a first field-effect transistor and a gate terminal of a second field-effect transistor in the three field-effect transistors are used as two input terminals, and a source terminal of the second field-effect transistor and a drain terminal of a third field-effect transistor are used as output terminals.

A source terminal of the first field-effect transistor is connected to a drain terminal of the second field-effect transistor, and a drain terminal of the first field-effect transistor is grounded or connected to a power supply.

A gate of the third field-effect transistor is connected to a reset signal and is turned on or off according to the control of the reset signal, and a source terminal of the third field-effect transistor is grounded or connected to a power supply.

More complex digital logic may be used, such as NAND logic, NOR logic, etc. The voltage caching circuit includes three field-effect transistors, the three field-effect transistors are each connected, through a source terminal, to a drain terminal of a next field-effect transistor. For example, a source terminal of a first field-effect transistor is connected to a drain terminal of the second field-effect transistor, and a source terminal of the second field-effect transistor is connected to a drain terminal of a third field-effect transistor. The source terminal of the second field-effect transistor is used as an output terminal, gate terminals of the first field-effect transistor and the second field-effect transistor are used as input terminals. During a logical operation, when two signals are the same, the first field-effect transistor and the second field-effect transistor are simultaneously turned on, and the output terminal is determined externally by a drain terminal of the first field-effect transistor. When the reset signal controls the third field-effect transistor to be turned off, the output terminal is connected to a source terminal of the third field-effect transistor. At this time, according to a connection condition of the source terminal of the third field-effect transistor, it can be determined that the corresponding first state is a high-level state or a low-level state, to reset the circuit.

FIG. 29A is a schematic diagram of a logic circuit structure of a NAND logic to which the voltage caching circuit is applied according to an example embodiment of the present disclosure. As shown in FIG. 29A, the first field-effect transistor, the second field-effect transistor, and the third field-effect transistor are n-type field-effect transistors. The first state is a high-level state. The drain terminal of the first field-effect transistor is grounded, and the source terminal of the third field-effect transistor is connected to a power supply.

Two input signals are respectively received through the gate terminal of the first field-effect transistor and the gate terminal of the second field-effect transistor, and the two input signals are respectively output signals of the light pulse generation circuit and the pulse width time integration circuit.

In response to both the two input signals being at a high level, the first field-effect transistor and the second field-effect transistor are simultaneously turned on, and a logic processing result is determined as a low level.

A low-level state corresponding to the logic processing result is outputted through the output terminal.

In some embodiments, in response to at least one of the two input signals being at a low level, at least one of the first field-effect transistor and the second field-effect transistor is not turned on, and the logic processing result is determined as a high level. A high-level state corresponding to the logic processing result is outputted through the output terminal.

An operation logic of the NAND logic is that a low level is outputted only when both the two signals are at a high level, and a high level is outputted in other cases. When the logic circuit is reset, the logic circuit is reset to a state in which the output terminal outputs a high level. Therefore, only when the output terminal of the logic circuit is in a low-level state, it can be determined that both the two input signals are at a high level, implementing a NAND logic operation. As shown in FIG. 29A, an input signal A and an input signal B are respectively connected to gate terminals of an n-type field-effect transistor T4 (corresponding to the first field-effect transistor) and an n-type field-effect transistor T5 (corresponding to the second field-effect transistor). In the reset phase, an n-type field-effect transistor T6 (corresponding to the third field-effect transistor) is controlled to be turned on according to a reset signal, which may be a charging signal (charge). A source terminal of the n-type field-effect transistor T6 is connected to a power supply (Vs), and the output terminal Z is reset to a high level (the output terminal is connected to the source terminal of the third field-effect transistor). In the operation phase, the n-type field-effect transistor T6 is turned off, the n-type field-effect transistor T4 and the n-type field-effect transistor T5 are simultaneously turned on only when the input signal A and the input signal B are both at a high level, and a low-level signal is transmitted to the output terminal Z, otherwise, the output terminal Z is at a high level, thereby implementing a NAND logic operation.

FIG. 29B is a schematic diagram of a logic circuit structure of a NOR logic to which the voltage caching circuit is applied according to an example embodiment of the present disclosure. As shown in FIG. 29B, the first field-effect transistor and the second field-effect transistor are p-type field-effect transistors, and the third field-effect transistor is an n-type field-effect transistor. The first state is a low-level state. The drain terminal of the first field-effect transistor is connected to a power supply, and the source terminal of the third field-effect transistor is grounded.

Two input signals are respectively received through the gate terminal of the first field-effect transistor and the gate terminal of the second field-effect transistor, and the two input signals are respectively output signals of the light pulse generation circuit and the pulse width time integration circuit.

In response to both the two input signals being at a low level, the first field-effect transistor and the second field-effect transistor are simultaneously turned on, and a logic processing result is determined as a high level.

A high-level state corresponding to the logic processing result is outputted through the output terminal.

In some embodiments, in response to at least one of the two input signals being at a high level, at least one of the first field-effect transistor and the second field-effect transistor is not turned on, and the logic processing result is determined as a low level. A low-level state corresponding to the logic processing result is outputted through the output terminal.

An operation logic of the NOR logic is that a high level is outputted only when both the two signals are at a low level, and a low level is outputted in other cases. When the logic circuit is reset, the logic circuit is reset to a state in which the output terminal outputs a low level. Therefore, only when the output terminal of the logic circuit is in a high-level state, it can be determined that both the two input signals are at a low level, implementing a NOR logic operation. As shown in FIG. 29B, an input signal A and an input signal B are respectively connected to gate terminals of a p-type field-effect transistor T4 (corresponding to the first field-effect transistor) and a p-type field-effect transistor T5 (corresponding to the second field-effect transistor). In the reset phase, an n-type field-effect transistor T6 (corresponding to the third field-effect transistor) is controlled to be turned on according to a reset signal, which may be a charging signal (charge). A source terminal of the n-type field-effect transistor T6 is grounded (Gnd), and the output terminal Z is reset to a low level. In the operation phase, T6 is turned off, the p-type field-effect transistor T4 and the p-type field-effect transistor T5 are simultaneously turned on only when the input signal A and the input signal B are both at a low level, and a high-level signal is transmitted to the output terminal Z, otherwise, the output terminal Z remains at a low level, thereby implementing a NOR logic operation.

In some embodiments, the voltage caching circuit includes three field-effect transistors.

A gate terminal of a first field-effect transistor in the three field-effect transistors is connected to a drain terminal of a second field-effect transistor in the three field-effect transistors and used as an input terminal. A drain terminal of the first field-effect transistor is connected to a gate terminal of the second field-effect transistor and used as another input terminal. A source terminal of the first field-effect transistor is connected to each of a source terminal of the second field-effect transistor and a drain terminal of the third field-effect transistor and used as an output terminal.

A gate of the third field-effect transistor is connected to a reset signal and is turned on or off according to the control of the reset signal, and a source terminal of the third field-effect transistor is grounded or connected to a power supply.

In some embodiments, more complex digital logic may be used, such as XNOR logic, XOR logic, etc. The voltage caching circuit includes three field-effect transistors, a gate terminal of a first field-effect transistor is connected to a drain terminal of a second field-effect transistor, a drain terminal of the first field-effect transistor is connected to a gate terminal of the second field-effect transistor, and a source terminal of the first field-effect transistor and a source terminal of the second field-effect transistor are connected to a drain terminal of a third field-effect transistor. During logical operations, when the two signals are the same, the first field-effect transistor and the second field-effect transistor are either turned on or off simultaneously, and a state of the output terminal is the same as a reset state and does not change. Only when the two signals are different, the state of the output terminal changes when only one of the first field-effect transistor and the second field-effect transistor is turned on. When the reset signal controls the third field-effect transistor to be turned off, the output terminal is connected to a source terminal of the third field-effect transistor. At this time, according to a connection condition of the source terminal of the third field-effect transistor, it can be determined that the corresponding first state is a high-level state or a low-level state, to reset a third logic circuit.

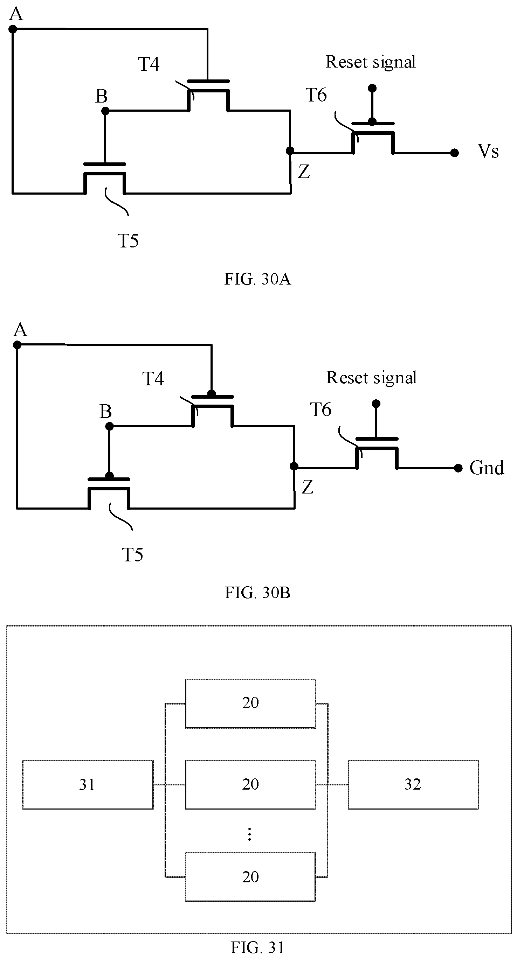

FIG. 30A is a schematic diagram of a logic circuit structure of an XNOR logic to which the voltage caching circuit is applied according to an example embodiment of the present disclosure. As shown in FIG.

30A, the first field-effect transistor and the second field-effect transistor are n-type field-effect transistors, and the third field-effect transistor is a p-type field-effect transistor. The first state is a high-level state. The source terminal of the third field-effect transistor is connected to a power supply.

An input signal is received through the gate terminal of the first field-effect transistor and the drain terminal of the second field-effect transistor, another input signal is received through the drain terminal of the first field-effect transistor and the gate terminal of the second field-effect transistor, and the two input signals are respectively output signals of the light pulse generation circuit and the pulse width time integration circuit.

In response to the two input signals being different, the first field-effect transistor and the second field-effect transistor are not simultaneously turned on or off, and a logic processing result is determined as a low level.

A low-level state corresponding to the logic processing result is outputted through the output terminal.

In some embodiments, in response to the two input signals being the same, the first field-effect transistor and the second field-effect transistor are simultaneously turned on or off, and the logic processing result is determined as a high level. A high-level state corresponding to the logic processing result is outputted through the output terminal.

An operation logic of the XNOR logic is that a high level is outputted when the two signals are the same, otherwise, a low level is outputted. When the logic circuit is reset, the logic circuit is reset to a state in which the output terminal outputs a high level. Therefore, only when the output terminal of the logic circuit is in a low-level state, it can be determined that the two input signals are different, implementing an XNOR logic operation. With reference to FIG. 30A, the logic circuit is first reset during work. In the reset phase, the reset signal is at a low level, which may be a charging signal (charge). At this time, a p-type field-effect transistor T6 (corresponding to the third field-effect transistor) is turned on, a source terminal of the p-type field-effect transistor T6 is connected to a power supply (Vs), and a signal at the output terminal Z is reset to a high level. After the reset phase ends, the operation phase is entered. At this time, the reset signal is set to a high level, the p-type field-effect transistor T6 is turned off, and an input signal A and an input signal B are respectively received through two input terminals. If the input signal A and the input signal B are both at a high level, an n-type field-effect transistor T4 and an n-type field-effect transistor T5 are both turned on, and the signal at the output terminal Z remains at a high level. If the input signal A is at a low level, and the input signal B is at a high level, the n-type field-effect transistor T4 is turned off, the n-type field-effect transistor T5 is turned on, and the signal at the output terminal Z will be pulled to a low level by the input signal A. If the input signal A is at a high level, and the input signal B is at a low level, the n-type field-effect transistor T4 is turned on, the n-type field-effect transistor T5 is turned off, and the signal at the output terminal Z will be pulled to a low level by the input signal B. If the input signal A and the input signal B are both at a low level, the n-type field-effect transistor T4 and the n-type field-effect transistor T5 are both turned off, and the signal at the output terminal Z remains at a high level. Based on the above four cases, when the input signal A and the input signal B are the same, the output terminal Z outputs a high level. When the input signal A and the input signal B are not the same, the output terminal Z outputs a low level. In other words, an XNOR logical operation can be completed correctly.

FIG. 30B is a schematic diagram of a logic circuit structure of an XOR logic to which the voltage caching circuit is applied according to an example embodiment of the present disclosure. As shown in FIG. 30B, the first field-effect transistor and the second field-effect transistor are p-type field-effect transistors, and the third field-effect transistor is an n-type field-effect transistor. The first state is a low-level state. The source terminal of the third field-effect transistor is grounded.

An input signal is received through the gate terminal of the first field-effect transistor and the drain terminal of the second field-effect transistor, another input signal is received through the drain terminal of the first field-effect transistor and the gate terminal of the second field-effect transistor, and the two input signals are respectively output signals of the light pulse generation circuit and the pulse width time integration circuit.

In response to the two input signals being different, the first field-effect transistor and the second field-effect transistor are not simultaneously turned on or off, and a logic processing result is determined as a high level.

A high-level state corresponding to the logic processing result is outputted through the output terminal.

In some embodiments, in response to the two input signals being the same, the first field-effect transistor and the second field-effect transistor are simultaneously turned on or off, and the logic processing result is determined as a low level. A low-level state corresponding to the logic processing result is outputted through the output terminal of the logic circuit.

An operation logic of the XOR logic is that a low level is outputted when the two signals are the same, otherwise, a high level is outputted. When the logic circuit is reset, the logic circuit is reset to a state in which the output terminal outputs a low level. Therefore, only when the output terminal of the logic circuit is in a high-level state, it can be determined that the two input signals are different, implementing an XOR logic operation. As shown in FIG. 30B, the input signal A is connected to the gate terminal of the p-type field-effect transistor T4 and the drain terminal of the p-type field-effect transistor T5, and the input signal B is connected to the gate terminal of the p-type field-effect transistor T5 and the drain terminal of the p-type field-effect transistor T4. In the reset phase, an n-type field-effect transistor T6 is controlled to be turned on according to a reset signal, which may be a charging signal (charge), a source terminal of the n-type field-effect transistor T6 is grounded (Gnd), and the output terminal Z is reset to a low level. After the reset phase ends, in the operation phase, the n-type field-effect transistor T6 is turned off, the p-type field-effect transistor T4 and the p-type field-effect transistor T5 are simultaneously turned on when the input signal A and the input signal B are both at a low level, and the output terminal Z remains at a low level. When the input signal A and the input signal B are both at a high level, T4 and T5 are simultaneously turned off, and the output terminal Z still remains at a low level; when the input signal A is at a high level and the input signal B is at a low level, T4 is turned off, T5 is turned on, and the input signal A pulls the output terminal Z to a high level through T5; and when the input signal A is at a low level and the input signal B is at a high level, T4 is turned on, T5 is turned off, and the input signal B pulls the output terminal Z to a high level through T4, thereby implementing the XOR logic.

According to this embodiment of the present disclosure, the gate voltage and the drain voltage of the field-effect transistor are used to control the voltage outputted when the transistor is turned on, and common digital logic is implemented according to the turn-on logic of the n-type or p-type field-effect transistor, and the correctness of a logic operation result is ensured using the reset method. Compared to a standard digital logic circuit, the structure is simpler and the area is smaller. It is suitable for application scenarios with strict area constraints, such as preprocessing in the pixel unit of the image sensor.

FIG. 31 is a schematic diagram of a structure of a pulse sequence type image sensor according to an example embodiment of the present disclosure. The pulse sequence type image sensor may include: the pixel circuit 20 for a pulse sequence type image sensor provided in any one of the above embodiments or examples, each corresponding to a pixel; a bias current circuit 31 configured to provide a constant current for the pixel circuit; and a readout circuit 32 configured to control the pixel circuit 20 for a pulse sequence type image sensor that corresponds to each pixel to output a second voltage signal.

For a specific structure of the pixel circuit 20 for a pulse sequence type image sensor, reference is made to the embodiments or examples mentioned above, and will not be repeated here. The bias current circuit 31 may be set according to actual requirements. For example, referring to FIG. 22, T3 and Id constitute the bias current circuit 31. Other implementations may also be used in practical applications, and are not limited in the present disclosure. A specific structure of the readout circuit may be based on a conventional readout circuit structure, with the addition of control functions related to the present disclosure, and may be specifically set according to actual requirements.

In an example, the readout circuit 32 is further configured to detect whether the end time of the current first period is reached. When it is detected that the end time of the current first period is reached, whether a pulse signal is generated in the current first period is determined. When it is determined that a pulse signal is generated, the pixel circuit 20 corresponding to each pixel is controlled to output a second voltage signal. When it is determined that no pulse signal is generated in the current first period, the pixel circuit 20 is controlled to output a third voltage signal of the photodiode. For a specific control principle, reference is made to the embodiment mentioned above, and will not be repeated here.

In practical applications, the pulse sequence type image sensor may further include other possible components, which is not limited in the present disclosure.

In addition, an embodiment of the present disclosure further provides an electronic device. The electronic device includes: the pulse sequence type image sensor provided in any one of the above embodiments. The electronic device may further include: one or more processors, and one or more memories configured to store instructions, the instructions, when executed individually or collectively by one or more processors, causing the electronic device to perform the processing of the output signal of the pulse sequence type image sensor described in any one of the above embodiments of the present disclosure, to achieve desired functions.

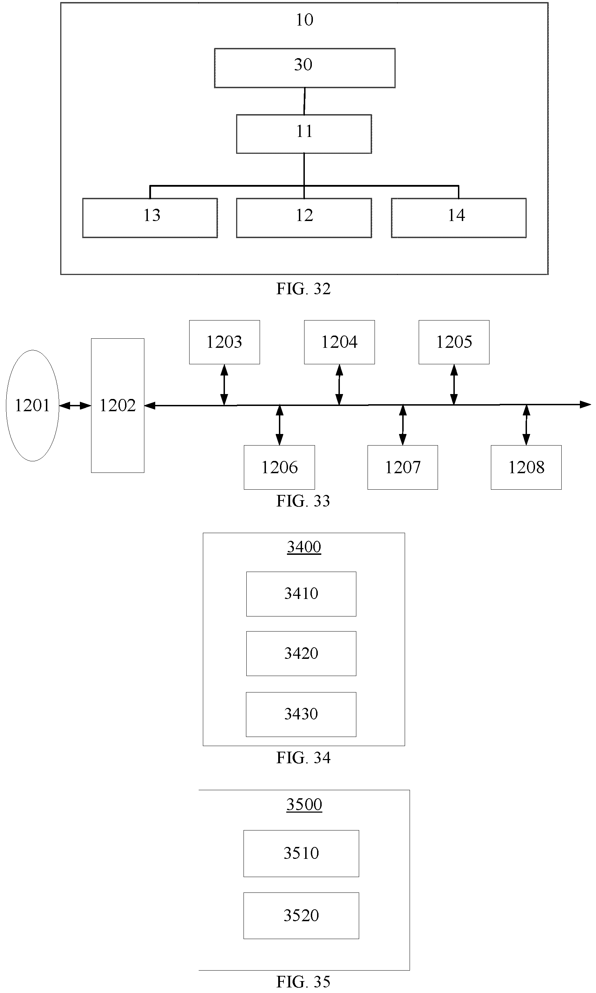

FIG. 32 is a schematic diagram of a structure of an application embodiment of the electronic device of the present disclosure. As shown in FIG. 32, the electronic device includes one or more processors and memories, and the pulse sequence type image sensor 30 provided in the embodiment mentioned above.

The processor may be a central processing unit (CPU) or other forms of processing units having data processing capabilities and/or instruction execution capabilities, and may control other components in the electronic device to perform desired functions.

The memory may store one or more computer program products. The memory may include various forms of computer-readable storage media, for example, a volatile memory and/or a non-volatile memory. The volatile memory may include, for example, a random access memory (RAM) and/or a cache, etc. The non-volatile memory may include, for example, a read-only memory (ROM), a hard disk, a flash memory, etc.

In an example, the electronic device may further include: an input apparatus and an output apparatus, which are interconnected via a bus system and/or other forms of connection mechanism (not shown).

In addition, the input apparatus may further include, for example, a keyboard, a mouse, etc.

The output apparatus may externally output various types of information, including the determined distance information, direction information, etc. The output device may include, for example, a display, a speaker, a printer, a communication network, a remote output device connected thereto, etc.

Certainly, for simplicity, only some of the components of the electronic device that are related to the present disclosure are shown in FIG. 32, and components such as buses, and input/output interfaces are omitted. In addition, depending on a specific application situation, the electronic device may further include any other suitable component.

In another embodiment of the present disclosure, there is further provided a device, which includes the above pixel circuit for a pulse sequence type image sensor, and/or the above pulse sequence type image sensor, and/or a chip having the above pixel circuit for a pulse sequence type image sensor.

As an example rather than a limitation, the device includes at least one of the following: a camera device, a camera, an audio/video player, a navigation device, a position-fixed terminal, an entertainment device, a smart phone, a communication device, a mobile device, a transportation means or transport facility, an industrial device, a medical device, a security device, a flight device, a household appliance, and a wearable device.

In this embodiment of the present disclosure, the camera device includes but is not limited to a pulse camera, a high-speed camera, an industrial detection camera, a sports camera, and the like. The camera includes but is not limited to: a vehicle-mounted camera, a mobile phone camera, a traffic camera, a camera mounted on a flying object, a medical camera, a security camera, or a household appliance camera.

The device provided in this embodiment of the present disclosure is described in detail by using the pulse camera as an example. FIG. 33 is a schematic diagram of a structure of a pulse camera according to an example embodiment of the present disclosure. As shown in FIG. 33, the pulse camera includes a lens 1201, a pulse signal circuit 1202, a data processing circuit 1203, a non-volatile memory 1204, a power circuit 1205, a volatile memory 1206, a control circuit 1207, and an I/O interface 1208.

The lens 1201 is configured to receive incident light from an object being photographed, that is, a light signal.

The pulse signal circuit 1202 is configured to convert the light signal received by the lens 1201 into an electrical signal and generate a pulse signal based on the electrical signal. The pulse signal circuit 1202 includes, for example, the above pixel circuit for a pulse sequence type image sensor, and/or the above pulse sequence type image sensor, and/or a chip having the above pixel circuit for a pulse sequence type image sensor.

The data processing circuit 1203 is configured to control a pulse signal readout process. For example, the data processing circuit 1203 includes an operation processing unit (for example, a CPU) and/or a graph processing unit (GPU). For example, the data processing circuit controls a pulse signal readout process of the pulse signal readout circuit, and controls a readout row selector therein to send a row readout signal and a reset row selector therein to send a column reset signal, and the like.

The volatile memory 1206 is, for example, a random access memory (RAM). The non-volatile memory 1204 is, for example, a solid state disk (SSD), a hybrid hard disk (HHD), a secure digital (SD) card, a mini SD card, or the like.

In an embodiment, the pulse camera further includes a display unit configured to perform real-time display/playback on pulse signal/image information. The pulse camera may further include at least one of the following: a wired/wireless transmission interface, for example, a Wi-Fi interface, a Bluetooth interface, a USB interface, an RJ45 interface, a mobile industry processor interface (MIPI), a low-voltage differential signaling (LVDS) interface, and another interface with a wired or wireless transmission function.

The pulse camera can be configured to detect visible light, infrared light, ultraviolet light, X-ray, and the like, and can be applied to various scenarios. The common scenarios include but are not limited to:
It may be used as a vehicle-mounted camera mounted in various transportation means or transport facilities, for example, for information obtaining and control in vehicle-infrastructure cooperation, intelligent transportation, and autonomous driving. For example, it is mounted in a rail transportation means such as a high-speed train or on a rail traffic line, serving as a high-speed train event data recorder. It may also be mounted in an autonomous vehicle or a vehicle equipped with an advanced driver assistance system (ADAS), for example, for detection and alarm of vehicle, pedestrian, lane, driver, and other information.

It may be used as a traffic camera and mounted on a traffic signal pole, to perform photographing, early warning, cooperative control, and the like on vehicles and pedestrians on urban roads and expressways.

It may be used as an industrial detection camera, for example, mounted on a high-speed rail traffic line for high-speed rail line patrol and high-speed rail safety detection. It may also be used for detection, early warning, and the like in specific industrial scenarios, for example, fracture detection of a coal mine conveyor belt, arc detection of a transformer substation, real-time detection of a wind turbine blade, and non-stop detection of a high-speed turbine.

It is mounted on a flying object, for example, an airplane and a satellite, and is configured to perform high-definition imaging on the object in a high-speed flight scenario or even a high-speed rotation scenario.

It may be used for industry (machine vision in intelligent manufacturing and the like), civil use (judicial evidence collection, sports penalty, and the like), and consumer electronics (cameras, film and television media, and the like).

It may be used as a medical camera, to perform high-definition medical imaging in clinical diagnosis and treatment such as medical treatment, cosmetology, and health care.

It may be used as a sports camera or a wearable camera, for example, a head-mounted camera or a camera embedded in a watch, and can perform photographing in various scenarios such as various sports competitions and daily leisure sports.

It may also be used as a security camera, a mobile phone camera, a household appliance camera, or the like.

FIG. 34 is a schematic diagram of a structure of an encoding apparatus 3400 for a light signal according to an example embodiment of the present application. As shown in FIG. 34, the encoding apparatus 3400 for a light signal includes a detection module 3410, an encoding module 3420, and a sorting module 3430.

The detection module 3410 is configured to detect whether there is a change in a light intensity signal representing a light intensity, the light intensity signal being converted by a photosensitive unit from a received photon stream. The encoding module 3420 is configured to encode, in response to detecting a change in the light intensity signal, the changed light intensity signal to obtain an encoding result. The sorting module 3430 is configured to arrange the encoding result into an encoded sequence according to a time sequence relationship corresponding to changes in the light intensity, the encoded sequence representing time sequence code of the photon stream, and the time sequence relationship representing an order of the changes in the light intensity within a time period.

This embodiment of the present application provides the encoding apparatus for a light signal. In this embodiment, determination is performed on the light intensity signal, and when there is change in the light intensity signal, the changed light intensity signal is encoded, and the encoding result may reflect the light intensity and the change situations of the light intensity in a corresponding spatial region within a time period. In this way, data to be encoded can be reduced, there is no need to encode each light intensity signal within this time period, and only the light intensity signal that has changed is encoded and outputted. No encoding and outputting means that there is no change in the light intensity signal, so that an encoding process can be simplified, and a code rate can be reduced while retaining complete light intensity information corresponding to the light intensity signal, thereby achieving efficient lossless compression encoding of the light intensity signal.

It should be understood that, for the operations and functions of the detection module 3410, the encoding module 3420, and the sorting module 3430 in the above embodiment, reference may be made to the description of the encoding method for a light signal provided in the embodiment in FIG. 2 or FIG. 4, and are not described in detail again here in order to avoid repetition. It should be understood that, corresponding to the embodiments of the method 200 or the method 400, the embodiment of the encoding apparatus 3400 for a light signal may further include more modules.

FIG. 35 is a schematic diagram of a structure of a decoding apparatus 3500 according to an example embodiment of the present application. As shown in FIG. 35, the decoding apparatus 3500 includes an obtaining module 3510 and a decoding module 3520.

The obtaining module 3510 is configured to obtain an encoded sequence array for photon streams in a spatial region, where the encoded sequence array is formed based on a position arrangement of a plurality of photosensitive units and encoded sequences corresponding to the plurality of photosensitive units, the encoded sequence includes an encoding result obtained by encoding, in response to detecting a change in a light intensity signal, the changed light intensity signal, and time sequence code formed by arranging the encoding result according to a time sequence relationship corresponding to changes in a light intensity. The decoding module 3520 is configured to decode the encoded sequence array to obtain a decoding result for the spatial region, the decoding result including a light intensity signal representing a light intensity that is converted from a received photon stream.

This embodiment of the present application provides the decoding apparatus. **In** this embodiment, determination is performed on the light intensity signal, and when there is change in the light intensity signal, the changed light intensity signal is encoded, and the encoding result may reflect the light intensity and the change situations of the light intensity in a corresponding spatial region within a time period. In this way, data to be encoded can be reduced, there is no need to encode each light intensity signal within this time period, and only the light intensity signal that has changed is encoded and outputted. No encoding and outputting means that there is no change in the light intensity signal, so that an encoding process can be simplified, and a code rate can be reduced while retaining complete light intensity information corresponding to the light intensity signal, thereby achieving efficient lossless compression encoding of the light intensity signal. Correspondingly, the decoding method provided in this embodiment of the present application is simple and can obtain complete light intensity information.

It should be understood that, for the operations and functions of the obtaining module 3510 and the decoding module 3520 in the above embodiment, reference may be made to the description of the decoding method provided in the embodiment in FIG. 16, and are not repeated in detail here in order to avoid repetition. It should be understood that, corresponding to the embodiments of the method 1600, the embodiment of the decoding apparatus 3500 may further include more modules.

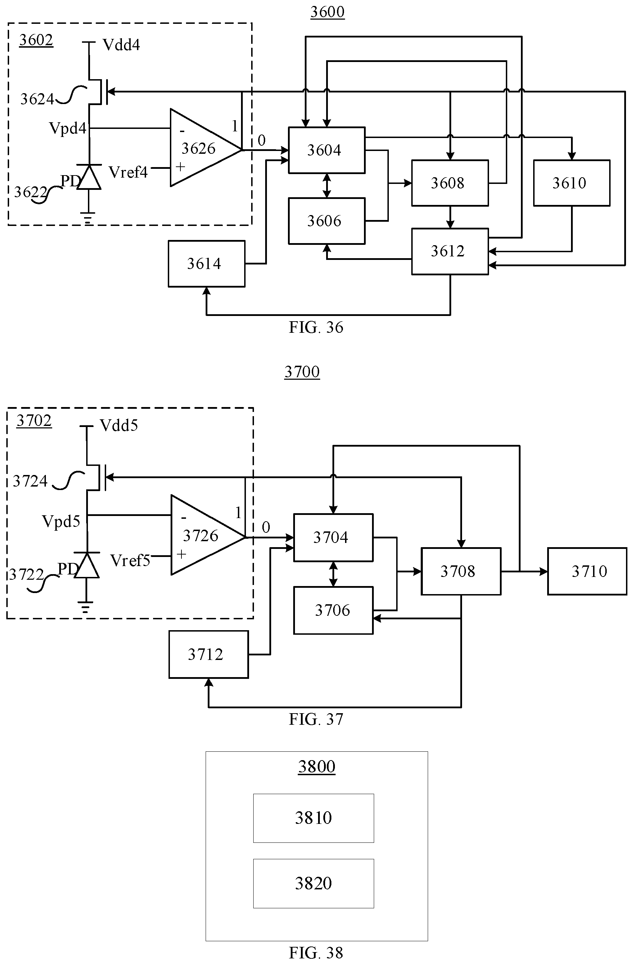

FIG. 36 is a schematic diagram of a structure of an encoded data generation circuit 3600 according to an embodiment of the present disclosure. As shown in FIG. 36, the encoded data generation circuit 3600 includes a pulse generation circuit 3602, a pulse width counter 3604, a pulse width memory 3606, a first comparator 3608, a counter most significant bit carrier 3610, a logic OR circuit 3612, and a clock circuit 3614. The pulse generation circuit 3602 is connected to each of the pulse width counter 3604, the first comparator 3608, and the logic OR circuit 3612. The pulse width counter 3604 is connected to each of the pulse width memory 3606, the first comparator 3608, the counter most significant bit carrier 3610, and the clock circuit 3614. The first comparator 3608 is connected to each of the pulse width memory 3606 and the clock circuit 3614. The pulse width memory 3606 is connected to each of the pulse width counter 3604, the first comparator 3608, and the logic OR circuit 3612. The logic OR circuit 3612 is connected to each of the pulse generation circuit 3602, the pulse width memory 3606, the first comparator 3608, the counter most significant bit carrier 3610, and the clock circuit 3614, where

the pulse generation circuit 3602 continuously collect light signals in a space and convert the light signals into electrical signals to be accumulated, to obtain a signal accumulation amount. Each time when the signal accumulation amount reaches an accumulation threshold, a pulse signal is generated, and the signal accumulation amount is set to 0 for re-accumulation.

The pulse width counter 3604, during each pulse signal period of the pulse generation circuit 3602 (i.e., the signal accumulation amount accumulates from zero to the accumulation threshold), accumulates and counts under the control of the clock circuit 714. When a pulse width count value exceeds a specified pulse width, counting is stopped, and a carry is triggered to be added to the most significant bit of the counter most significant bit carrier 3610, so that the most significant bit is 1. After the pulse generation circuit 3602 generates a pulse signal, it stops counting and outputs the pulse width count value to the first comparator 3608 to trigger the first comparator 3608 to compare the pulse width count value with the specified pulse width in the pulse width counter 3604, and trigger the logic OR circuit 3612 to perform a logic OR operation. According to an enable signal of the logic OR circuit 3612, the specified pulse width or the pulse width count value is outputted to an external cache block.

The clock circuit 3614 performs timing according to a unit period.

The pulse width memory 3606 stores a specified pulse width value.

The first comparator 3608, triggered by the pulse width counter 3604, compares whether the pulse width count value outputted by the pulse width counter 3604 is the same as the specified pulse width value in the pulse width counter 3604, and outputs a comparison result to the logic OR circuit 3612. For example, if the pulse width count value is the same as the specified pulse width value, a comparison result 0 may be outputted. If the pulse width count value is not the same as the specified pulse width value, a comparison result 1 may be outputted. A specific value of the comparison result is not limited regardless of the comparison result, and the pulse width count value of the pulse width counter 3604 is set to 0 to restart counting from 0.

The logic OR circuit 3612 performs a logic OR operation on the comparison result outputted by the first comparator 3608 and the most significant bit of the counter most significant bit carrier 3610. If the comparison result is the same as the most significant bit and the most significant bit is not 1, it will not output to the outside. If the comparison result is different from the most significant bit or the most significant bit of the counter most significant bit carrier 3610 is 1, the logic OR circuit 3612 outputs 1, then the value (i.e., the specified pulse width) in the pulse width memory 3606 is enabled to be updated to the value (i.e., the pulse width count value) in the pulse width counter 3604, and the pulse width counter 3604 is enabled to output its pulse width count value to the external cache block, and at the same time triggers the clock circuit 3614 to output timing information to the external cache block. The pulse width (the specified pulse width and the pulse width count value) and timing information may be outputted to the external cache block using an asynchronous communication protocol.

In addition, each pulse generation circuit 3602 may be used as a photosensitive unit. Correspondingly, the encoded data generation circuit may further include a scanning circuit 3614 to scan a position (x, y) of the pulse generation circuit 3602 in the photosensitive unit array, where x and y respectively represent the positions of the pulse generation circuit 3602 in the $x^{th}$ row and $y^{th}$ column of the photosensitive unit array. When the comparison result is different from the most significant bit, the first comparator 3608 may trigger the scanning circuit 3614 to scan the position (x, y) of the pulse generation circuit 3602 in the photosensitive unit array and output it to the external cache block.

In an example, in some implementations, the pulse generation circuit 3602 may include: a photodiode (PD) 3622, a reset transistor 3624, and a second comparator 3626, where

a positive electrode of the photodiode 3622 is grounded, a negative electrode of the photodiode is connected to a source of the reset transistor 3624 and is configured to output a current signal. When a light signal arrives, the photodiode 3622 starts to collect the light signal and converts it into a current signal. A voltage Vpd4 on the photodiode 3622 starts to accumulate and decrease under the action of a current. The photodiode is reset when the voltage Vpd4 decreases to a reference signal Vref4 (as the accumulation threshold ).

The photodiode is a photodetector that can convert a light signal into a current or voltage signal. A core of the photodiode usually uses a p-n junction with photosensitive characteristics, which is very sensitive to changes in light, has unilateral conductivity, and will change electrical characteristics when the light intensity is different. Therefore, the intensity of light can be used to change the voltage or current in the circuit.

The reset transistor 3624 has a source connected to the photodiode 3622, a drain connected to a power circuit Vdd4, and a gate connected to an output terminal of the first comparator 3608.

The second comparator 3626 has a positive input terminal that receives the reference signal Vref4 (as the accumulation threshold), a negative input terminal that receives the voltage Vpd4 outputted by the negative electrode of the photodiode 3622, and an output terminal that is connected to each of the gate of the reset transistor 3624 and the pulse width counter 3604. The reference signal Vref4 is compared with the voltage Vpd4 under the control of the external clock 3612. When the voltage Vpd4 is greater than the reference signal Vref4, a low level 0 is outputted to the pulse width counter 3604. When the voltage Vpd4 is less than or equal to the reference signal Vref4, a pulse signal is generated, and a high level 1 is outputted to the reset transistor 3624, to control the reset transistor 3624 to reset the voltage Vpd4 and trigger the logic OR circuit 3612 to perform a logic OR operation.

Specifically, the reference signal Vref4 may be compared with the voltage Vpd4 through the second comparator 3626. When the reference signal Vref4 is less than or equal to the voltage Vpd4, the output terminal outputs a low level 0 to the pulse width counter 3604. When the reference signal Vref4 is greater than the voltage Vpd4, the output terminal outputs a high level 1 to the reset transistor 3624. In an example, the reference signal Vref4 may be a voltage signal less than the voltage Vdd4 of the power circuit.

FIG. 37 is a schematic diagram of a structure of an encoded data generation circuit 3700 according to an embodiment of the present disclosure. As shown in FIG. 37, the encoded data generation circuit 3700 includes a pulse generation circuit 3702, a pulse width counter 3704, a pulse width memory 3706, a first comparator 3708, a pulse number counter 3710, and a clock circuit 3712. The pulse generation circuit 3702 is connected to each of the pulse width counter 3704 and the first comparator 3708. The pulse width counter 3704 is connected to each of the pulse width memory 3706, the first comparator 3708, and the clock circuit 3712. The first comparator 3708 is connected to each of the pulse width memory 3706, the pulse number counter 3710, and the clock circuit 3712, where

the pulse generation circuit 3702 continuously collect light signals in a space and convert the light signals into electrical signals to be accumulated, to obtain a signal accumulation amount. Each time when the signal accumulation amount reaches an accumulation threshold, a pulse signal is generated, and the signal accumulation amount is set to 0 for re-accumulation.

The pulse width counter 3704, during each pulse signal period of the pulse generation circuit 3702 (i.e., the signal accumulation amount accumulates from zero to the accumulation threshold), accumulates and counts under the control of the clock circuit 3712. When a pulse width count value exceeds a specified pulse width, the pulse width count value is set to 0, and counting is restarted from 0. After the pulse generation circuit 3702 generates a pulse signal, it stops counting and outputs the pulse width count value to the first comparator 3608 to trigger the first comparator 3708 to compare the pulse width count value with the specified pulse width in the pulse width counter 3704.

The clock circuit 3712 performs timing according to a unit period.

The pulse width memory 3706 stores a specified pulse width value.

The first comparator 3708, triggered by the pulse width counter 3704, compares whether the pulse width count value outputted by the pulse width counter 3704 with the specified pulse width value in the pulse width counter 3704, and sets the pulse width count value of the pulse width counter 3704 to 0 to restart counting from 0. If the comparison result shows that the pulse width count value is the same as the specified pulse width value, 1 is added to the pulse number count value of the pulse number counter 3710. If the comparison result shows that the pulse width count value is different from the specified pulse width value, the specified pulse width value in the pulse width memory 3706 is enabled to be updated to the pulse width count value outputted by the pulse width counter 3704, and the pulse number count value is outputted to an external cache block, and at the same time, the clock circuit is triggered to output timing information to the external cache block. The pulse number count value and the timing information may be outputted to the external cache block using an asynchronous communication protocol.

In addition, each pulse generation circuit 3702 may be used as a photosensitive unit. Correspondingly, the encoded data generation circuit may further include a scanning circuit 3714 to scan a position (x, y) of the pulse generation circuit 3702 in the photosensitive unit array, where x and y respectively represent the positions of the pulse generation circuit 3702 in the $x^{th}$ row and $y^{th}$ column of the photosensitive unit array. When the comparison result shows that the pulse width count value is different from the specified pulse width value, the first comparator 3708 may trigger the scanning circuit 3714 to scan the position (x, y) of the pulse generation circuit 3702 in the photosensitive unit array and output it to the external cache block.

In an example, in some implementations, the pulse generation circuit 3702 may include: a photodiode (PD) 3722, a reset transistor 3724, and a second comparator 3726, where
a positive electrode of the photodiode 3722 is grounded, a negative electrode of the photodiode is connected to a source of the reset transistor 3724 and is configured to output a current signal. When a light signal arrives, the photodiode 3722 starts to collect the light signal and converts it into a current signal. A voltage Vpd5 on the photodiode 3722 starts to accumulate and decrease under the action of a current. The photodiode is reset when the voltage Vpd5 decreases to a reference signal Vref5 (as the accumulation threshold ).

The photodiode is a photodetector that can convert a light signal into a current or voltage signal. A core of the photodiode usually uses a p-n junction with photosensitive characteristics, which is very sensitive to changes in light, has unilateral conductivity, and will change electrical characteristics when the light intensity is different. Therefore, the intensity of light can be used to change the voltage or current in the circuit.

The reset transistor 3724 has a source connected to the photodiode 3722, a drain connected to a power circuit Vdd5, and a gate connected to an output terminal of the first comparator 3708.

The second comparator 3726 has a positive input terminal that receives the reference signal Vref5 (as the accumulation threshold), a negative input terminal that receives the voltage Vpd5 outputted by the negative electrode of the photodiode 3722, and an output terminal that is connected to each of the gate of the reset transistor 3724 and the pulse width counter 3704. The reference signal Vref5 is compared with the voltage Vpd5 under the control of the external clock 3712. When the voltage Vpd5 is greater than the reference signal Vref5, a low level 0 is outputted to the pulse width counter 3704. When the voltage Vpd5 is less than or equal to the reference signal Vref5, a pulse signal is generated, and a high level 1 is outputted to the reset transistor 3724, to control the reset transistor 3724 to reset the voltage Vpd5.

Specifically, the reference signal Vref5 may be compared with the voltage Vpd5 through the second comparator 3726. When the reference signal Vref5 is less than or equal to the voltage Vpd5, the output terminal outputs a low level 0 to the pulse width counter 3704. When the reference signal Vref5 is greater than the voltage Vpd5, the output terminal outputs a high level 1 to the reset transistor 3724. In an example, the reference signal Vref5 may be a voltage signal less than the voltage Vdd5 of the power circuit.

FIG. 38 is a block diagram of an electronic device 3800 configured to perform an encoding method for a light signal or a decoding method according to an example embodiment of the present application.

In an example, the electronic device includes at least any one of the following: a camera device, a camera, an audio/video player, a navigation device, a position-fixed terminal, an entertainment device, a smart phone, a communication device, a mobile device, a transportation means or transport facility, an industrial device, a medical device, a security device, a flight device, a household appliance, and a wearable device.

Referring to FIG. 38, the electronic device 3800 includes a processor 3810, which further includes one or more processors; and a memory resource represented by a memory 3820, which further includes one or more memories and is configured to store instructions executable by the processor 3810, such as an application. The application program stored in the memory 3820 may include one or more modules each corresponding to a set of instructions. In addition, the processor 3810 is configured to execute instructions. The instructions, when executed by the processor 3810, cause the electronic device 3800 to perform the above encoding method for a light signal or a decoding method.

The electronic device 3800 may further include a power supply component configured to perform power supply management of the electronic device 3800, a wired or wireless network interface configured to connect the electronic device 3800 to the Internet, and an input/output (I/O) interface. The electronic device 3800 may be operated based on an operating system stored in the memory 3820, such as Windows Server TM, Mac OS XTM, UnixTM, LinuxTM, FreeBSDTM, or the like.

A non-transitory computer-readable storage medium storing instructions, the instructions in the storage medium, when executed by the processor 3810 of the above electronic device 3800, causing the above electronic device 3800 to perform the above encoding method for a light signal or a decoding method.

A computer program product including instructions, the instructions, when executed by the processor 3810 of the above electronic device 3800, causing the above electronic device 3800 to perform the above encoding method for a light signal or a decoding method.

All the above optional technical solutions may be combined in any combination to form optional embodiments of the present application, which will not be described herein one by one again.

Those of ordinary skill in the art may realize that units and algorithm steps of various examples described with reference to the embodiments disclosed in this specification can be implemented by using electronic hardware, or a combination of computer software and electronic hardware. Whether these functions are implemented in hardware or software depends on specific applications and design constraints of the technical solutions. A person skilled in the art may use different methods to implement the described functions for each particular application, but it should not be considered that the implementation goes beyond the scope of the present application.

A person skilled in the art can clearly understand that, for the convenience and brevity of the description, references can be made to the corresponding process in the foregoing method embodiment for the specific working process of the system, the apparatus and the unit described above, and details are not described herein again.

In the several embodiments provided in the present application, it should be understood that the disclosed system, apparatus, and method can be achieved by other methods. For example, the device embodiments described above are merely exemplary. For example, the division of units is merely logical function division, and there may be another division manner during actual implementation. For example, a plurality of units or components may be combined or integrated into another system, or some features may be ignored or not executed. **In** addition, the displayed or discussed mutual couplings or direct couplings or communication connections may be implemented by some interfaces. The indirect couplings or communication connections between devices or units may be implemented in electrical, mechanical, or other forms.

The units illustrated as separate components can be or cannot be physically separated, and the components illustrated as units can be or cannot be physical units. That is to say, the components can be positioned at one place or distributed on a plurality of network units. Some or all of the units may be selected according to actual requirements to achieve the objectives of the solutions of the embodiments of the present disclosure.

In addition, various functional units in the various embodiments of the present application may be integrated into one processing unit, or various units may be physically present separately, or two or more units may be integrated into one unit.

The functions, if implemented in the form of a software functional unit and sold or used as an independent product, may be stored in a computer-readable storage medium. Based on such understanding, the technical solutions of the present application, in essence or the contribution to the prior art, or part of the technical solutions may be embodied in the form of a software product. The computer software product is stored in a storage medium, and includes a plurality of instructions used to cause a computer device (which may be a personal computer, a server, or a network device, etc.) to perform all or part of the steps of the methods described in various embodiments of the present application. The above storage medium includes: a USB flash disk, a mobile hard disk, a read-only memory (ROM), a random access memory (RAM), or a magnetic disk or optical disc or other various media capable of storing program check code.

Although the present disclosure has been illustrated and described in detail in the drawings and the above description, such illustration and description should be considered illustrative and schematic, rather than limiting; and the present disclosure is not limited to the disclosed embodiments. By studying the accompanying drawings, the disclosure, and the appended claims, those skilled in the art can understand and implement modifications to the disclosed embodiments when practicing the claimed subject matter. In the claims, the word "comprising" does not exclude other elements or steps not listed, the indefinite article "a" or "an" does not exclude plural, the term "a plurality of" means two or more, and the term "based on" should be interpreted as "at least partially based on". The mere fact that certain measures are recited in mutually different dependent claims does not indicate that a combination of these measures cannot be used to get benefit.

**Claims**

1. An encoding method for a light signal, the method comprising:

   detecting whether there is a change in a light intensity signal representing a light intensity, the light intensity signal being converted by a photosensitive unit from a received photon stream; encoding, in response to detecting a change in the light intensity signal, the changed light intensity signal to obtain an encoding result; and arranging the encoding result into an encoded sequence according to a time sequence relationship corresponding to changes in the light intensity, the encoded sequence representing time sequence code of the photon stream, and the time sequence relationship representing an order of the changes in the light intensity within a time period.

2. The encoding method according to claim 1, further comprising:
   forming, based on time sequence code of light intensity signals corresponding to a plurality of photosensitive units and on a position arrangement of the plurality of photosensitive units, an encoded sequence array for photon streams in a spatial region that are received by the plurality of photosensitive units.

3. The encoding method according to claim 1, wherein the encoding, in response to detecting a change in the light intensity signal, the changed light intensity signal to obtain an encoding result comprises:
   performing the encoding based on the changed light intensity signal and position information of the photosensitive unit to obtain the encoding result, the position information representing an arrangement position of the photosensitive unit in a photosensitive unit array.

4. The encoding method according to claim 3, wherein the arranging the encoding result into an encoded sequence according to a time sequence relationship corresponding to changes in the light intensity comprises:

forming the time sequence code of the photon stream based on encoded information, the time sequence relationship, and the position information, the encoded information comprising the encoding result corresponding to the light intensity signal within the time period.

5. The encoding method according to claim 1, wherein the light intensity signal comprises a pulse signal encoded by performing pulse modulation on the received photon stream.

6. The encoding method according to claim 5, wherein the pulse modulation is pulse width modulation, the pulse width modulation comprises quantitative modulation, and the quantitative modulation comprises:

   converting the received photon stream into a photocurrent and accumulating the photocurrent; and
   generating a pulse signal in response to an accumulated value of the photocurrent reaching an accumulation threshold.

7. The encoding method according to claim 6, wherein the pulse width modulation further comprises timing modulation, and the timing modulation comprises:
   outputting the accumulated value of the photocurrent in response to that an output period is reached and the accumulated value of the photocurrent does not reach the accumulation threshold.

8. The encoding method according to claim 5, wherein the encoding, in response to detecting a change in the light intensity signal, the changed light intensity signal to obtain an encoding result comprises at least one of the following:

   performing encoding based on a pulse start moment and a pulse width of a changed pulse signal,
   performing encoding based on a pulse end moment and the pulse width of the changed pulse signal, or
   performing encoding based on a weighted value of pulse widths of the pulse signal before and after the change.

9. The encoding method according to claim 5, wherein the detecting whether there is a change in a light intensity signal representing a light intensity comprises:

   determining whether a difference between a pulse width of each pulse signal in the light intensity signal and a specified pulse width is within a deviation range; and
   in response to determining that the difference between the pulse width of any one pulse signal in the light intensity signal and the specified pulse width exceeds the deviation range, determining that there is a change in the light intensity signal.

10. The encoding method for a light signal according to claim 9, wherein a pulse sequence formed by M pulse signals is comprised between two pulse signals that have changed in succession, a difference between pulse widths of the M pulse signals is within the deviation range, a difference between a pulse width of any one pulse signal in a current pulse sequence in the light intensity signal and a pulse width of any one pulse signal in a previous pulse sequence in the light intensity signal exceeds the deviation range, and the specified pulse width comprises at least any one of the following:

the pulse width of the first pulse signal in the M pulse signals;
an average value of the pulse widths of the M pulse signals; or
a pulse width of a previous pulse signal of a current pulse signal in the light intensity signal.

11. The encoding method for a light signal according to claim 10, wherein the encoding, in response to detecting a change in the light intensity signal, the changed light intensity signal to obtain an encoding result comprises:
performing encoding based on at least one of a pulse start moment or a pulse end moment of the pulse sequence, and at least any one of the following:

the pulse width of the first pulse signal in the M pulse signals;
the average value of the pulse widths of the M pulse signals; or
a number of the M pulse signals.

12. The encoding method according to claim 9, further comprising:
in response to determining that the difference between the pulse width of the any one pulse signal in the light intensity signal and the specified pulse width exceeds the deviation range, updating the pulse width of the pulse signal to the specified pulse width.

13. The encoding method according to claim 9, wherein the encoding, in response to detecting a change in the light intensity signal, the changed light intensity signal to obtain an encoding result comprises:

in response to determining that the difference between the pulse width of the any one pulse signal and the specified pulse width exceeds the deviation range, encoding moment information of the pulse signal and the pulse width of the pulse signal to obtain encoded information of the pulse signal, where the moment information of the pulse signal comprises at least one of a pulse start moment or a pulse end moment of the pulse signal; or
in response to the pulse width of the pulse signal reaching the specified pulse width, encoding the moment information of the pulse signal to obtain encoded information of the pulse signal, the specified pulse width comprising a maximum pulse width that hardware supports recording.

14. The encoding method according to claim 13, wherein the pulse width of the pulse signal comprises a smaller value between an actual pulse width of the pulse signal and the specified pulse width.

15. The encoding method according to claim 13, wherein the encoding the moment information of the pulse signal comprises any one of the following:

encoding the moment information of the pulse signal;
encoding the moment information and a maximum pulse width identifier of the pulse signal, the maximum pulse width identifier being used for indicating that the pulse width of the pulse signal is greater than or equal to the specified pulse width; or
encoding the moment information of the pulse signal and the specified pulse width.

16. The encoding method according to claim 9, wherein the encoding, in response to detecting a change in the light intensity signal, the changed light intensity signal to obtain an encoding result comprises:
in response to determining that the difference between the pulse width of the any one pulse signal and the specified pulse width exceeds the deviation range, encoding, by using each pulse signal whose pulse width has changed as a target pulse signal, moment information of an encoding period corresponding to the target pulse signal and pulse signal information corresponding to the encoding period, so as to obtain an encoding result corresponding to the target pulse signal.

17. The encoding method according to claim 16, wherein the moment information of the encoding period corresponding to the target pulse signal and the pulse signal information corresponding to the encoding period comprise any one of the following:

the moment information of the encoding period corresponding to the target pulse signal comprises a pulse start moment of the target pulse signal, and the pulse signal information corresponding to the encoding period comprises a number of pulse signals with a same pulse width adjacent to and before the target pulse signal; the moment information of the encoding period corresponding to the target pulse signal comprises a pulse start moment of the pulse signals with the same pulse width adjacent to and before the target pulse signal, and the pulse signal information corresponding to the encoding period comprises the number of the pulse signals with the same pulse width; or
the moment information of the encoding period corresponding to the target pulse signal comprises a pulse end moment of the target pulse signal, and the pulse signal information corresponding to the encoding period comprises a number of pulse signals generated within the encoding period corresponding to the target pulse signal, wherein the encoding period corresponding to the target pulse signal is from a pulse end moment of a previous target pulse signal adjacent to the target pulse signal to the pulse end moment of the target pulse signal.

18. The encoding method according to claim 16, wherein the pulse width of the any one pulse signal is obtained in the following manner:

in response to determining that an actual pulse width of the pulse signal being greater than the specified pulse width, determining a remainder of the actual pulse width of the pulse signal divided by the specified pulse width as the pulse width of the pulse signal; and
in response to determining that the actual pulse width of the pulse signal being not greater than the specified pulse width, determining the actual pulse width of the pulse signal as the pulse width of the pulse signal.

19. The encoding method according to claim 9, wherein the pulse signal comprises a first pulse signal and a second pulse signal, and the detecting whether there is a change in a light intensity signal representing a light intensity comprises:

determining a piece of duration information corresponding to each of the first pulse signal and the second pulse signal; and
determining, based on the two pieces of duration information respectively corresponding to the first pulse signal and the second pulse signal, whether there is a change in the light intensity signal.

20. The encoding method according to claim 19, wherein the determining a piece of duration information corresponding to each of the first pulse signal and the second pulse signal comprises:

determining, based on a counting result of a first counter, first duration information corresponding to the first pulse signal; and
determining, based on a counting result of a second counter, second duration information corresponding to the second pulse signal.

21. The encoding method according to claim 20, wherein the determining, based on a counting result of a first counter, first duration information corresponding to the first pulse signal comprises:

resetting the first counter in response to receiving the first pulse signal;
causing the reset first counter to count at a first frequency;
causing the first counter to stop counting in response to outputting the second pulse signal, so as to obtain a first counting result; and
determining the first duration information based on the first counting result and the first frequency.

22. The encoding method according to claim 20, wherein the determining, based on a counting result of a second counter, second duration information corresponding to the second pulse signal comprises:

resetting the second counter in response to receiving the second pulse signal;
causing the reset second counter to count at a first frequency;
causing the second counter to stop counting in response to outputting the first pulse signal, so as to obtain a second counting result; and
determining the second duration information based on the second counting result and the first frequency.

23. The encoding method according to claim 19, wherein the determining, based on the two pieces of duration information respectively corresponding to the first pulse signal and the second pulse signal, whether there is a change in the light intensity signal comprises:

determining whether there is a difference between the duration information corresponding to the first pulse signal and the duration information corresponding to the second pulse signal; and
in response to a difference between the two pieces of duration information, determining that there is a change in the light intensity signal.

24. The encoding method according to any one of claims 1 to 23, further comprising:

outputting, using an asynchronous transmission protocol, time sequence code of photon streams corresponding to one or more photosensitive units.

25. A decoding method, comprising:

obtaining an encoded sequence array for photon streams in a spatial region, wherein the encoded sequence array is formed based on a position arrangement of a plurality of photosensitive units and encoded sequences corresponding to the plurality of photosensitive units, the encoded sequence comprises an encoding result obtained by encoding, in response to detecting a change in a light intensity signal, the changed light intensity signal, and time sequence code formed by arranging the encoding result according to a time sequence relationship corresponding to changes in a light intensity; and

decoding the encoded sequence array to obtain a decoding result for the spatial region, the decoding result comprising a light intensity signal representing a light intensity that is converted from a received photon stream.

26. The decoding method according to claim 25, wherein the light intensity signal comprises a pulse signal encoded by performing pulse modulation on the received photon stream.

27. The decoding method according to claim 26, wherein the decoding result comprises at least one of the following:

a pulse start moment and a pulse width of a changed pulse signal,

a pulse end moment and the pulse width of the changed pulse signal,

a weighted value of pulse widths of the pulse signal before and after the change.

28. The decoding method according to claim 26, wherein the decoding result comprises: at least one of a pulse start moment or a pulse end moment of a changed pulse signal, and at least any one of the following:

a pulse width of the first pulse signal;

an average value of pulse widths of pulse signals; or

a number of the pulse signals.

29. The decoding method according to any one of claims 25 to 28, further comprising:

obtaining an accumulated value of a photocurrent, the accumulated value of the photocurrent being an accumulated value of the photocurrent that is outputted in response to that an output period is reached and a current accumulated value of the photocurrent does not reach an accumulation threshold; and

performing decoding in conjunction with the encoded sequence array and the accumulated value of the photocurrent to obtain the decoding result for the spatial region.

30. The decoding method according to claim 25, wherein

the light intensity signal comprises a pulse signal, the encoded sequence is formed, according to a time sequence relationship, by an encoding result corresponding to a target pulse signal that corresponds to the space, the target pulse signal comprises each pulse signal whose pulse width has changed, the encoding result corresponding to the target pulse signal is obtained by encoding moment information of an encoding period corresponding to the target pulse signal and pulse signal information corresponding to the encoding period, and

wherein the decoding the encoded sequence array to obtain a decoding result for the spatial region comprises: decoding the encoded sequence array corresponding to the space, so as to obtain a decoding result sequence corresponding to the space, the decoding result sequence comprising a decoding result, corresponding to at least one target pulse signal, according to a time sequence relationship, and each decoding result comprising moment information of an encoding period corresponding to a target pulse signal and pulse signal information corresponding to the encoding period.

31. The decoding method according to claim 30, wherein the moment information of the encoding period corresponding to the target pulse signal and the pulse signal information corresponding to the encoding period comprise any one of the following:

the moment information of the encoding period corresponding to the target pulse signal comprises a pulse start moment of the target pulse signal, and the pulse signal information corresponding to the encoding period comprises a number of pulse signals with a same pulse width adjacent to and before the target pulse signal;

the moment information of the encoding period corresponding to the target pulse signal comprises a pulse start moment of the pulse signals with the same pulse width adjacent to and before the target pulse signal, and the pulse signal information corresponding to the encoding period comprises the number of the pulse signals with the same pulse width; or

the moment information of the encoding period corresponding to the target pulse signal comprises a pulse end moment of the target pulse signal, and the pulse signal information corresponding to the encoding period comprises a number of pulse signals generated within the encoding period corresponding to the target pulse signal, wherein the encoding period corresponding to the target pulse signal is from a pulse end moment of a previous target pulse signal adjacent to the target pulse signal to the pulse end moment of the target pulse signal.

32. A pixel circuit for a pulse sequence type image sensor, the pixel circuit comprising:

a light pulse generation circuit configured to convert a light signal into a light intensity signal, the light intensity signal comprising a pulse signal;

a pulse width time integration circuit connected to the light pulse generation circuit and configured to convert a pulse time interval between two consecutive pulse signals into a corresponding first voltage signal;

a voltage caching circuit connected to the pulse width time integration circuit and configured to cache, based on the first voltage signal outputted by the pulse width time integration circuit, a second voltage signal that satisfies a caching condition; and

a cache voltage output circuit connected to the voltage caching circuit and configured to output the second voltage signal.

33. The pixel circuit according to claim 32, wherein the voltage caching circuit is configured to cache, based on each first voltage signal outputted by the pulse width time integration circuit within a first period, a second voltage signal corresponding to a maximum light intensity within the first period, and the cache voltage output circuit is configured to output the second voltage signal at an end moment of the first period.

34. The pixel circuit according to claim 32, wherein the voltage caching circuit is configured to determine a current second voltage signal based on the first voltage signal outputted by the pulse width time integration circuit, and cache the current second voltage signal as a new second voltage signal, and the cache voltage output circuit is configured to output the cached second voltage signal that satisfies the caching condition.

35. The pixel circuit according to claim 34, wherein the voltage caching circuit is configured to:

cache, as a new second voltage signal based on the first voltage signal outputted by the pulse width time integration circuit, a difference between pulse width time integration quantities of a current exposure corresponding to the first voltage signal and a previous exposure, or
caching the difference between the pulse width time integration quantities of the previous exposure and the current exposure as a new second voltage signal.

36. The pixel circuit according to claim 34, wherein the voltage caching circuit is configured to:
cache, in response to determining that a pulse width time integration quantity of a current exposure corresponding to the first voltage signal is different from a pulse width time integration quantity of a previous exposure, the pulse width time integration quantity of the current exposure as a new second voltage signal based on the first voltage signal outputted by the pulse width time integration circuit.

37. A device, comprising:
a pixel circuit according to any one of claims 32 to 36.

38. An encoding apparatus for a light signal, the encoding apparatus comprising:

a detection module configured to detect whether there is a change in a light intensity signal representing a light intensity, the light intensity signal being converted by a photosensitive unit from a received photon stream;
an encoding module configured to encode, in response to detecting a change in the light intensity signal, the changed light intensity signal to obtain an encoding result; and
a sorting module configured to arrange the encoding result into an encoded sequence according to a time sequence relationship corresponding to changes in the light intensity, the encoded sequence representing time sequence code of the photon stream, and the time sequence relationship representing an order of the changes in the light intensity within a time period.

39. A decoding apparatus, comprising:

an obtaining module configured to obtain an encoded sequence array for photon streams in a spatial region, wherein the encoded sequence array is formed based on a position arrangement of a plurality of photosensitive units and encoded sequences corresponding to the plurality of photosensitive units, the encoded sequence comprises an encoding result obtained by encoding, in response to detecting a change in a light intensity signal, the changed light intensity signal, and time sequence code formed by arranging the encoding result according to a time sequence relationship corresponding to changes in a light intensity; and

a decoding module configured to decode the encoded sequence array to obtain a decoding result for the spatial region, the decoding result comprising a light intensity signal representing a light intensity that is converted from a received photon stream.

40. An electronic device, comprising:

one or more processors; and

one or more memories configured to store instructions, the instructions, when executed individually or collectively by the one or more processors, causing the electronic device to perform an encoding method according to any one of claims 1 to 24 or a decoding method according to any one of claims 25 to 31.

41. A computer-readable storage medium storing instructions, the instructions, when executed individually or collectively by one or more processors of an electronic device, causing the electronic device to perform an encoding method for a light signal according to any one of claims 1 to 24 or a decoding method according to any one of claims 25 to 31.

42. A computer program product comprising instructions, the instructions, when executed individually or collectively by one or more processors of an electronic device, causing the electronic device to perform an encoding method for a light signal according to any one of claims 1 to 24 or a decoding method according to any one of claims 25 to 31.

100

```
┌──────────────┐          ┌──────────────┐
│              │          │              │
│     110      │──────────│     120      │
│              │          │              │
└──────────────┘          └──────────────┘
```

FIG. 1

200

```
┌────────────────────────────┐
│            210             │
└────────────────────────────┘
              │
              ▼
┌────────────────────────────┐
│            220             │
└────────────────────────────┘
              │
              ▼
┌────────────────────────────┐
│            230             │
└────────────────────────────┘
```

FIG. 2

FIG. 3A

FIG. 3B

Photocurrent
estimated
using a
pulse
sequence

FIG. 3C

Photocurrent
estimated
using a
pulse
sequence

FIG. 3D

FIG. 4

500

```
┌─────────────────────────────────┐
│              210                │
└─────────────────────────────────┘
```

```
┌──────────────────┐      ┌─────────────────────────────┐
│       520        │      │            510              │
└──────────────────┘      └─────────────────────────────┘
```

```
┌─────────────────────────────┐
│            230              │
└─────────────────────────────┘
```

FIG. 5

600

```
┌─────────────────────────────┐
│            610              │
└─────────────────────────────┘
```

```
┌─────────────────────────────┐
│            620              │
└─────────────────────────────┘
```

```
┌──────────────────┐      ┌─────────────────────────────┐
│       630        │      │            650              │
└──────────────────┘      └─────────────────────────────┘
```

N

Y

Y

```
┌──────────────────┐      ┌─────────────────────────────┐
│       640        │      │            660              │
└──────────────────┘      └─────────────────────────────┘
```

```
┌─────────────────────────────┐
│            670              │
└─────────────────────────────┘
```

FIG. 6

FIG. 7

FIG. 8

FIG. 9

FIG. 10

1100

```
┌─────────────────────────────┐
│            1110             │
└─────────────────────────────┘
              │
              ▼
┌─────────────────────────────┐
│            1120             │
└─────────────────────────────┘
              │
              ▼
┌─────────────────────────────┐
│            1130             │
└─────────────────────────────┘
```

N

┌──────────────┐
│     1150     │
└──────────────┘

N

Y

```
┌─────────────────────────────┐
│            1140             │
└─────────────────────────────┘
```

```
┌─────────────────────────────┐
│            1160             │
└─────────────────────────────┘
```

Y

┌──────────────┐
│     1170     │
└──────────────┘

```
┌─────────────────────────────┐
│            1180             │
└─────────────────────────────┘
              │
              ▼
┌─────────────────────────────┐
│            1190             │
└─────────────────────────────┘
```

FIG. 11

210

```
┌─────────────────────────────┐
│            1210             │
└─────────────────────────────┘
              │
              ▼
┌─────────────────────────────┐
│            1220             │
└─────────────────────────────┘
```

FIG. 12

1300

```
┌──────────┐   ┌──────────┐   ┌──────────┐   ┌──────────┐
│   131    │───│   132    │───│   133    │───│   134    │
└──────────┘   └──────────┘   └──────────┘   └──────────┘
```

FIG. 13

M_CTR1      OUT<0>      OUT<1>      OUT<6>      OUT<7>

CLK2

RST — Frequency divider

RST — Frequency divider

... RST — Frequency divider

RST — Frequency divider

**FIG. 14A**

VSS

RST    RST      IN      IN    RST

VDD                        OUT

**FIG. 14B**

DC3 — Frequency divider — M_CTRL1 — M_CRTL2

RST

**FIG. 15**

1600

| 1610 |
|---|

↓

| 1620 |
|---|

**FIG. 16**

| 21 |
|---|

| 22 | 23 | 24 |
|---|---|---|

**FIG. 17**

FIG. 18

FIG. 19

Vpulse

Vdd

231

2321

Vc

Vout

Vrst

234

2331

23

FIG. 20

21

Vdd

211

Vpd

Vpulse

213

212

25

Vth

224

222

221 Il

223

Vref1

22

231

232

234

233

23

24 Vdd Vdd

243

244

241

242

Column bus

Readout circuit

FIG. 21

FIG. 22

FIG. 23

FIG. 24

FIG. 25

72

FIG. 26

Pixel circuit simulation result

FIG. 27

FIG. 28A

FIG. 28B

FIG. 29A

FIG. 29B

A

T4

B

T6

Reset signal

Vs

Z

T5

FIG. 30A

A

T4

B

T6

Reset signal

Gnd

Z

T5

FIG. 30B

| 20 |
|---|
| 31 | 20 | 32 |
| ⋮ |
| 20 |

FIG. 31

10

30

11

13          12          14

FIG. 32

1201 ↔ 1202

1203

1204

1205

1206

1207

1208

FIG. 33

3400

3410

3420

3430

FIG. 34

3500

3510

3520

FIG. 35

3600

FIG. 36

3700

FIG. 37

3800

3810

3820

FIG. 38

## INTERNATIONAL SEARCH REPORT

| International application No. |
| --- |
| **PCT/CN2023/138442** |

**A.    CLASSIFICATION OF SUBJECT MATTER**

H04N25/47(2023.01)i;  H04N25/57(2023.01)i

According to International Patent Classification (IPC) or to both national classification and IPC

**B.    FIELDS SEARCHED**

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS, CNTXT, ENTXT, ENTXTC, CJFD: 脉冲, 成像, 摄像, 传感器, 宽度, 间隔, 时间, 长度, 比较, 变化, 改变, 不同, 差值, 仿生, 视觉, 神经, 光强, 光照, 亮度, 强度, 电路, 积累, 积分, 缓存, 电压, pulse?, vision, bionic?, lum+, light+, gap?, intensit???, sensor?, imag+, interval?, strength?, chang+, time, diff+, circuit?, accumulat+, cach+, voltage

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 220156599 U (PULSE VISION (BEIJING) TECHNOLOGY CO., LTD.) 08 December 2023 (2023-12-08)<br>claims 1-19, and description, paragraphs 2-239 | 32-37 |
| X | WO 2022047651 A1 (HUAWEI TECHNOLOGIES CO., LTD.) 10 March 2022 (2022-03-10)<br>description, paragraphs 2-122, and figures 1-7 | 1-4, 24-29, 38-42 |
| Y | WO 2022047651 A1 (HUAWEI TECHNOLOGIES CO., LTD.) 10 March 2022 (2022-03-10)<br>description, paragraphs 2-122, and figures 1-7 | 5-9, 13-15, 19-23 |
| Y | CN 109884588 A (PEKING UNIVERSITY) 14 June 2019 (2019-06-14)<br>description, paragraphs 2-67, and figures 1-4 | 5-9, 13-15, 19-23 |
| A | CN 107896308 A (TIANJIN UNIVERSITY) 10 April 2018 (2018-04-10)<br>entire document | 32-37 |
| X | US 2020128245 A1 (PEKING UNIVERSITY) 23 April 2020 (2020-04-23)<br>description, paragraphs 2-287 | 1-4, 24-29, 38-42 |

☑ Further documents are listed in the continuation of Box C.    ☑ See patent family annex.

| | |
| --- | --- |
| *    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| **04 March 2024** | **06 March 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/138442** |

### C. DOCUMENTS CONSIDERED TO BE RELEVANT

| Category* | Citation of document, with indication, where appropriate, of the relevant passages | Relevant to claim No. |
|---|---|---|
| Y | US 2020128245 A1 (PEKING UNIVERSITY) 23 April 2020 (2020-04-23) description, paragraphs 2-287 | 5-9, 13-15, 19-23 |
| Y | CN 108881906 A (PEKING UNIVERSITY) 23 November 2018 (2018-11-23) description, paragraphs 2-130 | 5-9, 13-15, 19-23 |
| A | CN 114630009 A (TIANJIN UNIVERSITY) 14 June 2022 (2022-06-14) entire document | 1-42 |

Form PCT/ISA/210 (second sheet) (July 2022)

## INTERNATIONAL SEARCH REPORT

International application No.

**PCT/CN2023/138442**

**Box No. III       Observations where unity of invention is lacking (Continuation of item 3 of first sheet)**

This International Searching Authority found multiple inventions in this international application, as follows:

I: Claims 1, 25 and 38-39 relate to an optical signal encoding and decoding method.

II: Claim 32 relates to a pixel circuit of a pulse sequence type image sensor.

The two groups of claims do not have a same or corresponding technical feature, and therefore do not have a same or corresponding special technical feature. Therefore, these inventions are not so linked as to form a single general inventive concept, and therefore do not comply with PCT Rule 13.1.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

**INTERNATIONAL SEARCH REPORT**
Information on patent family members

International application No.

**PCT/CN2023/138442**

| Patent document cited in search report | | | Publication date (day/month/year) | Patent family member(s) | | | Publication date (day/month/year) |
|---|---|---|---|---|---|---|---|
| CN | 220156599 | U | 08 December 2023 | None | | | |
| WO | 2022047651 | A1 | 10 March 2022 | None | | | |
| CN | 109884588 | A | 14 June 2019 | None | | | |
| CN | 107896308 | A | 10 April 2018 | None | | | |
| US | 2020128245 | A1 | 23 April 2020 | US | 11228758 | B2 | 18 January 2022 |
| | | | | US | 2022141463 | A1 | 05 May 2022 |
| | | | | US | 11800098 | B2 | 24 October 2023 |
| CN | 108881906 | A | 23 November 2018 | None | | | |
| CN | 114630009 | A | 14 June 2022 | None | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211615475
- CN 202211705341X
- CN 202310769950X
- CN 202310879201
- CN 202310876921
- CN 202311000131